# EUROPEAN PATENT APPLICATION

(11) **EP 4 694 241 A1**
(43) Date of publication of application: **11.02.2026**
(21) Application number: 25729440.5
(22) Date of filing: 09.06.2025
(51) Int. Cl.: H04W 8/20, H04W 8/18, H04W 12/06, H04W 12/04, H04W 88/02

(54) **ELECTRONIC DEVICE FOR SUPPORTING PROFILE TRANSFER PROCEDURE AND OPERATION METHOD THEREOF**

(30) Priority: 27.06.2024 KR 20240084256; 14.08.2024 KR 20240109265; 09.01.2025 KR 20250003646
(71) Applicant: Samsung Electronics Co., Ltd, Suwon-si, Gyeonggi-do 16677 (KR)
(72) Inventor: YOON, Yejin, Suwon-si, Gyeonggi-do 16677 (KR); SEO, Jaehyeon, Suwon-si, Gyeonggi-do 16677 (KR); KANG, Sujung, Suwon-si, Gyeonggi-do 16677 (KR); KIM, Bokyung, Suwon-si, Gyeonggi-do 16677 (KR); PARK, Jimin, Suwon-si, Gyeonggi-do 16677 (KR); YOON, Kangjin, Suwon-si, Gyeonggi-do 16677 (KR)
(74) Representative: Gulde & Partner
(86) International application number: PCT/KR2025/007813
(87) International publication number: WO 2026/005338

(57) **Abstract**

The disclosure provides an electronic device (101), the electronic device comprises communication circuitry (190), one or more processors including processing circuitry (120), and memory (130) storing instructions, and the instructions, when executed by the one or more processors individually or collectively, cause the electronic device to: receive, from an external electronic device (102; 104; 700) via the communication circuitry, authentication information related to a procedure for transferring a profile from the external electronic device to the electronic device, in response to receiving the authentication information, identify a first identifier for identifying the procedure, transmit, to a first server (520) via the communication circuitry, a request message, that includes the first identifier, for requesting transfer of the profile, in response to transmitting the request message, receive, from the first server or a second server (210; 560) different from the first server via the communication circuitry, a response message including information for downloading a profile from a third server (220; 530), based on the response message, identify a second identifier for identifying the procedure, identify whether the second identifier is identical to the first identifier, based on the second identifier being identical to the first identifier, identify whether another response message including the second identifier has been received before receiving the response message, and based on whether the another response message has been received, identify whether to download the profile from the third server, wherein the instructions, when executed by the one or more processors individually or collectively, cause the electronic device to, as at least part of identifying whether to download the profile from the third server based on whether the another response message has been received: based on the another response message having not been received, download the profile from the third server via the communication circuitry based on the information for downloading the profile. Another embodiment may be possible.

## Description

### [Technical Field]

The disclosure relates to an electronic device for supporting a profile transfer procedure and an operating method thereof.

### [Background Art]

In a wireless communication system, an on-device service activation (ODSA) procedure has been provided to download a profile to an embedded SIM (eSIM) instead of a physical subscriber identity module (SIM) card. The ODSA procedure may represent a procedure in which an electronic device supporting the eSIM downloads a profile or the electronic device transfers the profile to an external electronic device. However, in the ODSA procedure, various errors may occur while the profile is downloaded to the eSIM.

For example, when the electronic device including the eSIM transmits a message for requesting profile download to an entitlement server of a communication carrier, a communication carrier, which does not immediately transmit download information (e.g., DownloadInfo) for profile download but instead proceeds with profile download in a delayed download scheme, may use a push message to transmit information indicating that a profile is ready. In this way, if the profile download proceeds in the delayed download scheme, both a push message transmitted from a subscription manager discovery server (SM-DS) and a push message transmitted from an entitlement server may be received by the electronic device, and in this case, an error may occur in the electronic device due to a plurality of push messages.

For another example, a multiple enabled profiles (MEP) feature has been proposed, so a plurality of profiles may be activated on one eSIM. Accordingly, if the plurality of profiles are downloaded on the eSIM, the electronic device may receive a plurality of push messages from the SM-DS and the entitlement server. However, the electronic device may not be able to identify each of the plurality of push messages is related to download of which profile, and in this case, errors may occur in the electronic device due to the plurality of push messages.

For another example, if an existing profile stored in a physical SIM or an eSIM included in the electronic device (e.g., an existing electronic device) needs to be transferred to an external electronic device (e.g., a new electronic device), the communication carrier may deactivate the existing profile and activate a new profile, and transmit, to the external electronic device, download information for the new profile to cause the external electronic device to download the new profile. Alternatively, the communication carrier may transmit, to the electronic device, a message for requesting to delete the existing profile, the electronic device may delete the existing profile, the communication carrier may receive a message indicating that the existing profile is deleted, and then the communication carrier may transmit, to the external electronic device, information for downloading the new profile to cause the external electronic device to download the new profile. In such a profile transfer (or subscription transfer or line transfer) procedure, if the new electronic device fails to receive the download information for downloading the new profile due to various causes, such as a wireless fidelity (Wi-Fi) error and/or a network error after the communication carrier deactivates the existing profile or the electronic device deletes the existing profile, an error may occur. In this case, the electronic device needs to update authentication information (e.g., a token) to access the entitlement server of the communication carrier, but since the existing profile has already been deactivated or deleted, authentication based on the existing profile (e.g., extensible authentication protocol authentication and key agreement (EAP-AKA) authentication) may not be possible.

### [Detailed Description of the Invention]

### [Technical Solution]

An aspect of the disclosure lies in conditionally downloading a profile from a server (e.g., an SM-DP+ server), so as to improve a profile downloading procedure.

According to an of the disclosure, if an error situation occurs, such as a case that authentication based on an existing profile is impossible since effective time for a token expires during a profile transfer procedure, a scheme for updating the token without a new authentication procedure may be proposed.

In case that the electronic device needs to update authentication information (e.g., a token) to access the entitlement server of the communication carrier, but since the existing profile has already been deactivated or deleted, authentication based on the existing profile (e.g., extensible authentication protocol authentication and key agreement (EAP-AKA) authentication) may not be possible. An aspect of the disclosure may address such a problem.

According to an embodiment of the disclosure, an electronic device (101) may include communication circuitry (190), one or more processors including processing circuitry (120), and memory (130) storing instructions.

According to an embodiment of the disclosure, the instructions, when executed by the one or more processors individually or collectively, may cause the electronic device to receive, from an external electronic device (102; 104; 700) via the communication circuitry, authentication information related to a procedure for transferring a profile from the external electronic device to the electronic device.

According to an embodiment of the disclosure, the instructions, when executed by the one or more processors individually or collectively, may cause the electronic device to, in response to receiving the authentication information, identify a first identifier for identifying the procedure.

According to an embodiment of the disclosure, the instructions, when executed by the one or more processors individually or collectively, may cause the electronic device to transmit, to a first server (520) via the communication circuitry, a request message, that includes the first identifier, for requesting transfer of the profile.

According to an embodiment of the disclosure, the instructions, when executed by the one or more processors individually or collectively, may cause the electronic device to, in response to transmitting the request message, receive, from the first server or a second server (210; 560) different from the first server via the communication circuitry, a response message including information for downloading a profile from a third server (220; 530).

According to an embodiment of the disclosure, the instructions, when executed by the one or more processors individually or collectively, may cause the electronic device to, based on the response message, identify a second identifier for identifying the procedure.

According to an embodiment of the disclosure, the instructions, when executed by the one or more processors individually or collectively, may cause the electronic device to identify whether the second identifier is identical to the first identifier.

According to an embodiment of the disclosure, the instructions, when executed by the one or more processors individually or collectively, may cause the electronic device to, based on the second identifier being identical to the first identifier, identify whether another response message including the second identifier has been received before receiving the response message.

According to an embodiment of the disclosure, the instructions, when executed by the one or more processors individually or collectively, may cause the electronic device to, based on whether the another response message has been received, identify whether to download the profile from the third server.

According to an embodiment of the disclosure, the instructions, when executed by the one or more processors individually or collectively, cause the electronic device to, as at least part of identifying whether to download the profile from the third server based on whether the another response message has been received, based on the another response message having not been received, download the profile from the third server via the communication circuitry based on the information for downloading the profile.

According to an embodiment of the disclosure, a method of an electronic device (101) may be provided, and the method may include receiving, from an external electronic device (102; 104; 700), authentication information related to a procedure for transferring a profile from the external electronic device to the electronic device.

According to an embodiment of the disclosure, the method may include, in response to receiving the authentication information, identifying a first identifier for identifying the procedure.

According to an embodiment of the disclosure, the method may include transmitting, to a first server (520), a request message, that includes the first identifier, for requesting transfer of the profile.

According to an embodiment of the disclosure, the method may include, in response to transmitting the request message, receiving, from the first server or a second server (210; 560) different from the first server, a response message including information for downloading a profile from a third server (220; 530).

According to an embodiment of the disclosure, the method may include, based on the response message, identifying a second identifier for identifying the procedure.

According to an embodiment of the disclosure, the method may include identifying whether the second identifier is identical to the first identifier.

According to an embodiment of the disclosure, the method may include, based on the second identifier being identical to the first identifier, identifying whether another response message including the second identifier has been received before receiving the response message.

According to an embodiment of the disclosure, the method may include, based on whether the another response message has been received, identifying whether to download the profile from the third server.

According to an embodiment of the disclosure, the identifying whether to download the profile from the third server based on whether the another response message has been received may include, based on the another response message having not been received, downloading the profile from the third server based on the information for downloading the profile.

According to an embodiment of the disclosure, a storage medium storing at least one computer-readable instruction may be provided.

According to an embodiment of the disclosure, the at least one instruction, when executed by one or more processors (120) including processing circuitry of an electronic device (101) individually or collectively, may cause the electronic device to perform at least one operation.

According to an embodiment of the disclosure, the at least one operation may include receiving, from an external electronic device (102; 104; 700), authentication information related to a procedure for transferring a profile from the external electronic device to the electronic device.

According to an embodiment of the disclosure, the at least one operation may include, in response to receiving the authentication information, identifying a first identifier for identifying the procedure.

According to an embodiment of the disclosure, the at least one operation may include, transmitting, to a first server (520), a request message, that includes the first identifier, for requesting transfer of the profile.

According to an embodiment of the disclosure, the at least one operation may include, in response to transmitting the request message, receiving, from the first server or a second server (210; 560) different from the first server, a response message including information for downloading a profile from a third server (220; 530).

According to an embodiment of the disclosure, the at least one operation may include, based on the response message, identifying a second identifier for identifying the procedure.

According to an embodiment of the disclosure, the at least one operation may include identifying whether the second identifier is identical to the first identifier.

According to an embodiment of the disclosure, the at least one operation may include, based on the second identifier being identical to the first identifier, identifying whether another response message including the second identifier has been received before receiving the response message.

According to an embodiment of the disclosure, the at least one operation includes, based on whether the another response message has been received, identifying whether to download the profile from the third server.

According to an embodiment of the disclosure, the identifying whether to download the profile from the third server based on whether the another response message has been received includes, based on the another response message having not been received, downloading the profile from the third server based on the information for downloading the profile.

According to an aspect of the disclosure, a profile downloading procedure may be improved by conditionally downloading a profile from a server (e.g., an SM-DP+ server).

According to an of the disclosure, by virtue of a scheme for updating the token without a new authentication procedure, a technical problem that when an error situation occurs, such as a case that authentication based on an existing profile is impossible since effective time for a token expires during a profile transfer procedure, may be addressed.

Furthermore, in case that the electronic device needs to update authentication information (e.g., a token) to access the entitlement server of the communication carrier, but since the existing profile has already been deactivated or deleted, authentication based on the existing profile (e.g., extensible authentication protocol authentication and key agreement (EAP-AKA) authentication) may not be possible. An aspect of the disclosure may address such a problem.

### [Description of the Drawings]

FIG. 1A is a block diagram illustrating an electronic device within a network environment according to an embodiment.
FIG. 1B is a diagram illustrating a network environment including an electronic device according to an embodiment.
FIG. 2 is a diagram for describing a system for providing an electronic device with a profile-based communication connection according to an embodiment.
FIG. 3 is a block diagram illustrating a structure of an electronic device according to an embodiment.
FIG. 4 is a diagram for describing an internal structure of an eUICC according to an embodiment.
FIG. 5 is a block diagram illustrating a network system for downloading a profile according to an embodiment.
FIG. 6 is a flowchart illustrating an operating process of an electronic device according to an embodiment.
FIG. 7A is a signal flow diagram illustrating an ODSA procedure in a wireless communication network according to an embodiment.
FIG. 7B is a signal flow diagram illustrating an ODSA procedure in a wireless communication network according to an embodiment.
FIG. 8A is a signal flow diagram illustrating an ODSA procedure in a wireless communication network according to an embodiment.
FIG. 8B is a signal flow diagram illustrating an ODSA procedure in a wireless communication network according to an embodiment.
FIG. 8C is a signal flow diagram illustrating an ODSA procedure in a wireless communication network according to an embodiment.
FIG. 9A is a signal flow diagram illustrating an ODSA procedure in a wireless communication network according to an embodiment.
FIG. 9B is a signal flow diagram illustrating an ODSA procedure in a wireless communication network according to an embodiment.
FIG. 10A is a signal flow diagram illustrating an ODSA procedure in a wireless communication network according to an embodiment.
FIG. 10B is a signal flow diagram illustrating an ODSA procedure in a wireless communication network according to an embodiment.
FIG. 10C is a signal flow diagram illustrating an ODSA procedure in a wireless communication network according to an embodiment.
FIG. 11 is a signal flow diagram illustrating an ODSA procedure in a wireless communication network according to an embodiment.
FIG. 12 is a diagram for describing an example of screens displayed on an electronic device according to an embodiment.
FIG. 13 is a diagram for describing an example of screens displayed on an electronic device according to an embodiment.
FIG. 14 is a diagram for describing an example of screens displayed on an electronic device according to an embodiment.
FIG. 15A is a signal flow diagram illustrating an ODSA procedure in a wireless communication network according to an embodiment.
FIG. 15B is a signal flow diagram illustrating an ODSA procedure in a wireless communication network according to an embodiment.
FIG. 16 is a diagram for describing an operation for an electronic device to manage a plurality of pieces of authentication information in a wireless communication network according to an embodiment.
FIG. 17A is a signal flow diagram illustrating an ODSA procedure in a wireless communication network according to an embodiment.
FIG. 17B is a signal flow diagram illustrating an ODSA procedure in a wireless communication network according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in an embodiment of the disclosure, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

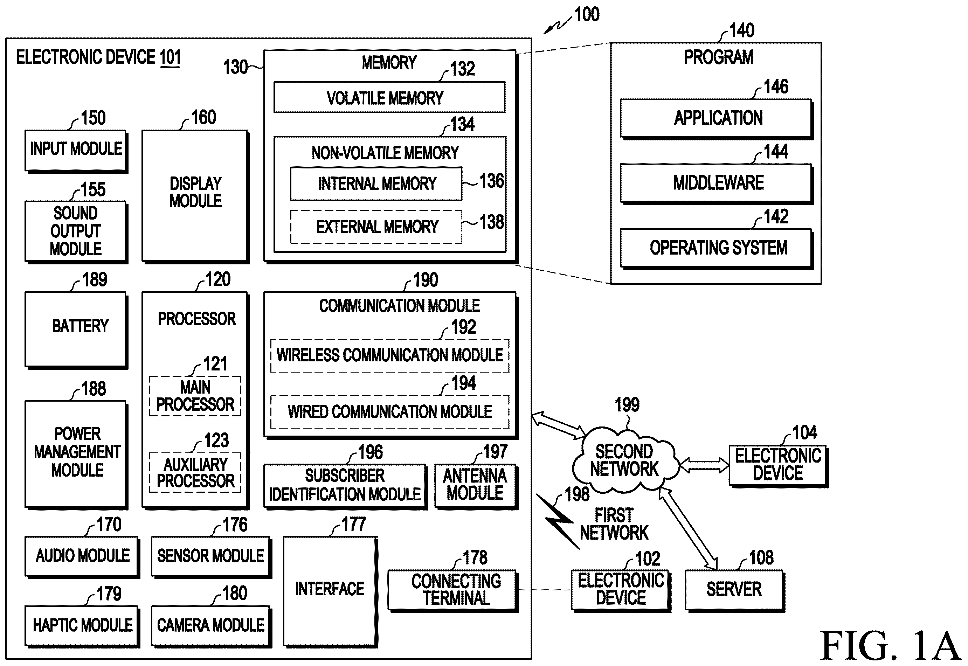

FIG. 1A is a block diagram illustrating an electronic device 101 in a network environment 100 according to an embodiment.

Referring to FIG. 1A, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may acquire the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

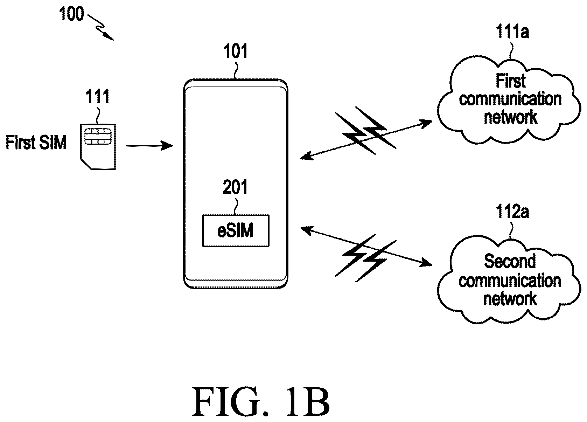

FIG. 1B is a diagram illustrating a network environment 100 including an electronic device according to an embodiment.

Referring to FIG. 1B, a network according to an embodiment of the disclosure may include an electronic device 101, a first communication network 111a, and/or a second communication network 112a.

According to an embodiment, the electronic device 101 may operate as a dual SIM dual standby (DSDS) electronic device or a dual SIM dual active (dual SIM dual active: DSDA) electronic device which supports two subscriber identity modules (SIMs) in one device. For example, the electronic device 101 may include a first SIM 111 and an embedded SIM (eSIM) 201. The first SIM 111 may be a removable SIM (rSIM). For example, a SIM card may be equipped in the electronic device 101. Hereinafter, for convenience of a description, the SIM card will be referred to as a SIM. The electronic device 101 may include a slot (not shown) to accommodate the first SIM 111. According to an embodiment, although not separately shown in FIG. 1A, the electronic device 101 may accommodate two or more SIMs. In this case, the electronic device 101 may include a plurality of slots for accommodating a plurality of SIMs.

For example, the first SIM 111 may be a SIM subscribed to a communication carrier of the first communication network 111a. The electronic device 101 may receive a wireless communication service by accessing the first communication network 111a using the first SIM 111. According to an embodiment, the electronic device 101 may include an eSIM 201. An eSIM may also be referred to as an embedded UICC (eUICC). The electronic device 101 may receive a wireless communication service by accessing the second communication network 112a using the eSIM 201. The first communication network 111a and the second communication network 112a may be provided by the same communication carrier or by different communication carriers.

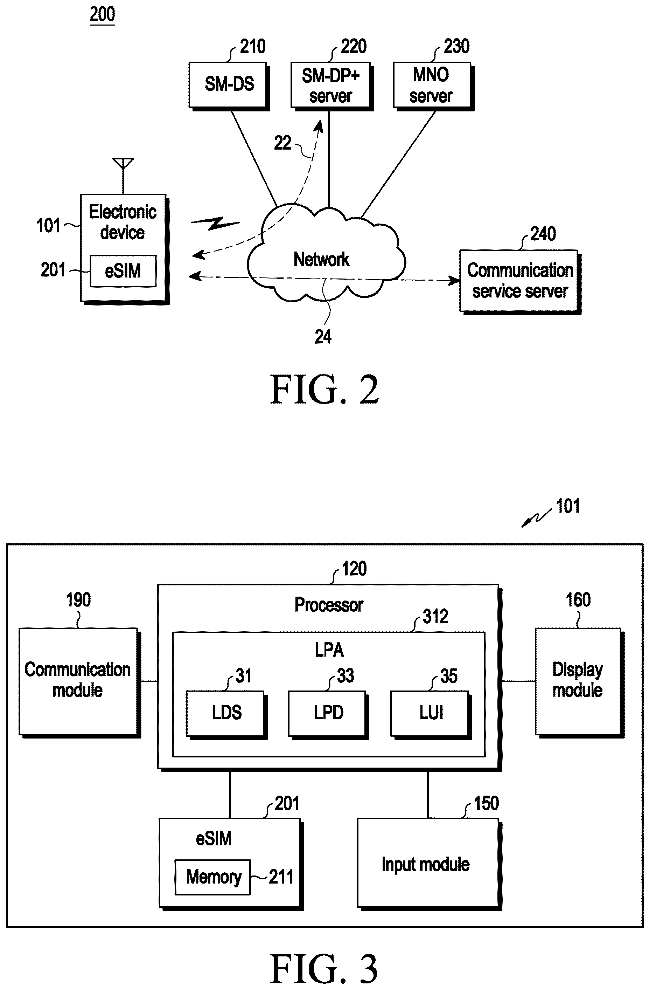

FIG. 2 is a diagram for describing a system for providing an electronic device with a profile-based communication connection according to an embodiment.

Referring to FIG. 2, according to an embodiment, a system 200 may include an electronic device 101, a subscription manager discovery server (SM-DS) 210, a subscription manager data preparation plus (SM-DP+) server 220, a mobile network operator (MNO) server 230, and a communication service server 240.

According to an embodiment, the electronic device 101 (e.g., an electronic device 101 in FIG. 1A or FIG. 1B) may include an eSIM 201. For convenience of a description, although not separately illustrated in FIG. 2, the electronic device 101 may include at least one slot capable of accommodating at least one rSIM. According to an embodiment, the electronic device 101 may include or accommodate N (here, N is a natural number) SIMs (e.g., eSIMs or rSIMs) and may perform a switching operation to use some of the N SIMs. In an embodiment, there may be no limitation to combining the N SIMs, and there may be also no limitation to a value of N.

According to an embodiment, the eSIM 201 may be inserted into the electronic device 101, or may be provided integrally with the electronic device 101, or implemented to be accessible by the electronic device 101. According to an embodiment, the eSIM 201 may allow the electronic device 101 to perform an authenticating operation with the MNO server 230 using information (e.g., a profile including universal subscriber identity module (USIM) information) stored at the eSIM 201. According to an embodiment, the eSIM 201 may be called a SIM card in a global system for mobile communications (GSM) scheme or may be called a universal subscriber identity module (USIM) card in a wideband code division multiple access (WCDMA) scheme, a long-term evolution (LTE) scheme, and a new radio (NR) scheme. In addition to this, the eSIM 201 may be called various names according to communication schemes. For example, if a user of the electronic device 101 subscribes to a wireless communication service provided by the communication carrier, the electronic device 101 may use information (e.g., an international mobile subscriber identity (IMSI) value and a K value which is an encryption key for authentication) within the eSIM 201 to perform a suitable authenticating process with the MNO server 230 at which the same IMSI value and encryption key are stored. If authentication via the authenticating process is successful, the electronic device 101 may use the wireless communication service. In an embodiment, the authenticating process may be based on an authentication scheme. The authentication scheme may be an extensible authentication protocol authentication and key agreement (EAP-AKA) scheme, an open identification (OPEN ID) scheme, or a short message service one-time password (SMS-OTP) scheme. The EAP-AKA scheme may be an authentication scheme using a physical SIM (e.g., a USIM) or an eSIM profile, and may follow RFC 4187, but may not be limited thereto. The OPEN ID scheme may be an authentication scheme using an ID/password on a web page of the communication carrier. The SMS-OTP scheme may be an OTP scheme using an SMS.

According to an embodiment, the eSIM 201 may be manufactured in a form of a dedicated card for a specific communication carrier according to a request of the corresponding communication carrier, and may be preloaded with authentication information (e.g., a USIM application and a subscriber ID (e.g., an IMSI)), and an encryption key (e.g., a known K value or Ki value) for a network access of the corresponding communication carrier. An application (or information) within the eSIM 201 may be installed, modified, deleted, or updated using various technologies such as an over the air (OTA) if necessary.

According to an embodiment, the eSIM 201 may download and/or store information for providing a communication service, in the form of a profile. According to an embodiment, the profile may be installed or stored in a manufacturing process of the eSIM 201 or may be downloaded by the electronic device 101 with the OTA scheme and installed or stored in the eSIM 201. For example, the profile may include a provisioning profile and an operational profile. Even though the provisioning profile is not installed, the electronic device 101 may download the operational profile through a short-range connection which is based on a Wi-Fi scheme or an Internet connection, and those skilled in the art will understand that the provisioning profile does not necessarily need to be installed on the electronic device 101. For example, the operational profile may be a profile including subscriber identification information of the user of the electronic device 101, and the provisioning profile may include information (hereinafter, it will be also referred to as "first information") for downloading subscriber identity information or a profile (hereinafter, it will be also referred to as a "first operational profile") including subscriber identity information (hereinafter, it will be also referred to as "first subscriber identity information") in the electronic device 101. The electronic device 101 may download the first operational profile based on the first information in the provisioning profile within the eSIM 201.

According to an embodiment, the electronic device 101 may receive a communication service using subscriber identity information (hereinafter, it will be also referred to as "second subscriber identity information") in an operational profile (hereinafter, it will be also referred to as a "second operational profile") installed or stored in the eSIM 201. For example, the profile including subscriber identification information may be a SIM profile.

According to an embodiment, the operational profile may further include, in addition to the subscriber identification information, at least one of network access authentication information of the subscriber, a phone book of the subscriber, personal information (e.g., a short message service (SMS)) of the subscriber, a subscribed communication carrier name, a usable service, usable data amount, fee or a service provision speed, or information related to subscriber authentication and traffic security key generation required upon accessing a wireless communication network (e.g., a GSM communication network, a WCDMA communication network, an LTE communication network, or an NR communication network).

According to an embodiment, the first information used for downloading data (e.g., the first operational profile) including the first subscriber identity information may include communication session information for a first communication connection designated for downloading the first operational profile. For example, the communication session information may include access information for the SM-DS 210 for downloading the first operational profile and/or communication carrier network information usable for an access to the SM-DS 210.

According to an embodiment, the SM-DS 210 may provide the electronic device 101 with an address of the SM-DP+ server 220 for downloading the first operational profile based on the provisioning profile.

According to an embodiment, the SM-DP+ server 220 may be a profile providing server, an off-card entity of profile domain, a profile encrypting server, a profile generating server, a profile provisioner, or a profile provider. The SM-DP+ server 220 may establish a first communication connection 22 with the electronic device 101 through a wireless communication network based on a first communication connection request based on the provisioning profile from the electronic device 101, and may provide the electronic device 101 with the first operational profile through the first communication connection 22.

According to an embodiment, the wireless communication network may be a specific node of the wireless communication network. For example, the wireless communication network may be a base station, a subscriber information management node, and/or a mobility management node of the wireless communication network. According to an embodiment, the wireless communication network may include a home position register (HLR) and/or authentication center (AuC) server which is accessed by the electronic device 101 to perform a subscriber authenticating function. Upon succeeding in subscriber authentication, the electronic device 101 may access the communication service server 240 to receive various communication services, such as a voice communication or data communication.

According to an embodiment, the MNO server 230 may be a server associated with a mobile communication network operator. According to an embodiment, the MNO server 230 may request the SM-DS+ server 220 to prepare for at least one profile (or profile package) (e.g., the first operational profile) associated with at least one subscriber identity information (e.g., the first subscriber identity information), and may transmit information associated with the first operational profile to the SM-DS+ server 220. According to an embodiment, the MNO server 230 may transmit a signal for updating and managing the first operational profile to the SM-DS+ server 220. The MNO server 230 may allow a second communication connection 24 between the electronic device 101 and the communication service server 240 through the second operational profile installed in the eSIM 201 of the electronic device 101.

According to an embodiment, the communication service server 240 may be a server providing communication services. According to an embodiment, the communication service may be a service associated with transmission and/or reception of data through a wireless communication network. According to an embodiment, the communication service may include a service associated with transmission and/or reception of another profile (or data) not including subscriber identity information other than downloading the operational profile (e.g., the first operational profile including the first subscriber identity information). For example, the communication service server 240 may include various service servers associated with data transmission and reception, such as a server associated with each of various applications, a push server, a search server, and/or a market server. A communication service by the communication service server 240 may include various services, such as data transmission/reception by an application, notification reception, push message reception, link reception and access, and/or service request.

According to an embodiment, upon requesting a service associated with transmission and/or reception of a profile (or data) not including subscriber identification information, the electronic device 101 may establish the second communication connection 24 with the communication service server 240 based on the second operational profile.

According to an embodiment, the SM-DS 210, the SM-DP+ server 220, the MNO server 230, and/or the communication service server 240 are just an example in which an entity for performing a corresponding function is implemented in a form of a server, and may be referred to as other names, and each of the SM-DS 210, the SM-DP+ server 220, the MNO server 230, and/or the communication service server 240 may be implemented with one or a plurality of servers. Some or all of the SM-DS 210, the SM-DP+ server 220, the MNO server 230, and/or the communication service server 240 may be implemented as a single integrated server.

FIG. 3 is a block diagram illustrating a structure of an electronic device according to an embodiment.

Referring to FIG. 3, an electronic device 101 in FIG. 1A or 1B, or an electronic device 101 in FIG. 2 according to an embodiment may include a processor 120, an eSIM 201, a communication module 190, a display module 160, and an input module 150. For convenience of a description, although not separately illustrated, the electronic device 101 may include two or more slots capable of accommodating two or more rSIMs.

According to an embodiment, the processor 120 (e.g., a processor 120 in FIG. 1A) may include one or more processors (e.g., a main processor 121 and an auxiliary processor 123 in FIG. 1A, or an application processor and a communication processor), and include a local profile assistant (LPA) 312 (e.g., an LPA device (LPAd)) according to an embodiment. According to an embodiment, if the processor 120 includes a plurality of processors, a portion of the LPA 312 may be included in some of the plurality of processors, and another portion of the LPA 312 may be included in others of the plurality of processors. According to an embodiment, the LPA 312 may be included in the eSIM 201 and, in this case, the LPA 312 may be referred to as an LPAe (or eUICC).

According to an embodiment, the LPA 312 may perform a communication with a server to support an operation of downloading, installing, and managing a profile of the eSIM 201, or may perform an operation of providing a user interface (UI) required for the operation of downloading, installing, and managing the profile. The LPA 312 may include local discovery services (LDS) 31, local profile download (LPD) 33, and local user interface (LUI) 35 operations within the electronic device 101.

According to an embodiment, the LDS 31 may perform an operation of performing a communication with an SM-DS 210, and an operation of receiving an address of an SM-DS+ server 220 capable of downloading an operational profile based on a provisioning profile from the SM-DS server 210.

According to an embodiment, the LPD 33 may perform an operation of establishing a first communication connection 22 with the SM-DS+ server 220 through a wireless communication network based on the address of the SM-DS+ server 220 and receiving a first operational profile from the SM-DS+ server 220 through the first communication connection 22. According to an embodiment, the LPD 33 may support an operation of downloading, enabling, disabling, and deleting a profile, or a profile policy rule (PPR) download operation, started by a network, and may support an operation of enabling, disabling, and deleting a profile, or an eUICC reset operation by the electronic device 101.

According to an embodiment, the LUI 35 may perform an operation of providing various UIs upon downloading the operational profile. According to an embodiment, the LUI 35 may support data exchange between the user and the LDS 31 and the LPD 33 and may include a UI for transferring a user's input to the LDS 31 or the LPD 33.

According to an embodiment, the processor 120 may perform a communication service based on information stored in the eSIM 201 using (or by executing) the LPA 312. For example, the processor 120 may establish a first communication connection to download a profile (e.g., the first operational profile) including first subscriber identity information, with the SM-DS+ server 220 through the communication module 190 based on the provisioning profile stored in the eSIM 201, using the LPA 312. Upon request of transmission and/or reception of data and/or a profile not including subscriber identity information while establishing the first communication connection using the LPA 312, the processor 120 may release the first communication connection and establish a second communication connection based on second subscriber identity information to perform an operation of transmitting and/or receiving the data and/or profile not including the subscriber identity information.

According to an embodiment, the eSIM 201 (e.g., a subscriber identity module 196 in FIG. 1A or an eSIM 201 in FIG. 2) may include one or a plurality of profiles, as information for receiving a communication service. A profile may mean a packaging, in a form of software, of at least one of an application, a file system, or an authentication key value stored in the eSIM 201. For example, the profile may include a provisioning profile and an operational profile. The operational profile may include subscriber identification information, and may further include, in addition to the subscriber identification information, at least one of network access authentication information of the subscriber, a phone book of the subscriber, personal information (e.g., an SMS) of the subscriber, a subscribed communication carrier name, a usable service, usable data amount, fee or a service provision speed, or information related to subscriber authentication and traffic security key generation required upon accessing a wireless communication network such as a GSM communication network, a WCDMA communication network, an LTE communication network, or an NR communication network). According to an embodiment, the operational profile may include a SIM profile. For example, the SIM profile may include an SIM file system (a master file (MF), a dedicated file (DF), and an elementary file (EF)), and subscriber identification information (e.g., an IMSI value) may be stored in the elementary file.

According to an embodiment, the provisioning profile may be a profile including first information for downloading the first operational profile in the electronic device 101. For example, the first information may include communication session information for the first communication connection designated for downloading the first operational profile. For example, the communication session information may include access information for an SM-DS (e.g., an SM-DS 210 in FIG. 2) for downloading the first operational profile, and may include communication carrier network information usable for an access to the SM-DS server.

According to an embodiment, the communication module 190 (e.g., a communication module 190 in FIG. 1A) may perform a first communication based on the provisioning profile or a second communication based on the second operational profile. At least one screen associated with the first communication based on the provisioning profile or the second communication based on the second operational profile may be displayed on the display device 160.

In FIG. 3, although a case that the LPA 312 is included in the processor 120 has been described as an example, at least some functions of the LPA 312 may be performed by the processor 120, or a separate LPA 312 may be operated in conjunction with the processor 120. For example, the LPA 312 may be included in a program (e.g., a program 140 in FIG. 1A) and may be loaded onto the processor 120 and executed, and if the LPA 312 is loaded on the processor 120 and executed, it may be understood as an operation of the processor 120. According to an embodiment, function modules (e.g., the LDS 31, the LPD 33, and/or the LUI 35) included in the LPA 312 are illustratively separated, may be expressed in other functional modules, and may not be limited to the corresponding form. According to an embodiment, the LPA 312 may be included within the eSIM 201.

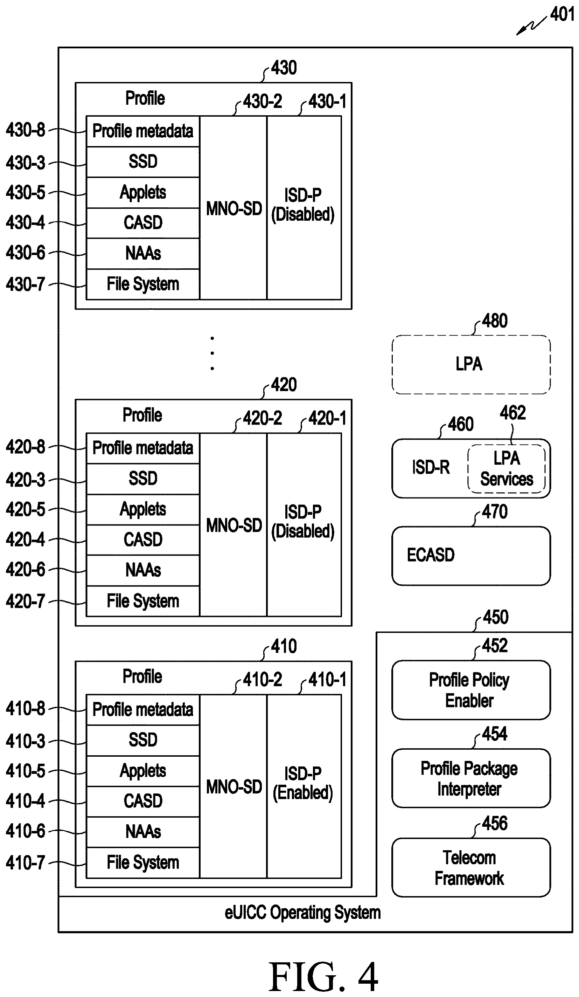

FIG. 4 is a diagram for describing an internal structure of an eUICC according to an embodiment.

Referring to FIG. 4, an eUICC 401 (e.g., an eSIM 201 in FIG. 2 or 3) may have a form such as a card or chip, and at least one profile (e.g., a profile 410, a profile 420, or a profile 430) with a software form may be installed in the eUICC 401. According to an embodiment, each of the profiles 410, 420, and 430 may be a provisioning profile or an operational profile. The profiles 410, 420, and 430 may operate on an eUICC operating system (OS) 450. Each of the profiles 410, 420, and 430 may be enabled or disabled by a processor or an LPA (e.g., an LPA 312 in FIG. 3 or an LPA 480 in FIG. 4). In FIG. 4, it will be assumed that one profile 410 may be in an enabled state, and the remaining profiles 420 and 430 may be in a disabled state. According to an embodiment, two or more profiles may be enabled within the eUICC 401.

According to an embodiment, the eUICC OS 450 of the eUICC 401 may include a profile policy enabler 452, a profile package interpreter 454, and a telecom framework 456.According to an embodiment, the profile policy enabler 452 may manage a policy rule (e.g., a profile policy rule (PPP)) for each of the profiles 410, 420, and 430. According to an embodiment, the profile package interpreter 454 may unpackage a profile package received from an SM-DP+ server (e.g., an SM-DP+ server 220 in FIG. 2), in a form which may be installed in the eUICC 401. According to an embodiment, the telecom framework 456 may perform a function associated with a communication of applications within the eUICC 401. According to an embodiment, the eUICC 401 may include an issuer security domain root (ISD-R) 460, and an eUICC controlling authority security domain (ECASD) 470. According to an embodiment, the ISD-R 460 may manage the profiles 410, 420, and 430 installed in the eUICC 401. For example, the ISD-R 460 may include LPA services 462, and the LPA services 462 may manage the profiles 410, 420, and 430 installed in the eUICC 401 through an interface with the processor or the LPA (e.g., the LPA 312 in FIG. 3 or the LPA 480 in FIG. 4). According to an embodiment, the ECASD 470 may perform security processing on the profiles 410, 420, and 430 installed in the eUICC 401.

According to an embodiment, each of the profiles 410, 420, and 430 may include an ISD-P 410-1, 420-1 or 430-1, an MNO-SD 410-2, 420-2, or 430-2, a supplementary security domain (SSD) 410-3, 420-3, or 430-3, a controlling authority security domain (CASD) 410-4, 420-4, or 430-4, Applets 410-5, 420-5, or 430-5, network access applications (NAAs) 410-6, 420-6 or 430-6, a file system 410-7, 420-7, or 430-7, or profile metadata 410-8, 420-8, or 430-8.

According to an embodiment, the ISD-P 410-1, 420-1, or 430-1 may include information for decoding and interpretation of the profile package, and may be used to unpackage and install the profile package received from the SM-DP+ in cooperation with the profile package interpreter 454.

According to an embodiment, the MNO-SD 410-2, 420-2, or 430-2 may include an OTA key of an MNO, and may include information for providing a secure OTA channel capable of communicating with the MNO.

According to an embodiment, the SSD 410-3, 420-3, or 430-3 and the CASD 410-4, 420-4, or 430-4 may include information for performing security processing on a profile.

According to an embodiment, the Applets 410-5, 420-5, or 430-5 may include various application information associated with a user of the profile.

According to an embodiment, the NAAs 410-6, 420-6, or 430-6 may include application information which allows the profile to access a network.

According to an embodiment, the file system 410-7, 420-7, or 430-7 may include a file system associated with each information of the profile.

According to an embodiment, the profile metadata 410-8, 420-8, or 430-8 may also be referred to as a profile record, and may include metadata information about the profile in a text form. The metadata information may include at least one of an integrated circuit card ID (ICCID) of the profile, a profile name, a name of an MNO providing the profile, a user's profile nickname, an icon, a profile class, notification configuration information, profile owner information, or a PPR.

According to an embodiment, the ICCID of the profile, as a profile identifier, may indicate a unique identifier of each profile. The name of the profile may include a name of each profile. The name of the MNO providing the profile may include a name of a communication carrier which provides the profile. The user's profile nickname may include a profile nickname specified by the user. The icon may include an icon corresponding to the profile. The profile class may include information indicating whether a type of the profile is a provisioning profile or an operational profile. The notification configuration information may include an address of a server (e.g., an SM-DP+ server 220 in FIG. 2) to receive notifications. The profile owner information may include at least one of a mobile country code (MCC), a mobile network code (MNC), or group identifier (GID) 1 or 2 information associated with a profile owner. For example, the MCC may be a code for identifying a country, and the MNC may be a code for identifying a mobile communication carrier. The GID 1 or 2 may be code area information for identifying a group or an area to which the profile belongs. Area information may include information about a group including a plurality of countries. The PPR may include policy rule information for managing the profile.

According to an embodiment, the electronic device (e.g., an electronic device 101 in FIG. 1A or 1B, an electronic device 101 in FIG. 2, or an electronic device 101 in FIG. 3) may identify whether each of the profiles 410, 420, and 430 is a provisioning profile or an operational profile based on the profile class information of the profile metadata 410-8, 420-8, or 430-8 included in each of the profiles 410, 420, and 430 included in the eUICC 401 and enable or disable each of the provisioning profile or the operational profile via the LPA 480 (e.g., an LPA 312 in FIG. 3).

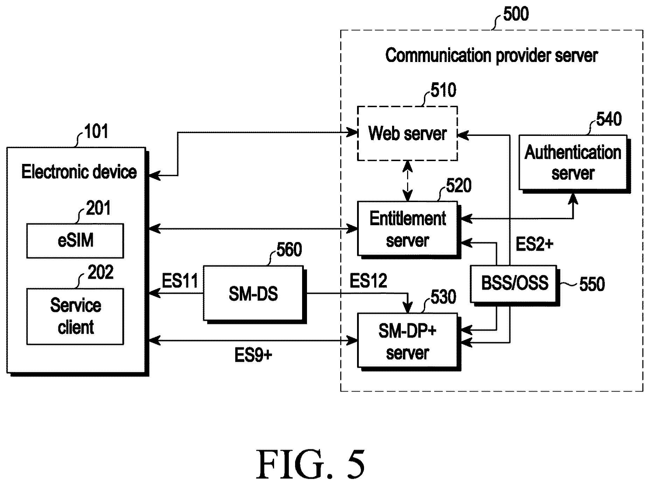

FIG. 5 is a block diagram illustrating a network system for number transfer according to an embodiment.

Referring to FIG. 5, a network system according to an embodiment may include an electronic device 101 (e.g., an electronic device 101 in FIG. 1A or 1B, an electronic device 101 in FIG. 2, or an electronic device 101 in FIG. 3), and a communication carrier server 500.

The communication carrier server 500 may include at least one of an entitlement server (or an entitlement configuration server) 520, an SM-DP+ server 530, an authentication server 540, a business support systems (BSS)/operation support systems (OSS) 550, or an SM-DS 560.

According to an embodiment, the communication carrier server 500 may include a web server 510 or may not include the web server 510. For example, at least one of the web server 510, the entitlement server 520, the SM-DP+ server 530, the authentication server 540, or the BSS/OSS 550 may be included in the communication carrier server 500 managed by a communication carrier. According to an embodiment, the web server 510 and the entitlement server 520 may be servers managed by the same communication carrier or different communication carriers. According to an embodiment, the entitlement server 520 and the SM-DP+ server 530 may be servers managed by the same communication carrier or different communication carriers.

An eSIM 201 may be inserted into the electronic device 101 or the eSIM 201 may be embedded in the electronic device 101. A profile may be downloaded and installed in the eSIM 201. A service client 202 may be installed in the electronic device 101 for a communication with the communication carrier server 500 according to an embodiment to be described later. In an embodiment, the electronic device 101 may include a physical SIM without including the eSIM 201, and a profile may be downloaded and installed in the physical SIM.

According to an embodiment, the electronic device 101 may access the entitlement server 520 via the service client 202 and access the web server 510 via the accessed entitlement server 520. For example, if the electronic device 101 accesses the entitlement server 520, the entitlement server 520 may perform an authentication operation and an eligibility check operation for the electronic device 101 or a user of the electronic device 101 via the BSS/OSS 550 or the authentication server 540. If the authentication operation and the eligibility check operation for the electronic device 101 or the user of the electronic device 101 are successful (for example, if authentication for the electronic device 101 or the user of the electronic device 101 is successful, and the electronic device 101 or the user of the electronic device 101 is eligible), the entitlement server 520 may transmit, to the electronic device 101, information required for an access to the web server 510.

The electronic device 101 may access the web server 510 using the information required for the access to the web server 510 received via the entitlement server 520. According to an embodiment, the electronic device 101 may request subscription, opening, or line transfer (or subscription transfer or profile transfer) via a web page provided by the web server 510. According to an embodiment, the electronic device 101 may request the subscription, the opening, or the line transfer via the entitlement server 520 without the web server 510. For example, if the communication carrier server 500 does not include the web server 510, or if the communication carrier server 500 includes the web server 510, and does not provide information related to the web server 510 (for example, an address of the web server 510)(for example, if a web service or a web page is not provided via the web server 510), the electronic device 101 may request the subscription, the opening, or the line transfer via the entitlement server 520. According to an embodiment, the web server 510 may provide a UI or a web page for the entitlement server 520. For example, the electronic device 101 may request the subscription, the opening, or the line transfer via the web page provided from the web server 510. According to an embodiment, the entitlement server 520 may provide line management and creation, service control, and status information. For example, the entitlement server 520 may include an entitlement server or an entitlement configuration server specified in GSM association (GSMA) standard document TS. 43. In the standard document TS. 43, the term "entitlement" may include meaning of applicability, availability, or status of a service required before providing a service (e.g., a communication service) to the user of the electronic device 101. For example, the entitlement server 520 may perform a function of delivering information (e.g., profile download information or profile download-related information) related to a profile provided to the electronic device 101. In the description to be described later, profile information may include information related to a profile, and may also be referred to as profile download information or profile download-related information for convenience of a description. The entitlement server 520 may include a discovery and push function (DPF), an SM-DS, subscription manager secure routing (SM-SR), subscription manager secure routing plus (SM-SR+), an off-card entity of eUICC Profile Manager or a profile management credentials holder (PMC holder), or an eUICC manager (EM), but may not be limited thereto.

According to an embodiment, the SM-DP+ server 530 may perform a function of managing and downloading a profile. For example, the SM-DP+ server 530 may include, in addition to SM-DP+, at least one of subscription manager data preparation (SM-DP), an off-card entity of Profile Domain, a profile encrypting server, a profile generating server, a profile provisioner (PP), a profile provider, or a profile provisioning credentials holder (PPC holder), but may not be limited thereto.

According to an embodiment of the disclosure, an electronic device (101) may include communication circuitry (190), one or more processors including processing circuitry (120), and memory (130) storing instructions.

According to an embodiment of the disclosure, the instructions, when executed by the one or more processors individually or collectively, may cause the electronic device to receive, from an external electronic device (102; 104; 700) via the communication circuitry, authentication information related to a procedure for transferring a profile from the external electronic device to the electronic device.

According to an embodiment of the disclosure, the instructions, when executed by the one or more processors individually or collectively, may cause the electronic device to, in response to receiving the authentication information, identify a first identifier for identifying the procedure.

According to an embodiment of the disclosure, the instructions, when executed by the one or more processors individually or collectively, may cause the electronic device to transmit, to a first server (520) via the communication circuitry, a request message, that includes the first identifier, for requesting transfer of the profile.

According to an embodiment of the disclosure, the instructions, when executed by the one or more processors individually or collectively, may cause the electronic device to, in response to transmitting the request message, receive, from the first server or a second server (210; 560) different from the first server via the communication circuitry, a response message including information for downloading a profile from a third server (220; 530).

According to an embodiment of the disclosure, the instructions, when executed by the one or more processors individually or collectively, may cause the electronic device to, based on the response message, identify a second identifier for identifying the procedure.

According to an embodiment of the disclosure, the instructions, when executed by the one or more processors individually or collectively, may cause the electronic device to identify whether the second identifier is identical to the first identifier.

According to an embodiment of the disclosure, the instructions, when executed by the one or more processors individually or collectively, may cause the electronic device to, based on the second identifier being identical to the first identifier, identify whether another response message including the second identifier has been received before receiving the response message.

According to an embodiment of the disclosure, the instructions, when executed by the one or more processors individually or collectively, may cause the electronic device to, based on whether the another response message has been received, identify whether to download the profile from the third server.

According to an embodiment of the disclosure, the instructions, when executed by the one or more processors individually or collectively, cause the electronic device to, as at least part of identifying whether to download the profile from the third server based on whether the another response message has been received, based on the another response message having not been received, download the profile from the third server via the communication circuitry based on the information for downloading the profile.

According to an embodiment of the disclosure, the instructions, when executed by the one or more processors individually or collectively, may cause the electronic device to, as at least part of identifying whether to download the profile from the third server based on whether the another response message has been received, based on the another response message having been received, refrain from downloading the profile from the third server.

According to an embodiment of the disclosure, the instructions, when executed by the one or more processors individually or collectively, may cause the electronic device to, based on the another response message being received, discard the response message.

According to an embodiment of the disclosure, the instructions, when executed by the one or more processors individually or collectively, may cause the electronic device to, based on the response message being received from the second server, identify the second identifier from a third identifier included in the response message.

According to an embodiment of the disclosure, the third identifier may be used for identifying an event between the second server and the third server and may be related to the procedure.

According to an embodiment of the disclosure, based on the second identifier and a set rule, the third identifier may be generated.

According to an embodiment of the disclosure, based on a fourth identifier, the third identifier may be generated.

According to an embodiment of the disclosure, the fourth identifier may be used for identifying an event between the first server and the third server and is related to the procedure.

According to an embodiment of the disclosure, the fourth identifier may be identified from the first identifier.

According to an embodiment of the disclosure, based on the first identifier and another set rule, the fourth identifier may be generated.

According to an embodiment of the disclosure, the another set rule may include at least one of a rule for generating the first identifier as the fourth identifier, a rule for generating the fourth identifier by concatenating a value generated by the first server or the third server, a set delimiter, and the first identifier, or a rule for generating the fourth identifier by concatenating the first identifier, the value, and a prefix for detecting the first identifier.

According to an embodiment of the disclosure, the response message received from the first server may include the second identifier.

According to an embodiment of the disclosure, the instructions, when executed by the one or more processors individually or collectively, may cause the electronic device to, in response to receiving the authentication information, receive the first identifier from the second server via the communication circuitry.

According to an embodiment of the disclosure, the instructions, when executed by the one or more processors individually or collectively, may cause the electronic device to, in response to receiving the authentication information, generate the first identifier.

According to an embodiment of the disclosure, the instructions, when executed by the one or more processors individually or collectively, may cause the electronic device to, before downloading the profile, identify a user input for staring downloading the profile.

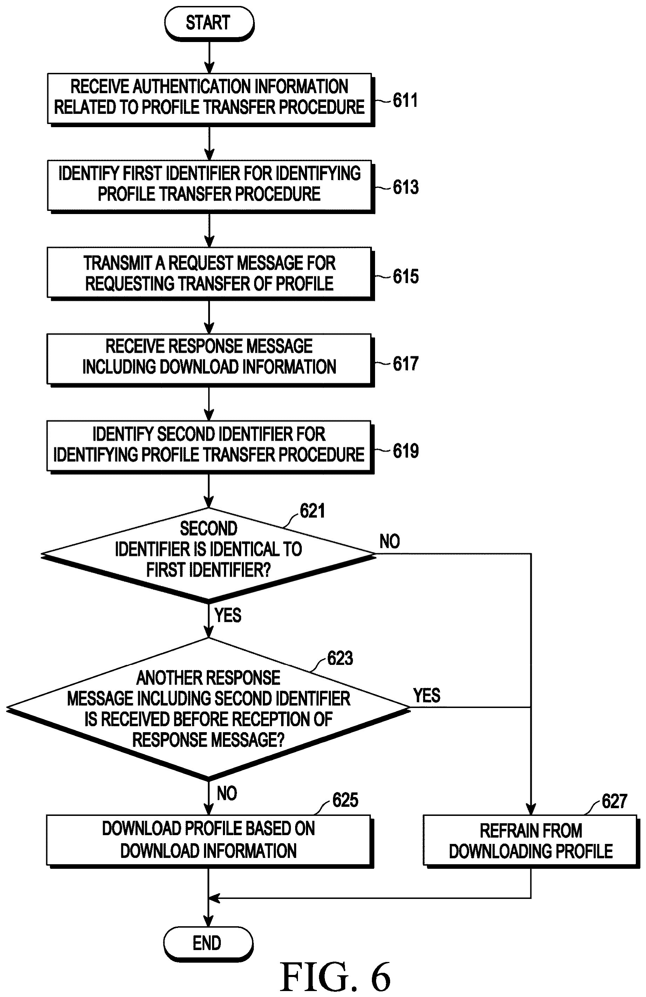

FIG. 6 is a flowchart illustrating an operating process of an electronic device according to an embodiment.

Referring to FIG. 6, in operation 611, an electronic device (e.g., an electronic device 101 in FIGS. 1A, 1B, 2, 3, and/or 5) (e.g., a processor (e.g., a processor 120 in FIGS. 1A and/or 3)) may receive, from an external electronic device (e.g., an electronic device 102 and/or an electronic device 104 in FIG. 1A), authentication information related to a procedure for transferring a profile from the electronic device to the external electronic device. For example, the electronic device may be an existing electronic device which has stored a profile (e.g., an existing profile) associated with subscription, and the external electronic device may be a new electronic device which will download a profile (e.g., a new profile) associated with subscription. In an embodiment, the procedure for transferring the profile may be an ODSA procedure. Hereinafter, for convenience of a description, a case that a profile (subscription or a line) is transferred from the electronic device to the external electronic device may be referred to as "profile transfer from the electronic device to the external electronic device." In the following description, "the profile transfer from the electronic device to the external electronic device" may be used interchangeably with "subscription transfer from the electronic device to the external electronic device," "line transfer from the electronic device to the external electronic device," or "transfer of a SIM of the electronic device to the external electronic device." Hereinafter, for convenience of a description, the procedure for transferring the profile may be referred to as a "profile transfer procedure." In an embodiment, the authentication information may include a temporary token used for the profile transfer procedure, and may be generated by a first server (e.g., an entitlement server 520 in FIG. 5) based on a request from the external electronic device.

The electronic device which receives the authentication information related to the profile transfer procedure may, in operation 613, identify a first identifier (e.g., an OdsaEventID) for identifying the profile transfer procedure in response to the reception of the authentication information. In an embodiment, the first identifier may include an identifier for identifying the profile transfer procedure (or the ODSA procedure). In an embodiment, the electronic device may generate the first identifier in response to the reception of the authentication information. In an embodiment, a generation rule (or a generation function) for generating the first identifier may be implemented in various forms. Alternatively, the electronic device may, in response to the reception of the authentication information, receive from a second server (e.g., an SM-DS 210 in FIG. 2 or an SM-DS 560 in FIG. 5) related to the profile transfer procedure.

The electronic device which identifies the first identifier for identifying the profile transfer procedure may, in operation 615, transmit a request message, which includes the first identifier, for requesting transfer of the profile to the first server related to the profile transfer procedure. For example, the request message for requesting the transfer of the profile may be a hypertext transfer protocol (HTTP) request (HTTP REQUEST) message, and may include "ManageSubscription" as ODSA operation information. "ManageSubscrition" may be ODSA operation information used for requesting a subscription-related operation. The ODSA operation information may be implemented to be similar to or substantially the same as to ODSA information specified in standard document TS. 43, and the ODSA operation information will be described with reference to Table 1 below, so a detailed description thereof will be omitted herein.

The electronic device which transmits the request message for requesting the transfer of the profile may receive, from the first server or the second server, a response message including information for downloading the profile from a third server (e.g., an SM-DP+ server 220 in FIG. 2 or an SM-DP+ server 530 in FIG. 5) in response to the transmission of the request message in operation 617. For example, the response message including the information for downloading the profile may be a push message or an answer message. Hereinafter, for convenience of a description, the information for downloading the profile may also be referred to as download information. In an embodiment, the download information may include an address of the third server from which the profile may be downloaded. In an embodiment, the download information may be implemented to be similar to or substantially the same as download information specified in the standard document TS. 43, and the download information will be described with reference to Table 6 below, so a detailed description thereof will be omitted herein.

The electronic device which receives the response message including the download information may, in operation 619, identify a second identifier (e.g., an OdsaEventID) for identifying the profile transfer procedure based on the response message. In an embodiment, if the response message is a push message received from the first server, the push message may include the second identifier. In an embodiment, if the response message is an answer message received from the second server, the answer message may include a third identifier (e.g., an EventID), and the electronic device may identify the second identifier based on the third identifier. In an embodiment, the EventID may be an identifier used for identifying an event between the second server and the third server (e.g., an ongoing ODSA procedure (e.g., an ongoing profile transfer procedure)), and the EventID may be implemented to be similar to or substantially the same as an EventID specified in a GSMA standard document SPG. 22, so a detailed description thereof will be omitted herein.

The electronic device which identifies the second identifier, may identify, in operation 621, whether the second identifier is identical to the first identifier. As a result of the identification, if the second identifier is not identical to the first identifier (Operation 621-No), the electronic device may identify that the profile transfer procedure corresponding to the second identifier is not a profile transfer procedure related to the electronic device. In this case, the electronic device may refrain from downloading the profile from the third server in operation 627. In operation 627, the electronic device may additionally discard the received response message and may not perform any further operations.

As the result of the identification, if the second identifier is identical to the first identifier (Operation 621-Yes), the electronic device may, in operation 623, identify whether another response message including the second identifier is received before the response message is received.

As a result of the identification, if the other response message including the second identifier is not received before the response message is received (Operation 621-No), the electronic device may, in operation 625, download the profile from the third server based on the download information.

As the result of the identification, if the other response message including the second identifier is received before the response message is received (Operation 623-Yes), the electronic device may, in action 627, refrain from downloading the profile from the third server. In operation 627, the electronic device may additionally discard the received response message and may not perform any further operations.

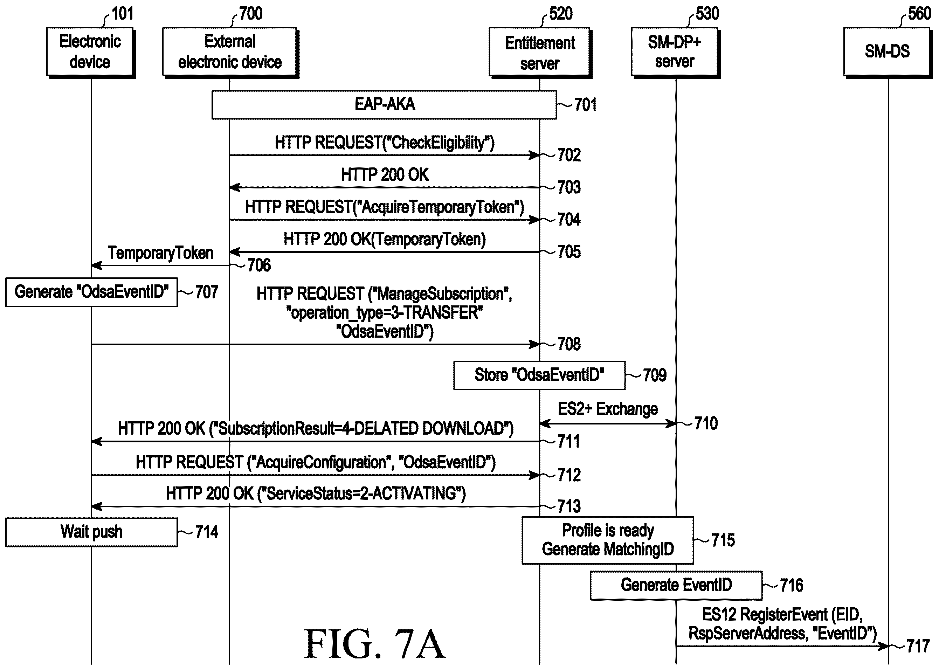

FIG. 7A is a signal flow diagram illustrating an ODSA procedure in a wireless communication network according to an embodiment.

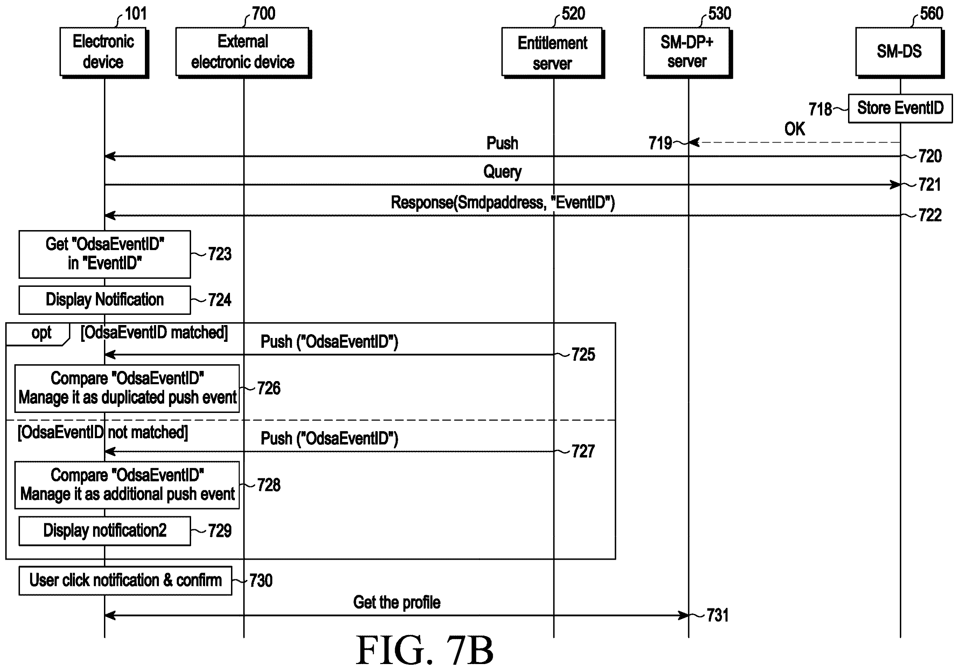

FIG. 7B is a signal flow diagram illustrating an ODSA procedure in a wireless communication network according to an embodiment.

Referring to FIGS. 7A and 7B, a wireless communication network may include an electronic device 101 (e.g., an electronic device 101 in FIGS. 1A, 1B, 2, 3, and/or 5), an external electronic device 700 (e.g., an electronic device 102 and/or an electronic device 104 in FIG. 1A), an entitlement server 520 (e.g., an entitlement server 520 in FIG. 5), an SM-DP+ server 530 (e.g., an SM-DP+ server 220 in FIG. 2 and/or an SM-DP+ server 530 in FIG. 5), and/or an SM-DS 560 (e.g., an SM-DS 210 in FIG. 2 and/or an SM-DS 560 in FIG. 5). The external electronic device 700 may be an existing electronic device which has stored a profile (e.g., an existing profile) associated with subscription, and the electronic device 101 may be a new electronic device which will download a profile (e.g., a new profile) associated with subscription. An ODSA procedure illustrated in FIGS. 7A and 7B may include a profile transfer (or subscription transfer or line transfer) procedure between electronic devices.

In operation 701, the external electronic device 700 may identify a user input associated with the profile transfer between the electronic devices (e.g., the user input for selecting the profile transfer (or the subscription transfer or the line transfer) between the electronic devices). For example, the external electronic device 700 may output (for example, display) a UI (e.g., a profile transfer menu between the electronic devices) for selecting the profile transfer between the electronic devices, and may identify the user input via the UI. The UI may include information indicating the intent of selecting to transfer a profile of the external electronic device 700 to the electronic device 101, or may include information indicating the intent of selecting to transfer a profile (or subscription or a line) from the external electronic device 700 to the electronic device 101 for intuitive recognition by a user.

Based on the user input for selecting to transfer the profile between the electronic devices, the external electronic device 700 may perform an EAP-AKA authentication process with the entitlement server 520 in operation 701. In an embodiment, the EAP-AKA authentication process may represent an authentication process based on an EAP-AKA scheme. Although a case that an authentication process between the external electronic device 700 and the entitlement server 520 is the EAP-AKA authentication process will be described as an example in FIGS. 7A and 7B, there may be no limitation on the authentication process between the external electronic device 700 and the entitlement server 520.

If a result of the EAP-AKA authentication process indicates success, the external electronic device 700 may acquire authentication information (e.g., a token). In FIGS. 7A and 7B, it will be assumed that the result of the EAP-AKA authentication process indicates the success, and if the result of the EAP-AKA authentication process indicates failure, the external electronic device 700 may not perform any further operations.

The external electronic device 700 which acquires the authentication information may perform an eligibility check with the entitlement server 520 to transfer the profile of the external electronic device 700 to the electronic device 101 in operation 702. The external electronic device 700 may request an eligibility check for the electronic device 101 from the entitlement server 520 based on a hypertext transfer protocol (HTTP) GET scheme or an HTTP POST scheme. For example, the external electronic device 700 may request the eligibility check for the electronic device 101 by transmitting a first request message for requesting the eligibility check to the entitlement server 520. According to an embodiment, the first request message may be a request message for requesting the eligibility check, for example, an HTTP REQUEST message.

The external electronic device 700 may transmit the first request message including any one of ODSA operation information as shown in Table 1 below to the entitlement server 520, according to an ODSA procedure specified in a standard document TS. 43. The ODSA information as shown in Table 1 may be implemented to be similar to or substantially the same as the ODSA information specified in the standard document TS. 43, so a detailed description thereof will be omitted herein.

**<Table 1>**

| ODSA operation | Description |
|---|---|
| CheckEligibility | To verify if end-user is allowed to invoke the ODSA application |
| ManageSubscription | To request for subscription-related action on a primary or companion device. |
| ManageService | To activate / deactivate the service on the primary or companion device. |
| AcquireConfiguration | To provide service-related data about a primary or companion device |
| AcquirePlan | To request available plans to be offered by the MNO to an specific user or MDM |
| AcquireTemporaryToken | To request a Temporary Token from the ECS, to allow authentication for a device that may not have the means to acquire the TOKEN |

Referring to <Table 1>, the external electronic device 700 may request the eligibility check by transmitting the first request message (e.g., an HTTP REQUEST ("CheckEligibility") message) including "CheckEligibility" as the ODSA operation information to the entitlement server 520, according to the ODSA procedure specified in the standard document TS. 43 in operation 702.

Although not illustrated separately in FIGS. 7A and 7B, the entitlement server 520 may transmit a profile query to a BSS/OSS (e.g., a BSS/OSS 550 in FIG. 5). The profile query may include subscription identity information (e.g., an "SubscriptionID"). The BSS/OSS may transmit a profile answer corresponding to the profile query to the entitlement server 520.

The entitlement server 520 which receives the first request message including CheckEligibility as the ODSA operation information from the external electronic device 700 may perform the eligibility check for the electronic device 101 based on the first request message including CheckEligibility as the ODSA operation information in operation 703.

If a result of the eligibility check for the electronic device 101 indicates success, the entitlement server 520 may, in operation 703, transmit a 200 OK message (e.g., an HTTP 200 OK message) as a response message to the first request message to the external electronic device 700. In FIGS. 7A and 7B, it will be assumed that the result of the eligibility check for the electronic device 101 indicates the success, and if the result of the eligibility check for the electronic device 101 indicates failure, no further operations may be performed. In an embodiment, if the result of the eligibility check indicates the success, the 200 OK message may include information of "ENABLED."

The external electronic device 700 which receives the 200 OK message from the entitlement server 520 may request temporary authentication information (e.g., a temporary token) which may be used by the electronic device 101 by transmitting a second request message (e.g., an HTTP REQUEST ("AcquireTemporaryToken") message) including "AcquireTemporaryToken" as ODSA operation information to the entitlement server 520 in operation 704. In an embodiment, the temporary authentication information may be temporary authentication information related to an ongoing ODSA procedure (e.g., an ongoing profile transfer procedure).

The entitlement server 520 which receives the second request message including AcquireTemporaryToken as the ODSA operation information from the external electronic device 700 may generate the temporary token based on the second request message including AcquireTemporaryToken as the ODSA operation information in operation 705. The entitlement server 520 may generate the temporary token if the electronic device 101 is permitted to use subscription (or a profile) for the external electronic device 700. In FIGS. 7A and 7B, it will be assumed that the electronic device 101 is permitted to use the subscription (or the profile) for the external electronic device 700, and if the electronic device 101 is not permitted to use the subscription (or the profile) for the external electronic device 700, no further operations may be performed.

The entitlement server 520 which generates the temporary token may, in operation 705, transmit a 200 OK message (e.g., an HTTP 200 OK (TemporaryToken) message) including the temporary token as a response message to the second request message to the external electronic device 700.

The external electronic device 700 which receives the 200 OK message including the temporary token from the entitlement server 520 may transmit a message including the temporary token to the electronic device 101 in operation 706. For example, operation 706 is illustrated as "TemporaryToken".

The electronic device 101 which receives the message including the temporary token from the electronic device 101 may generate the first identifier (e.g., the OdsaEventID) associated with the ongoing ODSA procedure (e.g., the ongoing profile transfer procedure) in operation 707. In an embodiment, the first identifier may be an identifier for identifying the ongoing ODSA procedure. In an embodiment, a generation rule (or a generation function) for generating the first identifier may be implemented in various forms.

The electronic device 101 which generates the first identifier may, in operation 708, transmit a third request message (e.g., an HTTP REQUEST ("ManageSubscription") message) which includes "ManageSubscription" as ODSA operation information and includes the first identifier (e.g., the OdsaEventID) to the entitlement server 520. In an embodiment, the third request message may be a message for requesting a subscription management operation. In an embodiment, the subscription management operation may include various operations related to subscription.

In an embodiment, the third request message may include the ODSA operation information of "ManageSubscrition" as expressed in Table 2. The "ManageSubscrition" may be ODSA operation information used for requesting a subscription-related operation. According to an embodiment, the third request message may include operation type (operation_type) information as shown in Table 2 below. The operation type information as expressed in Table 2 may be implemented to be similar to or substantially the same as an operation type information specified in the standard document TS. 43, so a detailed description thereof will be omitted herein.

**<Table 2>**

| Parameter | Type | Values | Description |
|---|---|---|---|
| operation_type | Integer | Used by the | ManageSubscription operation. |
| | | 0 - SUBSCRIBE | to activate a subscription for the eSIM device. |
| | | 1 - UNSUBSCRIBE | to cancel a subscription for the eSIM device. |
| | | 2 - CHANGE SUBSCRIPTION | to manage an existing subscription on the eSIM device. |
| | | 3 - TRANSFER SUBSCRIPTION | to transfer a subscription from an existing device (with physical SIM or eSIM) to the eSIM device |
| | | 4 - UPDATE SUBSCRIPTION | to inform the network of a subscription update on the eSIM device |
| | | 5 - ACTIVATE TERMINAL ICCID | to inform the network that the terminal_iccid or companion_terminal_iccid which is in a ServiceStatus DEACTIVATED state can be moved to an ACTVATED state |
| | | 6 - DEACTIVATE TERMINAL ICCID | to inform the network that the terminal_iccid or companion_terminal_iccid which is in a ServiceStatus ACTIVATED state can be moved to a DEACTIVATED state |
| | | Used by the ManageService operation. | |
| | | 10 - ACTIVATE SERVICE | Indicates this is a request to activate a service on the eSIM device. |
| | | 11 - DEACTIVATE SERVICE | Indicates this is a request to deactivate a service on the eSIM device. |

Referring to <Table 2>, the third request message including the "ManageSubscription" in <Table 1> as the ODSA operation information may include one of operation types of "SUBSCRIBE", "UNSUBSCRIBE", "CHANGE SUBSCRIPTION", "TRANSFER SUBSCRIPTION", "UPDATE SUBSCRIPTION", "ACTIVATE TERMINAL ICCID", "DEACTIVATE TERMINAL ICCID", "ACTIVATE SERVICE", and/or "DEACTIVATE SERVICE."

The third request message may include the operation type having a value of "3-TRANSFER SUBSCRIPTION" in Table 2, and "TRANSFER SUBSCRIPTION" may be an operation type for transferring a subscription (e.g., a profile) of an existing electronic device (e.g., the external electronic device 700) having an eSIM to another electronic device (e.g., the electronic device 101) having an eSIM.

The entitlement server 520 which receives the third request message from the electronic device 101 may, in operation 709, store the first identifier (e.g., the OdsaEventID) included in the third request message.

The entitlement server 520 which stores the first identifier (e.g., the OdsaEventID) may, in operation 710, cooperate with the SM-DP+ server 530 to prepare a profile to be downloaded to the electronic device 101. For example, operation 710 is illustrated as "ES2+ Exchnage."

In an embodiment, the entitlement server 520 may update the first identifier (e.g., the OdsaEventID) if necessary. Meanwhile, although not separately illustrated in FIGS. 7A and 7B, the entitlement server 520 may transmit subscription query to the BSS/OSS 550. The subscription query may include subscription identity information (e.g., a "SubscriptionID") or an international mobile equipment identity (IMEI) of the electronic device 101. In response to reception of the subscription query, the BSS/OSS 550 may transmit a subscription answer message to the entitlement server 520. According to an embodiment, the subscription answer message may include address information (e.g., uniform resource locator (URL) information) which may access a web server. In response to reception of the subscription answer message, the entitlement server 520 may transmit the address information (e.g., the uniform resource locator (URL) information) which may access the web server to the electronic device 101. The electronic device 101 which receives the address information (e.g., the URL information) which may access the web server from the entitlement server 520 may display a webpage based on the address information and acquire user consent to profile transfer.

If time required to prepare the profile to be downloaded to the electronic device 101 in cooperation with the SM-DP+ server 530 is longer than or equal to threshold time, the entitlement server 520 may, in operation 711, transmit a 200 OK message (e.g., an HTTP 200 OK ("SubscriptionResult = 4 - DELAYED DOWNLOAD) message) as a response message to the third request message to the electronic device 101. The 200 OK message as the response message to the third request message may include subscription result ("SubscriptionResult") information in Table 3 below. The subscription result information as expressed in Table 3 may be implemented to be similar to or substantially the same as subscription result information specified in the standard document TS. 43, so a detailed description thereof will be omitted herein.

**<Table 3>**

| Parameter | Type | Values | Description |
|---|---|---|---|
| SubscriptionResult (Mandatory) | Integer | 1 - CONTINUE TO WEBSHEET | Indicates that end-user must go through the subscription web view procedure, using information included below. |
| | | 2 - DOWNLOAD PROFILE | Indicates that an eSIM profile must be downloaded by the device, with further information included in response |
| | | 3 - DONE | Indicates that subscription flow has ended, and the end-user has already downloaded the eSIM profile so there is no need to perform any other action. |
| | | 4 - DELAYED DOWNLOAD | Indicates that an eSIM profile is not ready to be downloaded when a user requests to transfer subscription or to add the new subscription through native UX on the eSIM device. |
| | | 5 - DISMISS | Indicates that subscription flow has ended without completing the ODSA procedure. An eSIM profile is not available. |
| | | 6 - DELETE PROFILE IN USE | Indicates that the profile in use needs to be deleted to complete the subscription transfer. |
| | | 7 - REDOWNLOADA BLE PROFILE IS MANDATORY | Indicates that implementing redownloadable profile is mandatory. If device is not able to support this, it should end the process. This parameter only applies when operation_type=3 (transfer subscription) |
| | | 8 - REQUIRES USER INPUT | Indicates that user input without a webview is required in order to complete the operation _type requested with the information submitted to the ECS. |

The response message (e.g., the 200 OK message) to the third request message related to the subscription management operation may include one of subscription result information ("SubscriptionResult") of "CONTINUE TO WEBSHEET", "DOWNLOAD PROFILE", "DONE", "DELAYED DOWNLOAD", "DISMISS", "DELETE PROFILE IN USE", "REDOWNLOADABLE PROFILE IS MANDATORY", and/or "REQUIRES USER INPUT", as expressed in Table 3. For example, the 200 OK message which is the response message to the third request message may include the "DELAYED DOWNLOAD". As expressed in Table 3, the DELAYED DOWNLOAD may be subscription result information indicating that a profile is not ready to be downloaded (for example, indicating a delayed download) when a user (e.g., the electronic device 101) requests the subscription transfer (or the profile transfer). If the entitlement server 520 updates the first identifier (e.g., the OdsaEventID), the response message (e.g., the 200 OK message) to the third request message may include an updated first identifier.

Although not illustrated separately in FIGS. 7A and 7B, if the electronic device 101 displays the web page based on the address information received from the entitlement server 520, the entitlement server 520 may inform the electronic device 101 of the subscription result information indicating the DELAYED DOWNLOAD via a JavaScript (JS) callback.

The electronic device 101 which receives the response message to the third request message from the entitlement server 520 may transmit, to the entitlement server 520, a fourth request message for requesting to provide service-related data for a primary device (e.g., the external electronic device 700) or a companion device in operation 712. For example, the fourth request message may include ODSA operation information set to "AcquireConfiguration" and the first identifier. For example, the fourth request message may be an HTTP REQUEST ("AcquireConfiguration", "OdsaEventID") message.

The entitlement server 520 which receives the fourth request message from the electronic device 101 may transmit a 200 OK message which is a response message to the fourth request message to the electronic device 101 in operation 713. The 200 OK message which is the response message to the fourth request message may include any one of ServiceStatus information indicating service status, as expressed in Table 4 below. For example, the 200 OK message which is the response message to the fourth request message may include "2 - ACTIVATING." The service status information as expressed in Table 4 may be implemented to be similar to or substantially the same as service status information specified in the standard document TS. 43, so a detailed description thereof will be omitted herein.

**<Table 4>**

| Parameter | Type | Values | Description |
|---|---|---|---|
| ServiceStatus (M) | Integer | 1 - ACTIVA TED | eSIM device's service is activated. |
| | | 2 - ACTIVATING | eSIM device's service is being activated. |
| | | 3 - DEACTIVATED | eSIM device's service is not activated. |
| | | 4 - DEACTIVATED, NO REUSE | eSIM device's service is not activated and the associated ICCID should not be reused. |

As expressed in Table 4, "2 - ACTIVATING" may indicate that a service of an eSIM device (e.g., the electronic device 101) will be activated.

The electronic device 101 which receives the 200 OK message from the entitlement server 520 may know that a service (e.g., profile download) for the electronic device 101 will be activated, and thus may wait for profile preparation to be completed in operation 714.

The entitlement server 520 which transmits the 200 OK message which is the response message to the fourth request message to the electronic device 101 may, in operation 715, generate a second identifier (e.g., a MatchingID) related to the ongoing ODSA procedure (e.g., the ongoing profile transfer procedure) if the profile is ready. In an embodiment, the second identifier may be an identifier used for identifying an event (e.g., the ongoing ODSA procedure (e.g., the ongoing profile transfer procedure)) between the entitlement server 520 and the SM-DP+ server 530. In an embodiment, the MatchingID may be implemented to be similar to or substantially the same as a MatchingID specified in a GSMA standard document SPG. 22, so a detailed description thereof will be omitted herein.

The entitlement server 520 which generates the second identifier may transmit the generated second identifier to the SM-DP+ server 530 in operation 715. In FIGS. 7A and 7B, a case that the entitlement server 520 generates the second identifier has been described as an example, however, the second identifier may also be generated by the SM-DP+ server 530. If the second identifier is generated by the SM-DP+ server 530, the SM-DP+ server 530 may transmit the generated second identifier to the entitlement server 520. In this case, the entitlement server 520 may update the first identifier to the second identifier and transmit the updated first identifier to the electronic device 101, thereby enabling the electronic device 101 to use the second identifier as the first identifier.

In an embodiment, a generation rule (or a generation function) for generating the second identifier may be implemented in various forms. In an embodiment, the generation rule for generating the second identifier may be based on the first identifier, and this will be described in more detail as follows.

### (1) First generation rule

The first generation rule may be a rule for generating the first identifier (e.g., the OdsaEventID) as the second identifier.

### (2) Second generation rule

The second generation rule may be a rule for generating the second identifier by concatenating a first value generated by the entitlement server 520 or the SM-DP+ server 530 and a set delimiter (e.g., "-"), and the first identifier. For example, if the first identifier (the OdsaEventID) is "ABCD1" and the first value generated by the entitlement server 520 or the SM-DP+ server 530 is "EFGH2", the second identifier (the MatchingID) may be generated as "ABCD1-EFGH2." The second generation rule may be changed according to a regulation between electronic devices (e.g., the electronic device 101) and a communication carrier.

### (3) Third generation rule

The third generation rule may be a rule for generating the second identifier by concatenating a prefix (e.g., "OE05") for detecting the first identifier, the first identifier, and the first value generated by the entitlement server 520 or the SM-DP+ server 530. For example, if the first identifier (the OdsaEventID) is "ABCD1", the first value generated by the entitlement server 520 or the SM-DP+ server 530 is "EFGH2", and the prefix capable of detecting the first identifier is "OE05", the second identifier (the MatchingID) may be generated as "OE05ABCD1EFGH2." For example, the prefix "OE05" may indicate that the OdsaEventID is a five-digit number, so it may be known that the five-digit number immediately following the prefix "OE05" is the OdsaEventID. The third generation rule may be changed according to a regulation between the electronic devices (e.g., the electronic device 101) and the communication carrier.

The second identifier generated based on the first to third generation rules may be expressed as shown in Table 5 below.

**<Table 5>**

| OdsaEventID | MatchingID |
|---|---|
| ABCD1 | ABCD1 |
| ABCD 1 | ABCD1-EFGH2 |
| ABCD1 | OE05ABCD1EFGH2 |

The SM-DP+ server 530 which receives the second identifier from the entitlement server 520 may generate a third identifier (e.g., an EventID) associated with the ongoing ODSA procedure (e.g., the ongoing profile transfer procedure) in operation 716. In an embodiment, the third identifier may be an identifier used for identifying an event (e.g., an ongoing ODSA procedure (e.g., an ongoing profile transfer procedure)) between the SM-DP+ server 530 and the SM-DS 560. In an embodiment, the EventID may be implemented to be similar to or substantially the same as an EventID specified in the GSMA standard document SPG. 22. In an embodiment, a generation rule (or a generation function) for generating the third identifier may be implemented in various forms. For example, the second identifier (e.g., the MatchingID) as it is may be generated as the third identifier.

The SM-DP+ server which generates the third identifier may call an ES12.RegisterEvent function in operation 717. In an embodiment, the ES12.RegisterEvent function may include an eUICC identifier (EID) of the electronic device 101, an address of a remote SIM provisioning (RSP) server of the SM-DP+ server 530, and/or the third identifier (e.g., the EventID). The ES12.RegisterEvent function may be implemented to be similar to or substantially the same as an ES12.RegisterEvent function specified in the GSMA standard document SPG. 22.

As the SM-DP+ server 530 calls the ES12.RegisterEvent function, the SM-DS 560 may store the third identifier (e.g., the EventID) in operation 718. The SM-DS 560 which stores the third identifier (e.g., the EventID) may transmit an OK message to the SM-DP+ server 530 in operation 719. In an embodiment, operation 719 may be omitted as needed.

Although not illustrated in FIGS. 7A and 7B, if the profile preparation is completed, the entitlement server 520 may inform the SM-DS 560 and the electronic device 101 that the profile preparation is completed. The SM-DS 560 which identifies that the profile preparation is completed may inform the electronic device 101 that the profile preparation is completed via a push message, and the entitlement server 520 may also inform the electronic device 101 that the profile preparation is completed via a push message. Which push message among the push message transmitted from the entitlement server 520 and the push message transmitted from the SM-DS 560 arrives at the electronic device 101 first may vary based on a network environment and/or operations of the entitlement server 520 and the SM-DS 560. In FIGS. 7A and 7B, it will be assumed that the push message transmitted from the SM-DS 560 arrives at the electronic device 101 before the push message transmitted from the entitlement server 520.

The SM-DS 560 which identifies that the profile preparation is completed may transmit a push message including information indicating that the profile is ready to the electronic device 101 in operation 720. In an embodiment, the push message may include the third identifier (e.g., the EventID) or may not include the third identifier (the e.g., EventID). In operation 720, it will be assumed that the push message does not include the third identifier (e.g., the EventID).

The electronic device 101 which receives, from the SM-DS 560, the push message which does not include the third identifier (e.g., the EventID) may, in operation 721, transmit a query message to the SM-DS 560. In an embodiment, the query message may be a message for querying the address of the SM-DP+ server 530 and the third identifier (e.g., the EventID). The SM-DS 560 which receives the query message from the electronic device 101 may, in operation 722, transmit a response message (e.g., a Response message) to the query message. In an embodiment, the Response message may include download information (e.g., the address of the SM-DP+ server 530) and the third identifier (e.g., the EventID). The address of the SM-DP+ server 530 may represent the address of the SM-DP+ server 530 from which the electronic device 101 may acquire (for example, may download) a profile (e.g., a new profile). In an embodiment, the download information may include not only the address of the SM-DP+ server 530 but also download information ("Download Info") in Table 6 below. The download information as expressed in Table 6 may be implemented to be similar to or substantially the same as download information specified in the standard document TS. 43, so a detailed description thereof will be omitted herein.

**<Table 6>**

| Download Info | Type | Values | Description |
|---|---|---|---|
| ProfileIccid (Conditional) | String | ICCID of the eSIM profile to download from SM-DP+ | The ICCID shall be included in the case where ProfileSmdpAddress is used to trigger the profile download. Can be a new ICCID or the re-usable ICCID that was provided in the request parameter companion_terminal_iccid or target_terminal_iccid |
| ProfileSmdpAddress (Conditional) | String | FQDN to SM-DP+ platform of MNO | Address(es) of SM-DP+ to obtain eSIM profile. If more than one, they must be comma-separated. It is not needed if ProfileActivationCode is present. Note: for this download method to be used, the client must provide the EID of the eSIM in the request, as either terminal_eid, companion _terminal_eid or target _terminal_eid as defined in Table 27. |
| ProfileActivationCode (Conditional) | String | Encoded in Base64. Must follow the activation code format from GSMA SGP.22 | Activation code as defined in SGP.22 to permit the download of an eSIM profile from an SM-DP+. It is not needed if ProfileSmdpAddress is present. |

In FIGS. 7A and 7B, the Response message is expressed as Response (Smdpaddress, "EventID"). If the push message transmitted in operation 720 includes the address of the SM-DP+ server 530 and the third identifier (e.g., the EventID), operations 721 and 722 may be omitted.

The electronic device 101 which receives the Response message from the SM-DS 560 may, in operation 723, identify (for example, may derive) the first identifier (e.g., the OdsaEventID) from the third identifier (e.g., the EventID) included in the received Response message. In an embodiment, the electronic device 101 knows in advance the generation rule (or the generation function) for generating the second identifier and the generation rule (or the generation function) for generating the third identifier, and therefore may derive the first identifier (e.g., the OdsaEventID) from the third identifier (e.g., the EventID) based on the generation rule for generating the second identifier and the generation rule for generating the third identifier. The electronic device 101 may know in advance the generation rule for generating the second identifier and the generation rule for generating the third identifier before receiving the push message including the address of the SM-DP+ server 530 and the third identifier (e.g., the EventID) or the Response message including the address of the SM-DP+ server 530 and the third identifier (e.g., the EventID). Alternatively, the electronic device 101 may know in advance a derivation rule (or a derivation function) which may derive the first identifier (e.g., the OdsaEventID) from the third identifier (e.g., the EventID), and thus may derive the first identifier (e.g., the OdsaEventID) from the third identifier (e.g., the EventID) based on the derivation rule.

The electronic device 101 may know the derivation rule in advance before receiving the push message including the address of the SM-DP+ server 530 and the third identifier (e.g., the EventID) or the Response message including the address of the SM-DP+ server 530 and the third identifier (e.g., the EventID).

The electronic device 101 which derives the first identifier (e.g., the OdsaEventID) from the third identifier (e.g., the EventID) may identify whether the derived first identifier (e.g., the derived OdsaEventID) is identical to the first identifier generated in operation 707. As a result of the identification, if the derived first identifier is identical to the first identifier generated in operation 707, the electronic device 101 may identify whether another push message including the derived first identifier is received before receiving the answer message in operation 723. In an embodiment, the other push message may represent a push message received before operation 720. For example, the electronic device 101 which acquires the first identifier (e.g., the OdsaEventID) from the third identifier (e.g., the EventID) may identify whether the other push message including the first identifier which is identical to the first identifier (e.g., the OdsaEventID) acquired before receiving the push message.

As the result of the identification, if the other push message including the same first identifier as the acquired first identifier (e.g., the acquired OdsaEventID) is not received, the electronic device 101 may perform an operation corresponding to an ODSA procedure (e.g., a profile transfer procedure) corresponding to the first identifier. The operation corresponding to the profile transfer procedure corresponding to the first identifier may include an operation (e.g., operation 724) of displaying a notification message indicating that a user input is required to start the profile transfer (e.g., to start downloading the profile), an operation (e.g., operation 730) of identifying a user input indicating to start the profile transfer (e.g., to start downloading the profile), and/or an operation (e.g., operation 731) of acquiring (for example, downloading) the profile from the SM-DP+ server 530.

As the result of the identification in operation 723, if the other push message including the first identifier identical to the acquired first identifier (e.g., the acquired OdsaEventID) is not received, the electronic device 101 may, in operation 724, display a notification message indicating that the user input for starting the profile transfer is required.

The electronic device 101 which displays the notification message may, in operation 730, identify the user input indicating to start the profile transfer.

The electronic device 101 which identifies the user input indicating to start the profile transfer may acquire (for example, may download) the profile from the SM-DP+ server 530 in operation 731.

Alternatively, if the other push message including the first identifier which is identical to the first identifier (e.g., the OdsaEventID) acquired from the third identifier (e.g., the EventID) is received, the electronic device 101 may not perform the operation corresponding to the ODSA procedure (e.g., the profile transfer procedure) corresponding to the first identifier (for example, may refrain from performing the operation corresponding to the ODSA procedure (e.g., the profile transfer procedure) corresponding to the first identifier).

As described above, after the push message transmitted from the SM-DS 560 arrives at the electronic device 101 before the push message transmitted from the entitlement server 520, in operation 725, the push message transmitted from the entitlement server 520 may arrive at the electronic device 101. The push message in operation 725 may include the first identifier (e.g., the OdsaEventID).

The electronic device 101 which receives the push message from the entitlement server 520 may acquire the first identifier (e.g., the OdsaEventID) from the third identifier (e.g., the EventID) included in the received push message in operation 726.

The electronic device 101 which acquires the first identifier (e.g., the OdsaEventID) from the third identifier (e.g., the EventID) may identify whether another push message including a first identifier which is identical to the first identifier (e.g., the OdsaEventID) acquired before receiving the push message is received in operation 726. For example, operation 726 is expressed as ""compare "OdsaEventID" manage it as duplicated push event".

As a result of the identification, if the other push message including the first identifier which is identical to the acquired first identifier (e.g., the acquired OdsaEventID) is received, the electronic device 101 may not perform the operation corresponding to the ODSA procedure (e.g., the profile transfer procedure) corresponding to the first identifier in operation 726. In an embodiment, the reception of the other push message including the first identifier which is identical to the acquired first identifier (e.g., the acquired OdsaEventID) may indicate that a push message for the same ODSA procedure (e.g., the same profile transfer procedure) has already been received, and thus, the operation corresponding to the ODSA procedure (e.g., the profile transfer procedure) corresponding to the first identifier has already been started or has already been performed. In an embodiment, the reception of the other push message including the first identifier which is identical to the acquired first identifier (e.g., the acquired OdsaEventID) may indicate that a plurality of push messages including the same first identifier have been received. In an embodiment, the reception of the other push message including the first identifier which is identical to the acquired first identifier (e.g., the acquired OdsaEventID) may indicate that push messages including the same first identifier have been received redundantly.

Alternatively, after the push message transmitted from the SM-DS 560 arrives at the electronic device 101 before the push message transmitted from the entitlement server 520, in operation 727, the push message transmitted from the entitlement server 520 may arrive at the electronic device 101. The push message in operation 727 may include the first identifier (e.g., the OdsaEventID).

The electronic device 101 which receives the push message from the entitlement server 520 may acquire the first identifier (e.g., the OdsaEventID) from the third identifier (e.g., the EventID) included in the received push message in operation 728.

The electronic device 101 which acquires the first identifier (e.g., the OdsaEventID) from the third identifier (e.g., the EventID) may identify whether another push message including a first identifier which is identical to the first identifier (e.g., the OdsaEventID) acquired before receiving the push message is received in operation 728. For example, operation 728 is expressed as "compare "OdsaEventID" manage it as duplicated push event."

As the result of the identification, if the other push message including the same first identifier as the acquired first identifier (e.g., the acquired OdsaEventID) is not received, the electronic device 101 may perform an operation corresponding to an ODSA procedure (e.g., a profile transfer procedure) corresponding to the first identifier. A case that the other push message including the same first identifier as the acquired first identifier (e.g., the acquired OdsaEventID) is not received may indicate that the acquired first identifier (e.g., the acquired OdsaEventID) is the first identifier for another ODSA procedure. The operation corresponding to the profile transfer procedure corresponding to the first identifier may include an operation (e.g., operation 729) of displaying a notification message indicating that a user input is required to start the profile transfer, an operation of identifying a user input indicating to start the profile transfer, and/or an operation of acquiring the profile from the SM-DP+ server 530. In an embodiment, the operation of identifying the user input indicating to start the profile transfer may be implemented to be similar to or substantially the same as operation 730, so a detailed description thereof will be omitted. In an embodiment, the operation of acquiring (for example, downloading) the profile from the SM-DP+ server 530 may be implemented to be similar to or substantially the same as operation 731, so a detailed description thereof will be omitted.

In FIGS. 7A and 7B, a case that the electronic device 101 generates the first identifier (e.g., the OdsaEventID) has been described as an example, but the first identifier may also be generated by the entitlement server 520. In an embodiment, the entitlement server 520 may generate the first identifier and transmit the first identifier to the electronic device 101 before the electronic device 101 transmits the third request message including the "ManageSubscription" which is the ODSA operation information. For example, the entitlement server 520 may generate the first identifier at any time before the electronic device 101 transmits the third request message including the "ManageSubscription" which is the ODSA operation information, and transmit the generated first identifier to the electronic device 101 to cause the electronic device 101 to include the first identifier in the third request message including the "ManageSubscription" which is the ODSA operation information. Alternatively, after receiving the third request message including the "ManageSubscription" which is the ODSA operation information from the electronic device 101, the entitlement server 520 may generate the first identifier and transmit the first identifier to the electronic device 101 in response to the "ManageSubscription." In an embodiment, there may be no limitation on a format of a message for the entitlement server 520 to transmit the first identifier to the electronic device 101.

In FIGS. 7A and 7B, a case that, when receiving the push message from the SM-DS 560 in operation 720, the electronic device 101 queries the address of the SM-DP+ server 530 and the third identifier (e.g., the EventID) by transmitting the query message to the SM-DS 560 in operation 721 has been described as an example, however, if the SM-DS 560 includes the address of the SM-DP+ server 530 and the third identifier (e.g., the EventID) in the push message, operations 721 and 722 may be omitted.

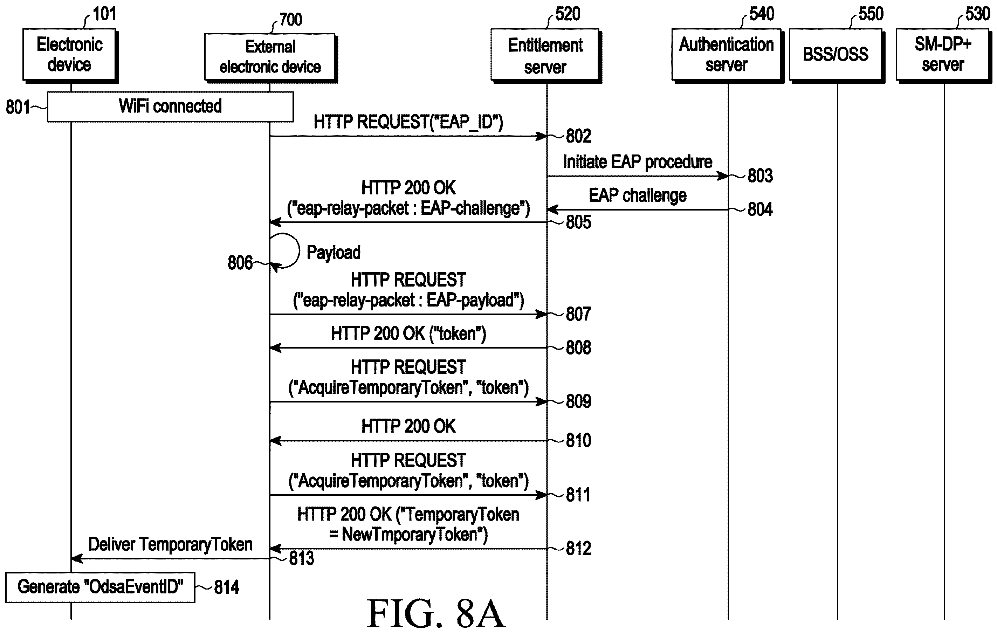

FIG. 8A is a signal flow diagram illustrating an ODSA procedure in a wireless communication network according to an embodiment.

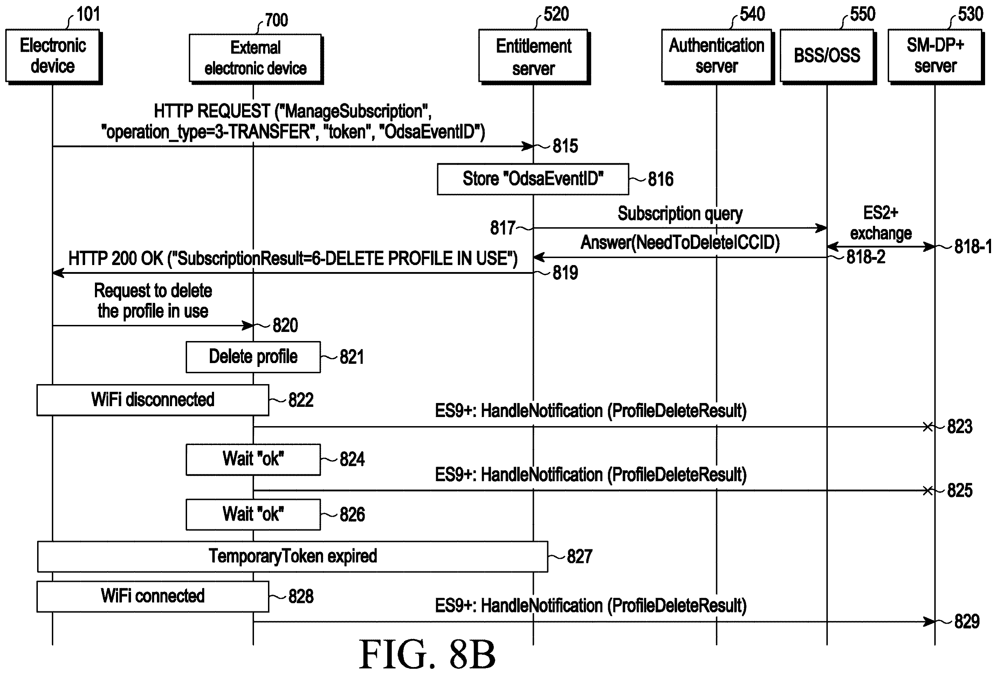

FIG. 8B is a signal flow diagram illustrating an ODSA procedure in a wireless communication network according to an embodiment.

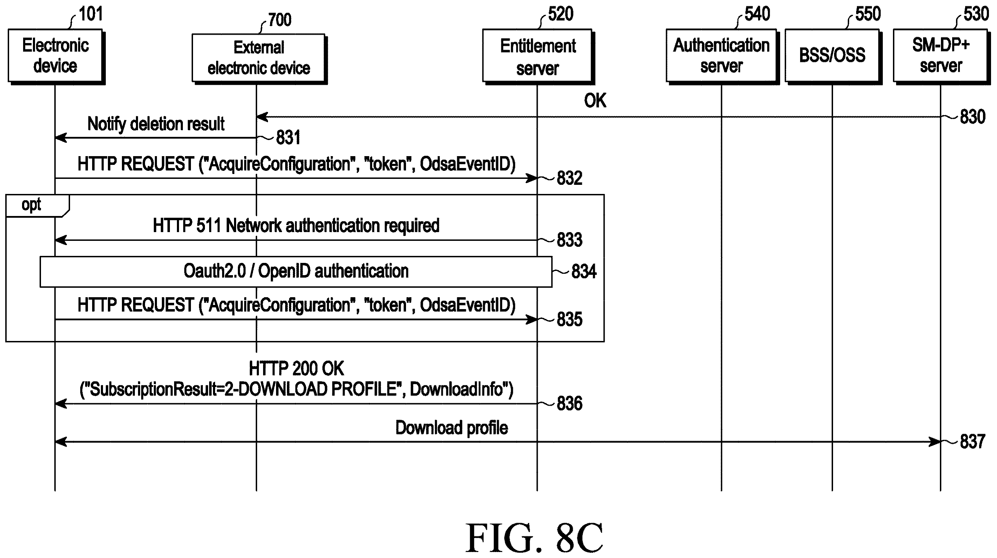

FIG. 8C is a signal flow diagram illustrating an ODSA procedure in a wireless communication network according to an embodiment.

Referring to FIGS. 8A to 8C, a wireless communication network may include an electronic device 101 (e.g., an electronic device 101 in FIGS. 1A, 1B, 2, 3, and/or 5), an external electronic device 700 (e.g., an electronic device 102 and/or an electronic device 104 in FIG. 1A), an entitlement server 520 (e.g., an entitlement server 520 in FIG. 5), an SM-DP+ server 530 (e.g., an SM-DP+ server 220 in FIG. 2 and/or an SM-DP+ server 530 in FIG. 5), an authentication server 540 (e.g., an authentication server 540 in FIG. 5), a BSS/OSS 550 (e.g., a BSS/OSS 550 in FIG. 5), and/or an SM-DS 560 (e.g., an SM-DS 210 in FIG. 2 and/or an SM-DS 560 in FIG. 5). The external electronic device 700 may be an existing electronic device which has stored a profile (e.g., an existing profile) associated with subscription, and the electronic device 101 may be a new electronic device which will download a profile (e.g., a new profile) associated with subscription. An ODSA procedure illustrated in FIGS. 8A to 8C may include a profile transfer (or subscription transfer or line transfer) procedure between electronic devices.

In operation 801, the external electronic device 700 and the electronic device 101 may be connected to a data network based on a WiFi scheme (WiFi Connected). In an embodiment, a case that the external electronic device 700 and the electronic device 101 are connected to the data network based on the WiFi scheme will be described as an example, but the external electronic device 700 and the electronic device 101 may be connected to the data network based on various short-range communication schemes as well as the WiFi scheme.

In operation 802, the external electronic device 700 may identify a user input associated with the profile transfer between the electronic devices (e.g., the user input for selecting the profile transfer (or the subscription transfer or the line transfer) between the electronic devices). For example, the external electronic device 700 may output (for example, display) a UI (e.g., a profile transfer menu between the electronic devices) for selecting the profile transfer between the electronic devices, and may identify the user input via the UI. The UI may include information indicating the intent of selecting to transfer a profile of the external electronic device 700 to the electronic device 101, or may include information indicating the intent of selecting to transfer a profile (or subscription or a line) from the external electronic device 700 to the electronic device 101 for intuitive recognition by a user.

Based on the user input for selecting the profile transfer between the electronic devices, the external electronic device 700 may transmit, to the entitlement server 520, a first request message for requesting to transfer a profile (or subscription or a line) in operation 802. The first request message may include an extensible authentication protocol (EAP) identifier (EAP_ID) and device information of the electronic device 101. For example, the first request message may be an HTTP REQUEST message, and in FIGS. 8A to 8C, the first request message is expressed as HTTP REQUEST ("EAP _ID"). Although a case that an authentication process between the external electronic device 700 and the entitlement server 520 is an EAP-AKA authentication process will be described as an example in FIGS. 8A to 8C, there may be no limitation on the authentication process between the external electronic device 700 and the entitlement server 520. In an embodiment, the EAP-AKA authentication process may represent an authentication process based on an EAP-AKA scheme.

The entitlement server 520 which receives the first request message from the external electronic device 700 may detect an EAP capability of the electronic device 101 based on the first request message and initiate an EAP procedure with the authentication server 540 in operation 803. For example, operation 803 is illustrated as "initiate EAP procedure."

The entitlement server 520 which initiates the EAP procedure with the authentication server 540 may identify (for example, acquire) an EAP challenge (EAP Challenge) from the authentication server 540 in operation 804. For example, operation 804 is illustrated as "EAP Challenge."

The entitlement server 520 which acquires the EAP Challenge from the authentication server 540, may transmit a 200 OK message (e.g., an HTTP 200 OK message) as a response message to the first request message to the external electronic device 700 in operation 805. In an embodiment, the 200 OK message may include the EAP-challenge as an eap-relay-packet. For example, operation 805 is illustrated as "HTTP 200 OK ("eap-relay-packet: EAP-challenge")."

The external electronic device 700 which receives the 200 OK message from the entitlement server 520 may generate a payload (e.g., an EAP-payload) based on the received 200 OK message in operation 806.

The external electronic device 700 which generates the payload may perform the EAP-AKA authentication process with the entitlement server 520, so the external electronic device 700 may transmit a second request message including the eap-relay-packet as the EAP-payload to the entitlement server 520 in operation 807. For example, the second request message may be an HTTP REQUEST message. For example, the second request message may be an HTTP REQUEST ("eap-relay-packet: EAP-payload") message.

The entitlement server 520 which receives the second request message from the external electronic device 700 may, in operation 808, transmit a 200 OK message including authentication information (e.g., a token) to the external electronic device 700 if a result of the EAP-AKA authentication process for the external electronic device 700 indicates success. For example, the 200 OK message may be an HTTP 200 OK message. For example, the 200 OK message may be an "HTTP 200 OK ("token")" message.

The external electronic device 700 which acquires the authentication information may perform an eligibility check with the entitlement server 520 in order to transfer the profile of the external electronic device 700 to the electronic device 101 in operation 809. The external electronic device 700 may request the eligibility check for the electronic device 101 from the entitlement server 520 based on an HTTP GET scheme or an HTTP POST scheme. For example, the external electronic device 700 may request the eligibility check for the electronic device 101 by transmitting a third request message for requesting the eligibility check to the entitlement server 520. According to an embodiment, the third request message may be a request message for requesting the eligibility check, for example, an HTTP REQUEST message.

The external electronic device 700 may transmit the third request message including any one of ODSA operation information to the entitlement server 520 according to an ODSA procedure specified in a standard document TS. 43. The ODSA operation information has been described in Table 1, so a detailed description thereof will be omitted herein.

The external electronic device 700 may request the eligibility check by transmitting the third request message including "CheckEligibility" as the ODSA operation information to the entitlement server 520, according to the ODSA procedure specified in the standard document TS. 43 in operation 809. In an embodiment, the third request message may include the authentication information (e.g., the token) acquired from the entitlement server 520. For example, the third request message may be an HTTP REQUEST ("CheckEligibility", "token") message.

Although not illustrated separately in FIGS. 8A to 8C, the entitlement server 520 may transmit a profile query to a BSS/OSS 550. The profile query may include subscription identity information (e.g., "SubscriptionID"). The BSS/OSS 550 may transmit a profile answer corresponding to the profile query to the entitlement server 520.

The entitlement server 520 which receives the third request message including CheckEligibility as the ODSA operation information from the external electronic device 700 may perform the eligibility check for the electronic device 101 based on the third request message including CheckEligibility as the ODSA operation information in operation 810.

If a result of the eligibility check for the electronic device 101 indicates success, the entitlement server 520 may, in operation 810, transmit a 200 OK message (e.g., an HTTP 200 OK message) as a response message to the third request message to the external electronic device 700. In FIGS. 8A to 8C, it will be assumed that the result of the eligibility check for the electronic device 101 indicates the success, and if the result of the eligibility check for the electronic device 101 indicates failure, no further operations may be performed. In an embodiment, if the result of the eligibility check indicates the success, the 200 OK message may include information of "ENABLED."

The external electronic device 700 which receives the 200 OK message from the entitlement server 520 may request temporary authentication information (e.g., a temporary token) which may be used by the electronic device 101 by transmitting a fourth request message including "AcquireTemporaryToken" as ODSA operation information to the entitlement server 520 in operation 811. In an embodiment, the temporary authentication information may be temporary authentication information related to an ongoing ODSA procedure (e.g., an ongoing profile transfer procedure). In an embodiment, the fourth request message may include authentication information (e.g., a token). For example, the fourth request message may be an HTTP REQUEST ("AcquireTemporaryToken", "token") message.

The entitlement server 520 which receives the fourth request message including AcquireTemporaryToken as the ODSA operation information from the external electronic device 700 may generate the temporary token based on the fourth request message including AcquireTemporaryToken as the ODSA operation information in operation 812. The entitlement server 520 may generate the temporary token if the electronic device 101 is permitted to use subscription (or a profile) for the external electronic device 700. In FIGS. 8A to 8C, it will be assumed that the electronic device 101 is permitted to use the subscription (or the profile) for the external electronic device 700, and if the electronic device 101 is not permitted to use the subscription (or the profile) for the external electronic device 700, no further operations may be performed.

The entitlement server 520 which generates the temporary token may, in operation 812, transmit a 200 OK message (e.g., an HTTP 200 OK ("TemporaryToken = New TemporaryToken") message) including the temporary token as a response message to the fourth request message to the external electronic device 700.

The external electronic device 700 which receives the 200 OK message including the temporary token from the entitlement server 520 may transmit a message including the temporary token to the electronic device 101 in operation 813. For example, operation 813 is illustrated as "Deliver TemporaryToken".

The electronic device 101 which receives the message including the temporary token from the electronic device 101 may generate the first identifier (e.g., the OdsaEventID) associated with the ongoing ODSA procedure (e.g., the ongoing profile transfer procedure) in operation 814. In an embodiment, the first identifier may be an identifier used for identifying the ongoing ODSA procedure. In an embodiment, a generation rule (or a generation function) for generating the first identifier may be implemented in various forms.

The electronic device 101 which generates the first identifier may, in operation 815, transmit a fifth request message (e.g., an HTTP REQUEST ("ManageSubscription") message) which includes "ManageSubscription" as ODSA operation information and includes the first identifier (e.g., the OdsaEventID) to the entitlement server 520. In an embodiment, the fifth request message may be a message for requesting a subscription management operation. In an embodiment, the subscription management operation may include various operations related to subscription.

In an embodiment, the fifth request message may include the ODSA operation information of "ManageSubscrition." The "ManageSubscrition" may be ODSA operation information used for requesting a subscription-related operation. According to an embodiment, the fifth request message may include operation type information, and the operation type information has been described in Table 2, so a detailed description thereof will be omitted herein.

The fifth request message may include the operation type having a value of "3-TRANSFER SUBSCRIPTION" in Table 2 and the authentication information (e.g., the token), and "TRANSFER SUBSCRIPTION" may be an operation type for transferring a subscription (e.g., a profile) of an existing electronic device (e.g., the external electronic device 700) having an eSIM to another electronic device (e.g., the electronic device 101) having an eSIM.

The entitlement server 520 which receives the fifth request message from the electronic device 101 may, in operation 816, store the first identifier (e.g., the OdsaEventID) included in the fifth request message.

The entitlement server 520 which stores the first identifier (e.g., the OdsaEventID) may transmit a subscription query to the BSS/OSS 550 in operation 817. The subscription query may include subscription identity information (e.g., a "SubscriptionID") and may be used for requesting to activate new subscription (or profile) (for example, to activate the new subscription (or profile) for the external electronic device 700).

The BSS/OSS 550 which receives the subscription query from the entitlement server 520 may identify whether a deletion operation is required in operation 818-1. For example, the BSS/OSS 550 may request the new profile from the SM-DP+ server 530 via an ES2+ interface (e.g., DownloadOrder, ConfirmOrder, and ReleaseProfile) in operation 818-1. The SM-DP+ server 530 which identifies the new profile request from the BSS/OSS 550 may identify that a profile in use (e.g., an existing profile) needs to be deleted and may notify the BSS/OSS 550 that the existing profile needs to be deleted.

The BSS/OSS 550 which is notified by the SM-DP+ server 530 that the existing profile needs to be deleted may transmit, to the entitlement server 520, an answer message indicating that the existing profile needs to be deleted in operation 818-2. For example, operation 818-2 is illustrated as "Answer (NeedToDeleteICCID)."

The entitlement server 520 which receives the answer message from the BSS/OSS 550 may identify that the profile in use (e.g., the existing profile) needs to be deleted, and thus may transmit a 200 OK message (e.g., an HTTP 200 OK ("SubscriptionResult = 6 - DELETE PROFILE IN USE") message) as a response message to the fifth request message to the electronic device 101 in operation 819. In an embodiment, "6 - DELETE PROFILE IN USE" may be subscription result information indicating that the profile in use needs to be deleted. The 200 OK message as the response message to the fifth request message may include the subscription result information, and the subscription result information has been described in Table 3, so a detailed description thereof will be omitted herein.

The electronic device 101 which receives the 200 OK message from the entitlement server 520 may identify that the profile in use needs to be deleted, and thus may transmit a message for requesting to delete the profile in use to the external electronic device 700 in operation 820. For example, operation 820 is illustrated as "Request to delete the profile in use."

The external electronic device 700 which receives the message for requesting to delete the profile in use from the electronic device 101 may delete the profile in use in operation 821.

As such, after the external electronic device 700 deletes the profile in use, the connection to the data network based on the WiFi scheme of the electronic device 101 and the external electronic device 700 may be disconnected (WiFi Disconnected). For example, due to various errors such as a case that a network error occurs in a server of the data network, and/or a WiFi connection error, the connection to the data network of the electronic device 101 and the external electronic device 700 may be disconnected.

As such, if the electronic device 101 and the external electronic device 700 are not connected to the data network, it may be impossible for the external electronic device 700 to transmit a message (e.g., a HandleNotification(ProfileDeleteResult) message) indicating that the external electronic device 700 deletes the profile in use to the SM-DP+ server 530, as in operations 823 and 825, or even if the external electronic device 700 transmits the message indicating that the external electronic device 700 deletes the profile is use to the SM-DP+ server 530, it may be impossible for the SM-DP+ server 530 to receive the message indicating that the profile is use is deleted. In this case, the external electronic device 700 may wait to receive an "ok" message in response to the message indicating that the profile in use is deleted, as in operations 824 and 826, however, since the SM-DP+ server 530 may not receive the message indicating that the profile in use is deleted from the external electronic device 700, effective time for temporary authentication information (e.g., a temporary token) may expire, as in operation 827. For example, operation 827 is illustrated as "TemporaryToken expired."

Thereafter, if various reasons such as the case that the network error occurs in the server of the data network, and/or the WiFi connection error are resolved, as in operation 828, the external electronic device 700 and the electronic device 101 may be connected to the data network again based on the WiFi scheme (WiFi Connected). The external electronic device 700 connected to the data network may transmit, to the SM-DP+ server 530, the message (e.g., the HandleNotification (ProfileDeleteResult) message) indicating that the external electronic device 700 deletes the profile in use in operation 829.

The SM-DP+ server 530 which receives, from the external electronic device 700, the message indicating that the external electronic device 700 deletes the profile in use may identify that the external electronic device 700 deletes the profile in use, and may transmit, to the external electronic device 700, an OK message in response to the message indicating that the external electronic device 700 deletes the profile in use in operation 830.

The external electronic device 700 which receives the OK message from the SM-DP+ server 530 may transmit, to the electronic device 101, a message indicating that the profile in use is deleted in operation 831. For example, operation 831 is illustrated as "Notify deletion result."

The electronic device 101 which receives, from the external electronic device 700, the message indicating that the profile in use is deleted may identify that the profile in use is deleted and transmit, to the entitlement server 520, a sixth request message for requesting to provide service-related data for a primary device (e.g., the external electronic device 700) or a companion device in operation 832. For example, the sixth request message may include ODSA operation information set to "AcquireConfiguration", the first identifier, and/or the authentication information. For example, the sixth request message may be an HTTP REQUEST ("AcquireConfiguration", "token", OdsaEventID) message.

Alternatively, as the temporary authentication information expires, the entitlement server 520 may require re-authentication for the electronic device 101, and in this case, the entitlement server 520 may transmit, to the electronic device 101, a message (e.g., an HTTP 511 Network Authentication Required message) indicating that network authentication is required in operation 833. The electronic device 101 which receives, from the entitlement server 520, the message indicating that the network authentication is required may, in operation 834, perform an Oauth2.0/OpenID authentication process with the entitlement server 520 to identify (for example, acquire) authentication information (e.g., a token).

The electronic device 101 which identifies the authentication information (e.g., the token) may transmit, to the entitlement server 520, a seventh request message for requesting to provide the service-related data for the primary device (e.g., the external electronic device 700) or the companion device in operation 835. The seventh request message in operation 835 may be similar to or substantially the same as the sixth request message in operation 832, so a detailed description thereof will be omitted herein.

The entitlement server 520 which receives the sixth request message or the seventh request message from the electronic device 101 may transmit a 200 OK message which is a response message to the sixth request message or the seventh request message in operation 836. The 200 OK message may include, as subscription result information, 2 - DOWNLOAD PROFILE which indicates that a profile needs to be downloaded. The 200 OK message may include download information (e.g., an address of the SM-DP+ server 530) for the electronic device 101 to download the profile. Since the subscription result information has been described in Table 3, so a detailed description thereof will be omitted herein. For example, operation 836 is illustrated as "HTTP 200 OK ("SubscriptionResult = 2 - DOWNLOAD PROFILE", "DownloadInfo")."

The electronic device 101 which receives the 200 OK message from the entitlement server 520 may identify that the electronic device 101 needs to download the profile based on the 200 OK message, and therefore, the electronic device 101 may download the profile from the SM-DP+ server 530 based on the download information included in the 200 OK message in operation 837. For example, operation 837 is illustrated as "Download profile".

In FIGS. 8A to 8C, a case that the electronic device 101 generates the first identifier (e.g., the OdsaEventID) has been described as an example, but the first identifier may also be generated by the entitlement server 520. The entitlement server 520 may generate the first identifier and transmit the first identifier to the electronic device 101 before the electronic device 101 transmits the third request message including the "ManageSubscription" which is the ODSA operation information. For example, the entitlement server 520 may generate the first identifier at any time before the electronic device 101 transmits the fifth request message including the "ManageSubscription" which is ODSA operation information and transmit the generated first identifier to the electronic device 101 to cause the electronic device 101 to include the first identifier in the fifth request message including the "ManageSubscription" which is the ODSA operation information. In an embodiment, there may be no limitation on a format of a message for the entitlement server 520 to transmit the first identifier to the electronic device 101.

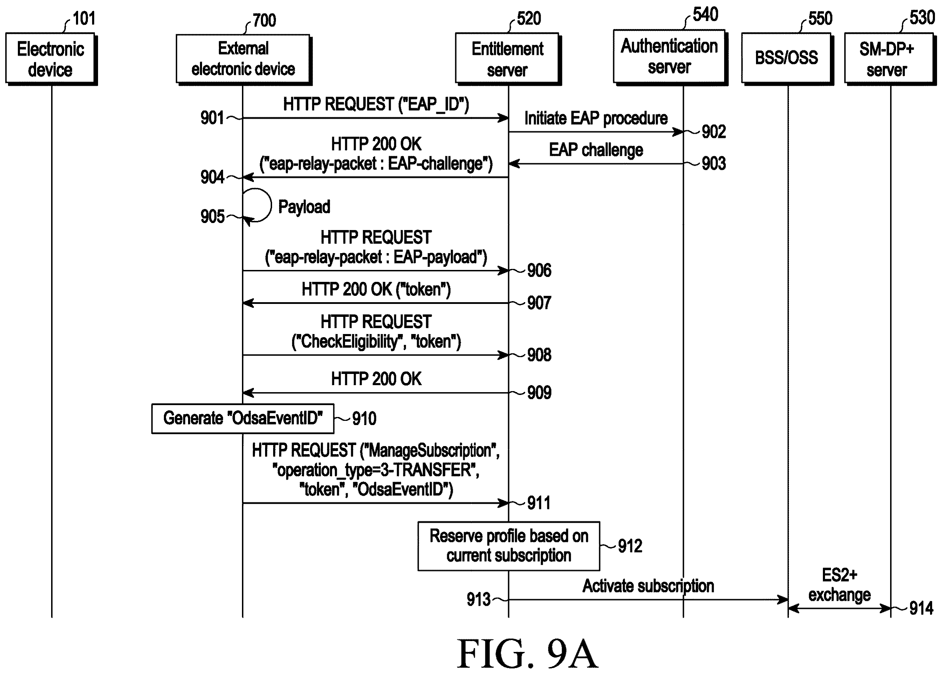

FIG. 9A is a signal flow diagram illustrating an ODSA procedure in a wireless communication network according to an embodiment.

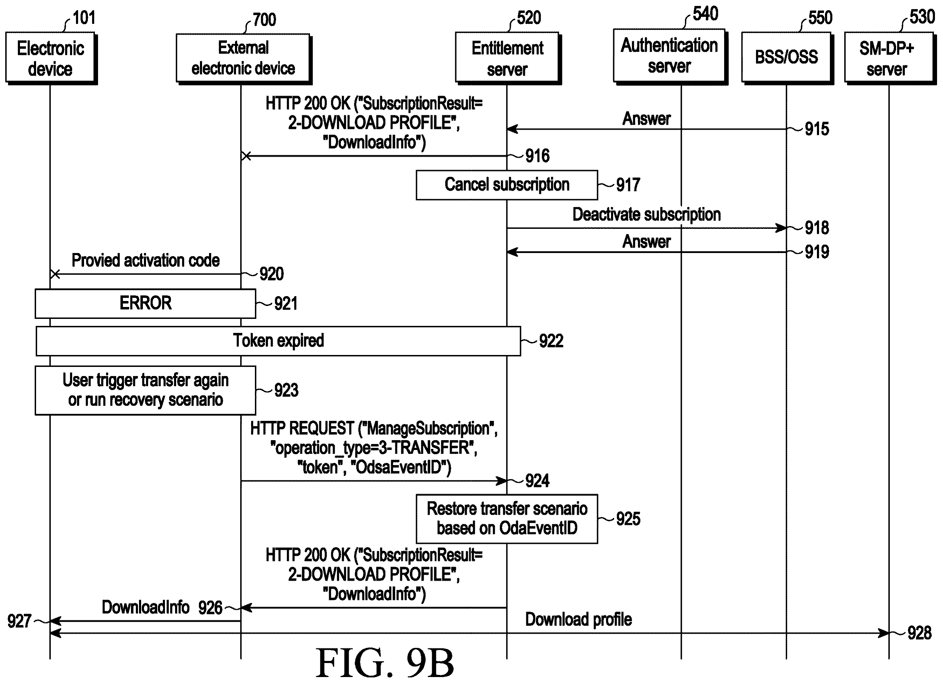

FIG. 9B is a signal flow diagram illustrating an ODSA procedure in a wireless communication network according to an embodiment.

Referring to FIGS. 9A and 9B, a wireless communication network may include an electronic device 101 (e.g., an electronic device 101 in FIGS. 1A, 1B, 2, 3, and/or 5), an external electronic device 700 (e.g., an electronic device 102 and/or an electronic device 104 in FIG. 1A), an entitlement server 520 (e.g., an entitlement server 520 in FIG. 5), an SM-DP+ server 530 (e.g., an SM-DP+ server 220 in FIG. 2 and/or an SM-DP+ server 530 in FIG. 5), an authentication server 540 (e.g., an authentication server 540 in FIG. 5), and/or a BSS/OSS 550 (e.g., a BSS/OSS 550 in FIG. 5). The external electronic device 700 may be an existing electronic device which has stored a profile (e.g., an existing profile) associated with subscription, and the electronic device 101 may be a new electronic device which will download a profile (e.g., a new profile) associated with subscription. An ODSA procedure illustrated in FIGS. 9A and 9B may include a profile transfer (or subscription transfer or line transfer) procedure between electronic devices.

In operation 901, the external electronic device 700 may identify a user input associated with profile transfer between electronic devices (e.g., the user input for selecting the profile transfer (or subscription transfer or line transfer) between the electronic devices). For example, the external electronic device 700 may output (for example, display) a UI (e.g., a profile transfer menu between the electronic devices) for selecting the profile transfer between the electronic devices, and may identify the user input via the UI. The UI may include information indicating intent of selecting to transfer a profile of the external electronic device 700 to the electronic device 101, or may include information indicating the intent of selecting to transfer a profile (or subscription or a line) from the external electronic device 700 to the electronic device 101 for intuitive recognition by a user.

Based on the user input for selecting the profile transfer between the electronic devices, the external electronic device 700 may transmit, to the entitlement server 520, a first request message for requesting to transfer a profile (or subscription or a line) in operation 901. The first request message may include an EAP_ID. For example, the first request message may be an HTTP REQUEST message. For example, the first request message may be an HTTP REQUEST ("EAP_ID") message. Although a case that an authentication process between the external electronic device 700 and the entitlement server 520 is an EAP-AKA authentication process will be described as an example in FIGS. 9A and 9B, there may be no limitation on the authentication process between the external electronic device 700 and the entitlement server 520. In an embodiment, the EAP-AKA authentication process may represent an authentication process based on an EAP-AKA scheme.

The entitlement server 520 which receives the first request message from the external electronic device 700 may detect an EAP capability of the electronic device 101 based on the first request message and initiate an EAP procedure with the authentication server 540 in operation 902. For example, operation 902 is illustrated as "initiate EAP procedure."

The entitlement server 520 which initiates the EAP procedure with the authentication server 540 may identify (for example, acquire) an EAP challenge from the authentication server 540 in operation 903. For example, operation 903 is illustrated as "EAP Challenge."

The entitlement server 520 which acquires the EAP Challenge from the authentication server 540, may transmit a 200 OK message (e.g., an HTTP 200 OK message) as a response message to the first request message to the external electronic device 700 in operation 904. In an embodiment, the 200 OK message may include the EAP-challenge as an eap-relay-packet. For example, operation 904 is illustrated as "HTTP 200 OK ("eap-relay-packet: EAP-challenge")."

The external electronic device 700 which receives the 200 OK message from the entitlement server 520 may generate a payload (e.g., an EAP-payload) based on the received 200 OK message in operation 905.

The external electronic device 700 which generates the payload may perform the EAP-AKA authentication process with the entitlement server 520, so the external electronic device 700 may transmit a second request message including the eap-relay-packet as the EAP-payload to the entitlement server 520 in operation 906. For example, the second request message may be an HTTP REQUEST message. For example, the second request message may be an HTTP REQUEST ("eap-relay-packet: EAP-payload") message.

The entitlement server 520 which receives the second request message from the external electronic device 700 may, in operation 907, transmit a 200 OK message including authentication information (e.g., a token) to the external electronic device 700 if a result of the EAP-AKA authentication process for the external electronic device 700 indicates success. For example, the 200 OK message may be an HTTP 200 OK message. For example, the 200 OK message may be an "HTTP 200 OK ("token")" message.

The external electronic device 700 which acquires the authentication information may perform an eligibility check with the entitlement server 520 in order to transfer the profile of the external electronic device 700 to the electronic device 101 in operation 908. The external electronic device 700 may request the eligibility check for the electronic device 101 from the entitlement server 520 based on an HTTP GET scheme or an HTTP POST scheme. For example, the external electronic device 700 may request the eligibility check for the electronic device 101 by transmitting a third request message for requesting the eligibility check to the entitlement server 520. According to an embodiment, the third request message may be a request message for requesting the eligibility check. For example, the third request message may be an HTTP REQUEST message.

The external electronic device 700 may transmit the third request message including any one of ODSA operation information to the entitlement server 520 according to an ODSA procedure specified in a standard document TS. 43. The ODSA operation information has been described in Table 1, so a detailed description thereof will be omitted herein.

The external electronic device 700 may request the eligibility check by transmitting the third request message including "CheckEligibility" as the ODSA operation information to the entitlement server 520, according to the ODSA procedure specified in the standard document TS. 43 in operation 908. In an embodiment, the third request message may include the authentication information (e.g., the token) acquired from the entitlement server 520. For example, the third request message may be an HTTP REQUEST ("CheckEligibility", "token") message.

Although not illustrated separately in FIGS. 9A and 9B, the entitlement server 520 may transmit a profile query to a BSS/OSS 550. The profile query may include subscription identity information (e.g., "SubscriptionID"). The BSS/OSS 550 may transmit a profile answer corresponding to the profile query to the entitlement server 520.

The entitlement server 520 which receives the third request message including CheckEligibility as the ODSA operation information from the external electronic device 700 may perform the eligibility check for the electronic device 101 based on the third request message including CheckEligibility as the ODSA operation information in operation 909.

If a result of the eligibility check for the electronic device 101 indicates success, the entitlement server 520 may, in operation 909, transmit a 200 OK message (e.g., an HTTP 200 OK message) as a response message to the third request message to the external electronic device 700. In FIGS. 9A and 9B, it will be assumed that the result of the eligibility check for the electronic device 101 indicates the success, and if the result of the eligibility check for the electronic device 101 indicates failure, no further operations may be performed. In an embodiment, if the result of the eligibility check indicates the success, the 200 OK message may include information of "ENABLED."

The external electronic device 700 which receives the 200 OK message from the entitlement server 520 may generate the first identifier (e.g., the OdsaEventID) associated with the ongoing ODSA procedure (e.g., the ongoing profile transfer procedure) in operation 910. In an embodiment, the first identifier may be an identifier used for identifying the ongoing ODSA procedure. In an embodiment, a generation rule (or a generation function) for generating the first identifier may be implemented in various forms.

The external electronic device 700 which generates the first identifier may, in operation 911, transmit a fourth request message (e.g., an HTTP REQUEST ("ManageSubscription") message) which includes "ManageSubscription" as ODSA operation information and includes the first identifier (e.g., the OdsaEventID) to the entitlement server 520. In an embodiment, the fourth request message may be a message for requesting a subscription management operation. In an embodiment, the subscription management operation may include various operations related to subscription.

In an embodiment, the fourth request message may include the ODSA operation information of "ManageSubscrition." The "ManageSubscrition" may be ODSA operation information used for requesting a subscription-related operation. According to an embodiment, the fourth request message may include operation type information, and the operation type information has been described in FIG. 2, so a detailed description thereof will be omitted herein.

The fourth request message may include the operation type having a value of "3-TRANSFER SUBSCRIPTION" in Table 2 and authentication information (e.g., a token), and "TRANSFER SUBSCRIPTION" may be an operation type for transferring a subscription (e.g., a profile) of an existing electronic device (e.g., the external electronic device 700) having an eSIM to another electronic device (e.g., the electronic device 101) having an eSIM.

The entitlement server 520 which receives the fourth request message from the external electronic device 700 may, in operation 912, reserve a profile to be transferred to the electronic device 101 based on current subscription (or a current profile or an existing profile). For example, operation 912 is illustrated as "Reserve profile based on current subscription."

In an embodiment, the entitlement server 520 may transmit, to the BSS/OSS 550, a message (e.g., an "Activate Subscription" message) for requesting to activate subscription (or a profile) in operation 913.

The BSS/OSS 550 which receives the message for requesting to activate the subscription (or the profile) from the entitlement server 520 may transmit a profile request to the SM-DP+ server 530 via an ES2+ interface (e.g., DownloadOrder, ConfirmOrder, and ReleaseProfile) in operation 914. The SM-DP+ server 530 which receives the profile request from the BSS/OSS 550 may prepare a new profile for the electronic device 101 and transmit download information for downloading the new profile to the BSS/OSS 550. For example, the download information for downloading the new profile may include an address of the SM-DP+ server 530. For example, operation 914 is illustrated as "ES2+ exchange."

The BSS/OSS 550 which receives the download information for downloading the new profile from the SM-DP+ server 530 may transmit an answer message including the download information to the entitlement server 520 in operation 915.

The entitlement server 520 which receives the answer message including the download information may transmit a 200 OK message which is a response message to the fourth request message to the external electronic device 700 in operation 916. The 200 OK message may include, as subscription result information, 2 - DOWNLOAD PROFILE which indicates that a profile needs to be downloaded. The 200 OK message may include download information (e.g., the address of the SM-DP+ server 530) for the electronic device 101 to download the profile. The subscription result information has been described in Table 3, so a detailed description thereof will be omitted herein. For example, operation 916 is illustrated as "HTTP 200 OK ("SubscriptionResult = 2 - DOWNLOAD PROFILE", "DownloadInfo")."

As such, even though the entitlement server 520 transmits the 200 OK message which is the response message to the fourth request message to the external electronic device 700, the external electronic device 700 may not receive the 200 OK message due to various errors, such as an error occurring on the external electronic device 700 side and/or a network error.

Since the entitlement server 520 transmitted the 200 OK message to the external electronic device 700 even though the external electronic device 700 may not receive the 200 OK message, the entitlement server 520 may, in operation 917, cancel the existing subscription (or the existing profile). For example, operation 917 is illustrated as "Cancel Subscription."

The entitlement server 520 which cancels the existing subscription may transmit, to the BSS/OSS 550, a message (e.g., a Deactivate Subscription message) for requesting to deactivate the existing subscription (or the existing profile) in operation 918.

The BSS/OSS 550 which receives, from the entitlement server 520, the message for requesting to deactivate the existing subscription (or the existing profile) may, in operation 919, deactivate the existing subscription and transmit an answer message indicating that the existing subscription is deactivated.

In operation 916, a case that the external electronic device 700 may not receive the 200 OK message even though the entitlement server 520 transmits the 200 OK message as a response message to the fourth request message to the external electronic device 700 has been described, however, in contrast, the external electronic device 700 may receive the 200 OK message. In this case, in operation 920, the external electronic device 700 may transmit (for example, may provide), to the electronic device 101, an activation code that permits to download a profile (e.g., a new profile) from the SM-DP+ server 530. In an embodiment, the activation code may inform the electronic device 101 to download the profile. For example, operation 920 is illustrated as "Provide Activation Code."

Even though the external electronic device 700 transmits the activation code to the electronic device 101, the electronic device 101 may not receive the activation code due to various errors, such as an error occurring on the electronic device 101 side and/or a network error. In this case, even though the external electronic device 700 deactivates the existing profile, the electronic device 101 is not able to download the new profile, so an error may occur as in operation 921.

Thereafter, as in operation 922, effective time for the authentication information (e.g., the token) of the external electronic device 700 may expire. For example, operation 922 is illustrated as "token expired."

After the effective time for the token has expired, the external electronic device 700 may, in operation 923, identify a user input associated with the profile transfer between the electronic devices as a result of the user of the external electronic device 700 reattempting the subscription transfer, or identify that a recovery scenario of the external electronic device 700 needs to be performed. In an embodiment, the recovery scenario may be a scenario for reattempting the profile transfer between the electronic devices. For example, operation 923 is illustrated as "User trigger Transfer again and run recovery scenario."

The external electronic device 700 which identifies the user input associated with the profile transfer between the electronic devices or identifies that the recovery scenario needs to be performed may, in operation 924, transmit a fifth request message (e.g., an HTTP REQUEST ("ManageSubscription") message) which includes "ManageSubscription" as ODSA operation information and the first identifier (e.g., the OdsaEventID) to the entitlement server 520. In an embodiment, the fifth request message may include the ODSA operation information of "ManageSubscrition", an operation type having a value of "3-TRANSFER SUBSCRIPTION", the authentication information (e.g., the token), and/or the first identifier (e.g., the OdsaEventID).

The entitlement server 520 which receives the fifth request message from the external electronic device 700 may identify an ongoing ODSA procedure (e.g., an ongoing profile transfer procedure) based on the first identifier included in the fifth request message, even though the effective time for the authentication information has expired, and thus may not need to perform a re-authentication procedure for the external electronic device 700. The entitlement server 520 which receives the fifth request message from the external electronic device 700 may resume the profile transfer procedure based on the first identifier in operation 925. For example, operation 925 is illustrated as "restore transfer scenario based on OdsaEventID."

The entitlement server 520 which resumes the profile transfer procedure may transmit, to the external electronic device 700, a 200 OK message which is a response message to the fifth request message in operation 926. The 200 OK message may include, as subscription result information, 2 - DOWNLOAD PROFILE which indicates that a profile needs to be downloaded. The 200 OK message may include download information (e.g., an address of the SM-DP+ server 530) for the electronic device 101 to download the profile. Since the subscription result information has been described in Table 3, so a detailed description thereof will be omitted herein. For example, operation 926 is illustrated as "HTTP 200 OK ("SubscriptionResult = 2 - DOWNLOAD PROFILE", "DownloadInfo")."

The external electronic device 700 which receives the 200 OK message from the entitlement server 520 may identify that the electronic device 101 needs to download the profile based on the 200 OK message, and therefore, the external electronic device 700 may transmit, to the electronic device 101, the download information for downloading the new profile in operation 927. For example, operation 927 is illustrated as "Download profile."

The electronic device 101 which receives the download information for downloading the new profile from the external electronic device 700 may, in operation 928, download the profile from the SM-DP+ server 530 based on the download information. For example, operation 928 is illustrated as "Download profile."

In FIGS. 9A and 9B, a case that the external electronic device 700 generates the first identifier (e.g., the OdsaEventID) has been described as an example, but the first identifier may also be generated by the entitlement server 520. The entitlement server 520 may generate the first identifier and transmit the first identifier to the external electronic device 700 before the external electronic device 700 transmits the fourth request message including the "ManageSubscription" which is the ODSA operation information. For example, the entitlement server 520 may generate the first identifier at any time before the external electronic device 700 transmits the fourth request message including the "ManageSubscription" which is ODSA operation information and transmit the generated first identifier to the external electronic device 700 to cause the external electronic device 700 to include the first identifier in the fourth request message including the "ManageSubscription" which is the ODSA operation information. In an embodiment, there may be no limitation on a format of a message for the entitlement server 520 to transmit the first identifier to the external electronic device 700.

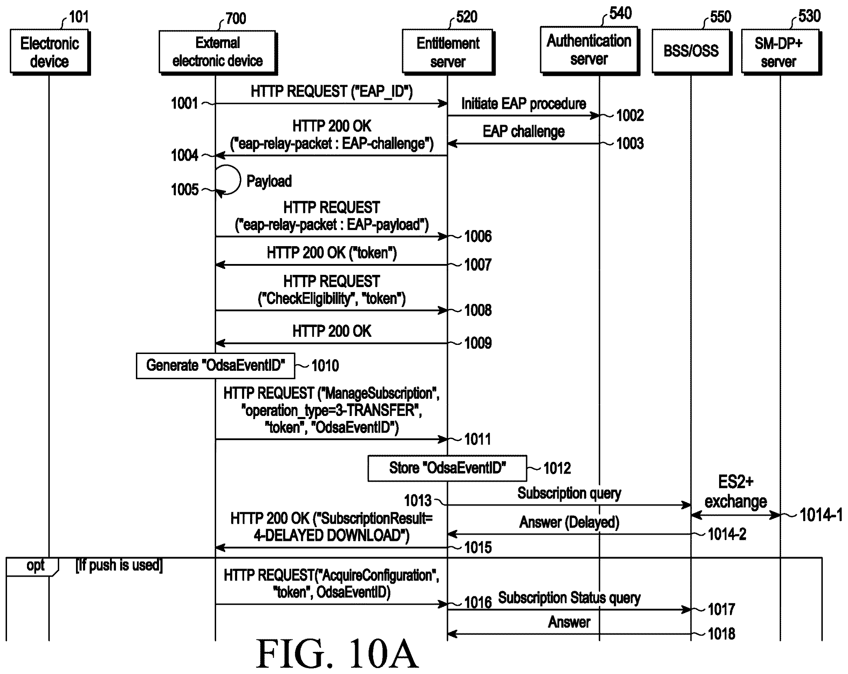

FIG. 10A is a signal flow diagram illustrating an ODSA procedure in a wireless communication network according to an embodiment.

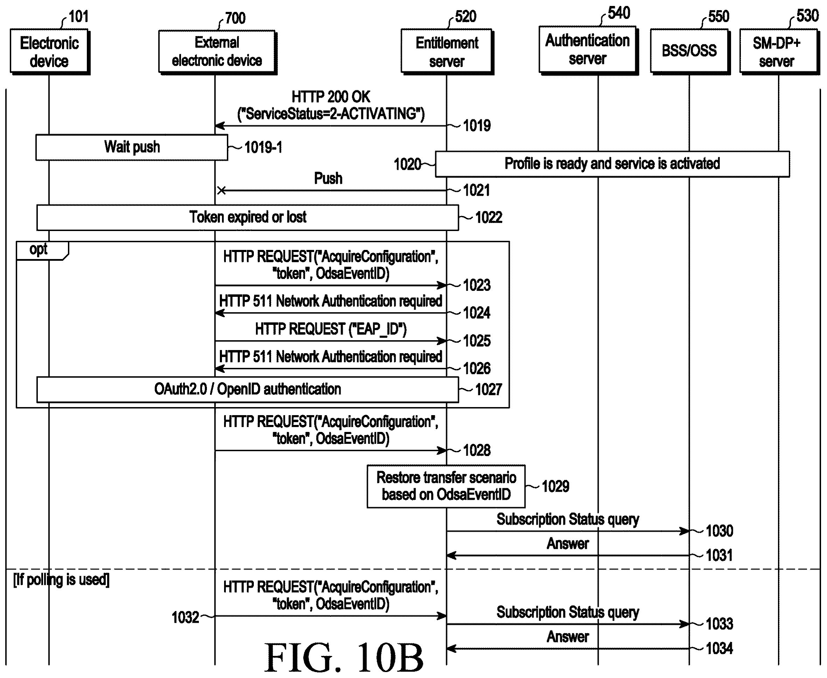

FIG. 10B is a signal flow diagram illustrating an ODSA procedure in a wireless communication network according to an embodiment.

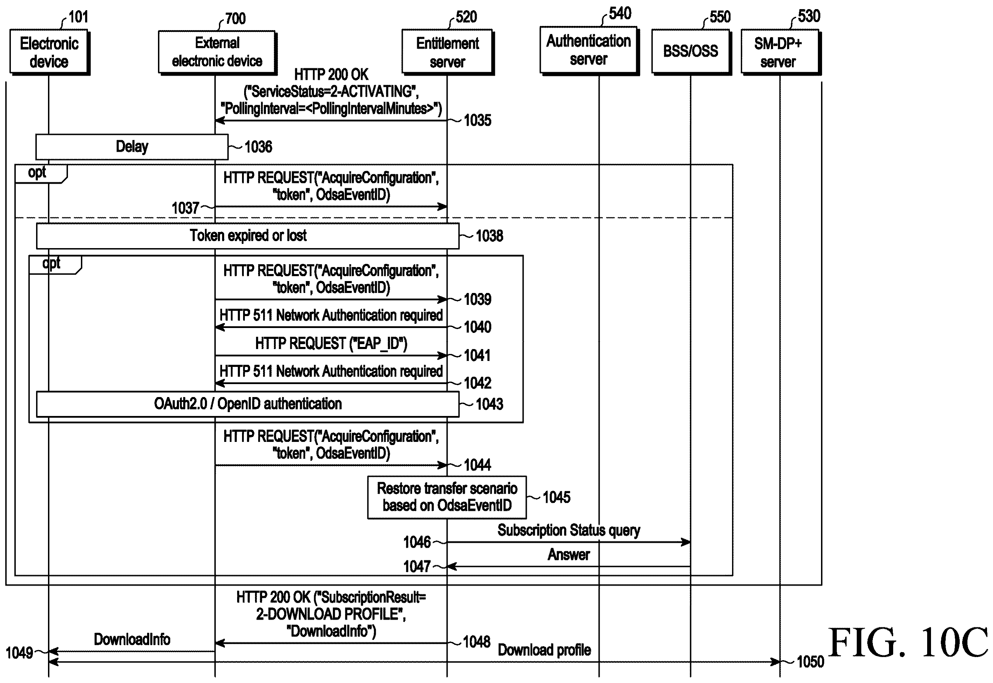

FIG. 10C is a signal flow diagram illustrating an ODSA procedure in a wireless communication network according to an embodiment.

Referring to FIGS. 10A to 10C, a wireless communication network may include an electronic device 101 (e.g., an electronic device 101 in FIGS. 1A, 1B, 2, 3, and/or 5), an external electronic device 700 (e.g., an electronic device 102 and/or an electronic device 104 in FIG. 1A), an entitlement server 520 (e.g., an entitlement server 520 in FIG. 5), an SM-DP+ server 530 (e.g., an SM-DP+ server 220 in FIG. 2 and/or an SM-DP+ server 530 in FIG. 5), an authentication server 540 (e.g., an authentication server 540 in FIG. 5), and/or a BSS/OSS 550 (e.g., a BSS/OSS 550 in FIG. 5). The external electronic device 700 may be an existing electronic device which has stored a profile (e.g., an existing profile) associated with subscription, and the electronic device 101 may be a new electronic device which will download a profile (e.g., a new profile) associated with subscription. An ODSA procedure illustrated in FIGS. 10A to 10C may include a profile transfer (or subscription transfer or line transfer) procedure between electronic devices. In an embodiment, the electronic device 101 and the external electronic device 700 may be connected to a data network based on a WiFi scheme. In an embodiment, a case that the external electronic device 700 and the electronic device 101 are connected to the data network based on the WiFi scheme will be described as an example, but the external electronic device 700 and the electronic device 101 may be connected to the data network based on various short-range communication schemes as well as the WiFi scheme.

In operation 1001, the external electronic device 700 may identify a user input associated with the profile transfer between the electronic devices (e.g., the user input for selecting the profile transfer (or the subscription transfer or the line transfer) between the electronic devices). For example, the external electronic device 700 may output (for example, display) a UI (e.g., a profile transfer menu between the electronic devices) for selecting the profile transfer between the electronic devices, and may identify the user input via the UI. The UI may include information indicating the intent of selecting to transfer a profile of the external electronic device 700 to the electronic device 101, or may include information indicating the intent of selecting to transfer a profile (or subscription or a line) from the external electronic device 700 to the electronic device 101 for intuitive recognition by a user.

Based on the user input for selecting the profile transfer between the electronic devices, the external electronic device 700 may transmit, to the entitlement server 520, a first request message for requesting to transfer a profile (or subscription or a line) in operation 1001. The first request message may include an EAP_ID and device information of the electronic device 101. For example, the first request message may be an HTTP REQUEST message. For example, the first request message may be an HTTP REQUEST ("EAP _ID") message. Although a case that an authentication process between the external electronic device 700 and the entitlement server 520 is an EAP-AKA authentication process will be described as an example in FIGS. 10A to 10C, there may be no limitation on the authentication process between the external electronic device 700 and the entitlement server 520. In an embodiment, the EAP-AKA authentication process may represent an authentication process based on an EAP-AKA scheme.

The entitlement server 520 which receives the first request message from the external electronic device 700 may detect an EAP capability of the electronic device 101 based on the first request message and initiate an EAP procedure with the authentication server 540 in operation 1002. For example, operation 1002 is illustrated as "initiate EAP procedure."

The entitlement server 520 which initiates the EAP procedure with the authentication server 540 may identify (for example, acquire) an EAP Challenge from the authentication server 540 in operation 1003. For example, operation 1003 is illustrated as "EAP Challenge."

The entitlement server 520 which acquires the EAP Challenge from the authentication server 540, may transmit a 200 OK message (e.g., an HTTP 200 OK message) as a response message to the first request message to the external electronic device 700 in operation 1004. In an embodiment, the 200 OK message may include the EAP-challenge as an eap-relay-packet. For example, operation 1004 is illustrated as "HTTP 200 OK ("eap-relay-packet: EAP-challenge")."

The external electronic device 700 which receives the 200 OK message from the entitlement server 520 may generate a payload (e.g., an EAP-payload) based on the received 200 OK message in operation 1005.

The external electronic device 700 which generates the payload may perform the EAP-AKA authentication process with the entitlement server 520, so the external electronic device 700 may transmit a second request message including the eap-relay-packet as the EAP-payload to the entitlement server 520 in operation 1006. For example, the second request message may be an HTTP REQUEST message. For example, the second request message may be an HTTP REQUEST ("eap-relay-packet: EAP-payload") message.

The entitlement server 520 which receives the second request message from the external electronic device 700 may, in operation 1007, transmit a 200 OK message including authentication information (e.g., a token) to the external electronic device 700 if a result of the EAP-AKA authentication process for the external electronic device 700 indicates success. For example, the 200 OK message may be an HTTP 200 OK message. For example, the 200 OK message may be "HTTP 200 OK ("token")."

The external electronic device 700 which acquires the authentication information may perform an eligibility check with the entitlement server 520 in order to transfer the profile of the external electronic device 700 to the electronic device 101 in operation 1008. The external electronic device 700 may request the eligibility check for the electronic device 101 from the entitlement server 520 based on an HTTP GET scheme or an HTTP POST scheme. For example, the external electronic device 700 may request the eligibility check for the electronic device 101 by transmitting a third request message for requesting the eligibility check to the entitlement server 520. According to an embodiment, the third request message may be a request message for requesting the eligibility check. For example, the third request message may be an HTTP REQUEST message.

The external electronic device 700 may transmit the third request message including any one of ODSA operation information to the entitlement server 520 according to an ODSA procedure specified in a standard document TS. 43. The ODSA operation information has been described in Table 1, so a detailed description thereof will be omitted herein.

The external electronic device 700 may request the eligibility check by transmitting the third request message including "CheckEligibility" as the ODSA operation information to the entitlement server 520, according to the ODSA procedure specified in the standard document TS. 43 in operation 1009. In an embodiment, the third request message may include the authentication information (e.g., the token) acquired from the entitlement server 520. For example, the third request message may be an HTTP REQUEST ("CheckEligibility", "token") message.

Although not illustrated separately in FIGS. 10A to 10C, the entitlement server 520 may transmit a profile query to a BSS/OSS 550. The profile query may include subscription identity information (e.g., "SubscriptionID"). The BSS/OSS 550 may transmit a profile answer corresponding to the profile query to the entitlement server 520.

The entitlement server 520 which receives the third request message including CheckEligibility as the ODSA operation information from the external electronic device 700 may perform the eligibility check for the electronic device 101 based on the third request message including CheckEligibility as the ODSA operation information in operation 1009.

If a result of the eligibility check for the electronic device 101 indicates success, the entitlement server 520 may, in operation 1009, transmit a 200 OK message (e.g., an HTTP 200 OK message) as a response message to the third request message to the external electronic device 700. In FIGS. 10A to 10C, it will be assumed that the result of the eligibility check for the electronic device 101 indicates the success, and if the result of the eligibility check for the electronic device 101 indicates failure, no further operations may be performed. In an embodiment, if the result of the eligibility check indicates the success, the 200 OK message may include information of "ENABLED."

The external electronic device 700 which receives the 200 OK message from the entitlement server 520 may generate the first identifier (e.g., the OdsaEventID) associated with the ongoing ODSA procedure (e.g., the ongoing profile transfer procedure) in operation 1010. In an embodiment, the first identifier may be an identifier used for identifying the ongoing ODSA procedure. In an embodiment, a generation rule (or a generation function) for generating the first identifier may be implemented in various forms.

The external electronic device 700 which generates the first identifier may, in operation 1011, transmit a fourth request message (e.g., an HTTP REQUEST ("ManageSubscription") message) which includes "ManageSubscription" as ODSA operation information and includes the first identifier (e.g., the OdsaEventID) to the entitlement server 520. In an embodiment, the fourth request message may be a message for requesting a subscription management operation. In an embodiment, the subscription management operation may include various operations related to subscription.

In an embodiment, the fourth request message may include the ODSA operation information of "ManageSubscrition." The "ManageSubscrition" may be ODSA operation information used for requesting a subscription-related operation. According to an embodiment, the fourth request message may include operation type information, and the operation type information has been described in Table 2, so a detailed description thereof will be omitted herein.

The fourth request message may include the operation type having a value of "3-TRANSFER SUBSCRIPTION" in Table 2 and the authentication information (e.g., the token), and "TRANSFER SUBSCRIPTION" may be an operation type for transferring a subscription (e.g., a profile) of an existing electronic device (e.g., the external electronic device 700) having an eSIM to another electronic device (e.g., the electronic device 101) having an eSIM.

The entitlement server 520 which receives the fourth request message from the external electronic device 700 may, in operation 1012, store the first identifier (e.g., the OdsaEventID) included in the fourth request message.

The entitlement server 520 which stores the first identifier (e.g., the OdsaEventID) may transmit a subscription query to the BSS/OSS 550 in operation 1013. The subscription query may include subscription identity information (e.g., a "SubscriptionID") and may be used for requesting to activate new subscription (or profile) (for example, to activate the new subscription (or profile) for the external electronic device 700).

The BSS/OSS 550 which receives the subscription query from the entitlement server 520 may request a new profile from the SM-DP+ server 530 via an ES2+ interface (e.g., DownloadOrder, ConfirmOrder, and ReleaseProfile) in operation 1014-1. The SM-DP+ server 530 which identifies the new profile request from the BSS/OSS 550 may notify the BSS/OSS 550 that download information for downloading the new profile is delayed. The BSS/OSS 550 which is notified from the SM-DP+ server 530 that the download information for downloading the new profile is delayed may transmit an answer message indicating that the download information is delayed to the entitlement server 520 in operation 1014-2. For example, operation 1014-2 is illustrated as "Answer (Delayed)."

The entitlement server 520 which receives the answer message from the BSS/OSS 550 may, in operation 1015, transmit a 200 OK message (e.g., an HTTP 200 OK ("SubscriptionResult = 4 - DELAYED DOWNLOAD) message) as a response message to the fourth request message to the external electronic device 700. The DELAYED DOWNLOAD may be subscription result information indicating that the profile is not ready to be downloaded when the user (e.g., the external electronic device 700) requests subscription transfer (or profile transfer).

The external electronic device 700 which receives the response message to the fourth request message from the entitlement server 520 may transmit, to the entitlement server 520, a fifth request message for requesting to provide service-related data for a primary device (e.g., the external electronic device 700) or a companion device in operation 1016. For example, the fifth request message may include ODSA operation information set to "AcquireConfiguration", the first identifier, and/or the authentication information (e.g., the token). For example, the fifth request message may be an HTTP REQUEST ("AcquireConfiguration", "token", "OdsaEventID") message.

The entitlement server 520 which receives the fifth request message from the external electronic device 700, may, in operation 1017, transmit a message (e.g., a Subscription Status Query message) for querying subscription (or profile) status to the BSS/OSS 550. In an embodiment, the message for querying the subscription (or the profile) status may include a SubscriptionID.

The BSS/OSS 550 which receives the message for querying the subscription (or the profile) status from the entitlement server 520 may check the subscription status and transmit an answer message including information related to whether the profile download is ready to the entitlement server 520 in operation 1018. The answer message in operation 1018 may indicate that profile download information for downloading the profile is not available and that the subscription (or the profile) is not ready.

The entitlement server 520 which receives the answer message from the BSS/OSS 550 may transmit a 200 OK message which is a response message to the fifth request message to the external electronic device 700 in operation 1019. The 200 OK message which is the response message to the fifth request message may include any one of ServiceStatus information indicating the service status as described in <Table 4>. For example, the 200 OK message which is the response message to the fifth request message may include "2 - ACTIVATING". In an embodiment, "2 - ACTIVATING" may indicate that a service of an eSIM device (e.g., the electronic device 101) will be activated.

The external electronic device 700 which receives the 200 OK message from the entitlement server 520 may know that the service (e.g., profile download) for the electronic device 101 will be activated, and thus may wait for profile preparation to be completed in operation 1019-1. For example, the external electronic device 700 may wait for a push message including the download information to be received in operation 1019-1. For example, operation 1019-1 is illustrated as "wait push".

The entitlement server 520 which transmits the 200 OK message which is the response message to the fifth request message to the external electronic device 700 may identify that the profile is ready and the service is activated in operation 1020.

The entitlement server 520 which identifies that the profile is ready may transmit a push message including information indicating that the profile is ready to the external electronic device 700 in operation 1021. However, the external electronic device 700 may not receive the push message transmitted from the entitlement server 520 due to various reasons, such as a case that an error occurs in a network and/or a case that an error occurs in the external electronic device 700. As such, since the external electronic device 700 may not receive the push message transmitted from the entitlement server 520, the external electronic device 700 may continuously wait to receive the push message, and thus, as in operation 1022, effective time for the authentication information (e.g., the token) of the external electronic device 700 may expire or the authentication information of the external electronic device 700 may be lost. For example, operation 1022 is illustrated as "token expired or lost."

After the effective time for the token has expired or the token is lost, the external electronic device 700 may, in operation 1028, identify a user input associated with the profile transfer between the electronic devices as a result of the user of the external electronic device 700 reattempting the subscription transfer, or identify that a recovery scenario of the external electronic device 700 needs to be performed. In an embodiment, the recovery scenario may be a scenario for reattempting the profile transfer between the electronic devices. The external electronic device 700 which identifies a user input associated with the profile transfer between the electronic devices or identifies that the recovery scenario needs to be performed may transmit, to the entitlement server 520, an eighth request message for requesting to provide service-related data for the primary device (e.g., the external electronic device 700) or the companion device in operation 1028. For example, the eighth request message may include ODSA operation information set to "AcquireConfiguration", the first identifier, and/or the authentication information. For example, the eighth request message may be an HTTP REQUEST ("AcquireConfiguration", "token", OdsaEventID) message.

Alternatively, as the authentication information has expired, the entitlement server 520 may require re-authentication for the external electronic device 700. In this case, the external electronic device 700 which identifies the user input associated with the profile transfer between the electronic devices or identifies that the recovery scenario needs to be performed may transmit, to the entitlement server 520, a sixth request message for requesting to provide the service-related data for the primary device (e.g., the external electronic device 700) or the companion device in operation 1023. For example, the sixth request message may include the ODSA operation information set to "AcquireConfiguration", the first identifier, and/or the authentication information. For example, the sixth request message may be an HTTP REQUEST ("AcquireConfiguration", "token", OdsaEventID) message. The eighth request message in operation 1028 may be similar to or substantially the same as the sixth request message in operation 1023, so a detailed description thereof will be omitted herein.

The entitlement server 520 may transmit, to the external electronic device 700, a message (e.g., an HTTP 511 Network Authentication Required message) indicating that network authentication is required in operation 1024. The external electronic device 700 which receives, from the entitlement server 520, the message indicating that network authentication is required may transmit, to the entitlement server 520, a seventh request message for requesting to transfer a profile (or subscription or a line) in operation 1025. The seventh request message may include an EAP_ID. For example, the seventh request message may be an HTTP REQUEST message and may be an HTTP REQUEST ("EAP _ID") message.

The entitlement server 520 which receives the seventh request message from the external electronic device 700 may transmit a message (e.g., an HTTP 511 Network Authentication Required message) indicating that the network authentication is required in operation 1026. The external electronic device 700 which receives, from the entitlement server 520, the message indicating that the network authentication is required may perform an Oauth2.0/OpenID authentication process with the entitlement server 520 to identify (for example, acquire) the authentication information (e.g., the token) in operation 1027.

The entitlement server 520 which receives the sixth request message or the eighth request message from the external electronic device 700 may resume the profile transfer procedure based on the first identifier in operation 1029. For example, operation 1029 is illustrated as "restore transfer scenario based on OdsaEventID."

The entitlement server 520 which resumes the profile transfer procedure may transmit, to the BSS/OSS 550, a message (e.g., a Subscription Status Query message) for querying subscription (or profile) status in operation 1030. In an embodiment, the message for querying the subscription (or the profile) status may include a SubscriptionID.

The BSS/OSS 550 which receives, from the entitlement server 520, the message for querying the subscription (or the profile) status may check the subscription status and transmit an answer message including information related to whether the profile download is ready to the entitlement server 520 in operation 1031. The answer message in operation 1031 may indicate that the profile download information for downloading the profile is available and that the subscription (or the profile) is ready.

Operations 1016 to 1031 after the external electronic device 700 receives the 200 OK message which is the response message to the fourth request message in operation 1015 may be operations in a case that the push scheme is used, and in contrast, operations in a case that the polling scheme is used may be implemented as operations 1032 to 1047. This may be specifically described as follows.

The external electronic device 700 which receives the 200 OK message which is the response message to the fourth request message from the entitlement server 520 in operation 1015 may transmit, to the entitlement server 520, a ninth request message for requesting to provide service-related data for a primary device (e.g., the external electronic device 700) or a companion device in operation 1032. For example, the ninth request message may include ODSA operation information set to "AcquireConfiguration", the first identifier, and/or the authentication information (e.g., the token). For example, the ninth request message may be an HTTP REQUEST ("AcquireConfiguration", "token", "OdsaEventID") message.

The entitlement server 520 which receives the ninth request message from the external electronic device 700, may, in operation 1033, transmit a message (e.g., a Subscription Status Query message) for querying subscription (or profile) status to the BSS/OSS 550. In an embodiment, the message for querying the subscription (or the profile) status may include a SubscriptionID.

The BSS/OSS 550 which receives the message for querying the subscription (or the profile) status from the entitlement server 520 may check the subscription status and transmit an answer message including information related to whether the profile download is ready to the entitlement server 520 in operation 1034. The answer message in operation 1034 may indicate that profile download information for downloading the profile is not available and that the subscription (or the profile) is not ready.

The entitlement server 520 which receives the answer message from the BSS/OSS 550 may transmit a 200 OK message which is a response message to the ninth request message to the external electronic device 700 in operation 1035. The 200 OK message which is the response message to the ninth request message may include any one of ServiceStatus information indicating the service status as described in <Table 4> and/or a polling interval. For example, the 200 OK message which is the response message to the ninth request message may include "2 - ACTIVATING". In an embodiment, "2 - ACTIVATING" may indicate that a service of an eSIM device (e.g., the electronic device 101) will be activated. For example, operation 1035 is illustrated as "HTTP 200 OK ("ServiceStatus = 2 - ACTIVATING", "PollingInterval = < PollingIntervalMinutes>")."

The external electronic device 700 which receives the 200 OK message from the entitlement server 520 may know that the service (e.g., the profile download) for the electronic device 101 will be activated, and may perform a delay operation during the polling interval included in the 200 OK message in operation 1036.

The external electronic device 700 which performs the delay operation may transmit, to the entitlement server 520, a tenth request message for requesting to provide the service-related data for the primary device (e.g., the external electronic device 700) or the companion device in operation 1037. For example, the tenth request message may include ODSA operation information set to "AcquireConfiguration", the first identifier, and/or the authentication information. For example, the tenth request message may be an HTTP REQUEST ("AcquireConfiguration", "token", OdsaEventID) message.

However, due to various reasons, such as a case that an error occurs in a network and/or a case that an error occurs in the external electronic device 700, as in operation 1038, effective time for the authentication information (e.g., the token) of the external electronic device 700 may expire or the authentication information of the external electronic device 700 may be lost. For example, operation 1038 is illustrated as "token expired or lost."

After the effective time for the token has expired or the token is lost, the external electronic device 700 may, in operation 1044, identify a user input associated with the profile transfer between the electronic devices as a result of the user of the external electronic device 700 reattempting the subscription transfer, or identify that a recovery scenario of the external electronic device 700 needs to be performed. The external electronic device 700 which identifies a user input associated with the profile transfer between the electronic devices or identifies that the recovery scenario needs to be performed may transmit, to the entitlement server 520, a thirteenth request message for requesting to provide service-related data for the primary device (e.g., the external electronic device 700) or the companion device in operation 1044. For example, the thirteenth request message may include ODSA operation information set to "AcquireConfiguration", the first identifier, and/or the authentication information. For example, the thirteenth request message is illustrated as an HTTP REQUEST ("AcquireConfiguration", "token", OdsaEventID) message.

Alternatively, as the authentication information has expired, the entitlement server 520 may require re-authentication for the external electronic device 700. In this case, the external electronic device 700 which identifies the user input associated with the profile transfer between the electronic devices or identifies that the recovery scenario needs to be performed may transmit, to the entitlement server 520, an eleventh request message for requesting to provide the service-related data for the primary device (e.g., the external electronic device 700) or the companion device in operation 1039. For example, the eleventh request message may include the ODSA operation information set to "AcquireConfiguration", the first identifier, and/or the authentication information. For example, the eleventh request message may be an HTTP REQUEST ("AcquireConfiguration", "token", OdsaEventID) message. The thirteenth request message in operation 1044 may be similar to or substantially the same as the eleventh request message in operation 1039, so a detailed description thereof will be omitted herein.

The entitlement server 520 may transmit, to the external electronic device 700, a message (e.g., an HTTP 511 Network Authentication Required message) indicating that network authentication is required in operation 1040. The external electronic device 700 which receives, from the entitlement server 520, the message indicating that network authentication is required may transmit, to the entitlement server 520, a twelfth request message for requesting to transfer a profile (or subscription or a line) in operation 1041. The twelfth request message may include an EAP_ID. For example, the twelfth request message may be an HTTP REQUEST message and may be an HTTP REQUEST ("EAP_ID") message.

The entitlement server 520 which receives the twelfth request message from the external electronic device 700 may transmit a message (e.g., an HTTP 511 Network Authentication Required message) indicating that the network authentication is required in operation 1042. The external electronic device 700 which receives, from the entitlement server 520, the message indicating that the network authentication is required may perform an Oauth2.0/OpenID authentication process with the entitlement server 520 to identify (for example, acquire) the authentication information (e.g., the token) in operation 1043.

The entitlement server 520 which receives the eleventh request message or the thirteenth request message from the external electronic device 700 may resume the profile transfer procedure based on the first identifier in operation 1045. For example, operation 1045 is illustrated as "restore transfer scenario based on OdsaEventID."

The entitlement server 520 which resumes the profile transfer procedure may transmit, to the BSS/OSS 550, a message (e.g., a Subscription Status Query message) for querying subscription (or profile) status in operation 1046. In an embodiment, the message for querying the subscription (or the profile) status may include a SubscriptionID.

The BSS/OSS 550 which receives, from the entitlement server 520, the message for querying the subscription (or the profile) status may check the subscription status and transmit an answer message including information related to whether the profile download is ready to the entitlement server 520 in operation 1047. The answer message in operation 1047 may indicate that the profile download information for downloading the profile is available and that the subscription (or the profile) is ready.

The entitlement server 520 which receives the answer message in operation 1031 or receives the answer message in operation 1047 may transmit, to the external electronic device 700, a 200 OK message which is a response message to the sixth request message, the eighth request message, the eleventh request message, or the thirteenth request message in operation 1048. The 200 OK message may include, as subscription result information, 2 - DOWNLOAD PROFILE which indicates that a profile needs to be downloaded. The 200 OK message may include download information (e.g., an address of the SM-DP+ server 530) for the electronic device 101 to download the profile. Since the subscription result information has been described in Table 3, so a detailed description thereof will be omitted herein. For example, operation 1048 is illustrated as "HTTP 200 OK ("SubscriptionResult = 2 - DOWNLOAD PROFILE", "DownloadInfo")."

The external electronic device 700 which receives the 200 OK message from the entitlement server 520 may identify that the electronic device 101 needs to download the profile based on the 200 OK message, and therefore, the external electronic device 700 may transmit, to the electronic device 101, the download information for downloading the new profile in operation 1049. For example, operation 1049 is illustrated as "Download profile."

The electronic device 101 which receives the download information for downloading the new profile from the external electronic device 700 may, in operation 1050, download the profile from the SM-DP+ server 530 based on the download information. For example, operation 1050 is illustrated as "Download profile."

In FIGS. 10A to 10C, a case that the external electronic device 700 generates the first identifier (e.g., the OdsaEventID) has been described as an example, but the first identifier may also be generated by the entitlement server 520. The entitlement server 520 may generate the first identifier and transmit the first identifier to the external electronic device 700 before the external electronic device 700 transmits the fourth request message including the "ManageSubscription" which is the ODSA operation information. For example, the entitlement server 520 may generate the first identifier at any time before the external electronic device 700 transmits the fourth request message including the "ManageSubscription" which is ODSA operation information and transmit the generated first identifier to the external electronic device 700 to cause the external electronic device 700 to include the first identifier in the fourth request message including the "ManageSubscription" which is the ODSA operation information. In an embodiment, there may be no limitation on a format of a message for the entitlement server 520 to transmit the first identifier to the external electronic device 700.

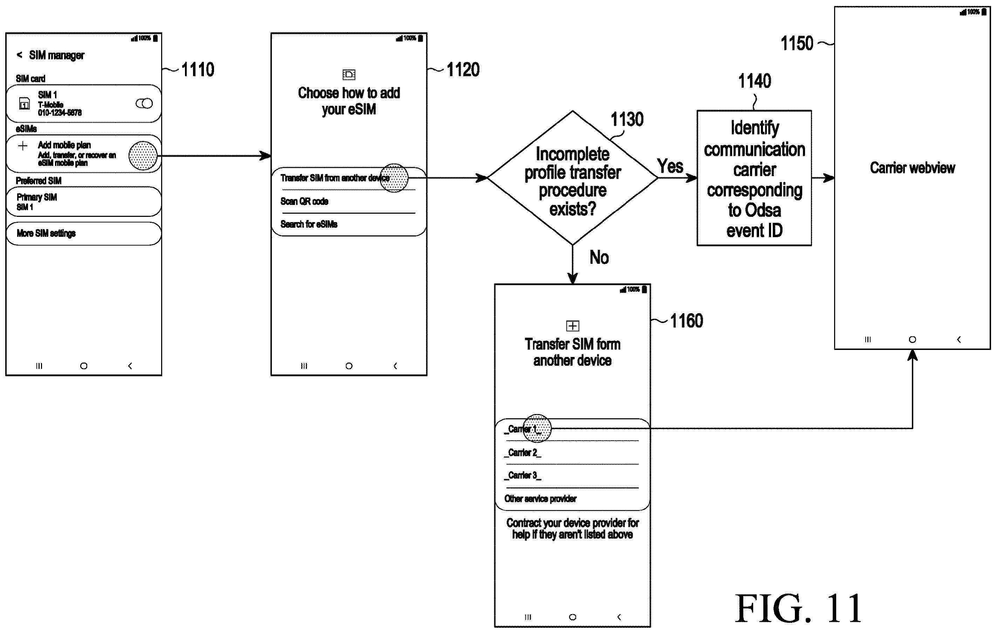

FIG. 11 is a signal flow diagram illustrating an ODSA procedure in a wireless communication network according to an embodiment.

Referring to FIG. 11, if profile transfer is performed between electronic devices, for example, an electronic device (e.g., an electronic device 101 in FIGS. 1A, 1B, 2, 3, and/or 5) and an external electronic device (e.g., an electronic device 102 and/or an electronic device 104 in FIG. 1A), the external electronic device needs to communicate with a communication provider. In an embodiment, the external electronic device may be an existing electronic device which has stored a profile (e.g., an existing profile) associated with subscription, and the electronic device may be a new electronic device which will download a profile (e.g., a new profile) associated with subscription. In order for the external electronic device to communicate with the communication provider, a scheme may be required that may specify (or may select) a communication provider which will communicate with the external electronic device from among a plurality of communication providers.

Since the external electronic device has a physical SIM or an eSIM profile which the external electronic device itself wants to transfer, the external electronic device may specify a communication carrier based on information included in the physical SIM or the eSIM profile and access an entitlement server of the specified communication carrier to perform profile transfer.

However, in a case of a reusable profile, it may be necessary to delete an existing profile stored in the external electronic device. In this case, if various errors, such as a Wi-Fi error and/or a network error, occur after the existing profile is deleted, the external electronic device may not be able to specify the communication carrier with which the external electronic device communicates. In order for the external electronic device to be able to communicate with the communication carrier, the external electronic device needs to know an entitlement server of which communication carrier to access and communicate with the communication carrier, so if the external electronic device is unable to specify the communication carrier, the external electronic device (or a user of the external electronic device) may need to select the communication carrier which the external electronic device (or the user of the external electronic device) wants to access by itself. However, it may be difficult for the external electronic device (or the user of the external electronic device) to select a desired communication carrier among numerous communication carriers, and this may cause inconvenience to users and communication carriers.

Referring to FIG. 11, the external electronic device may store a first identifier (e.g., an OdsaEventID) related to an ongoing (e.g., incomplete) ODSA procedure (e.g., a profile transfer procedure) between the external electronic device and the electronic device, communication carrier information related to a communication carrier related to the ODSA procedure, and/or scenario information related to the ODSA procedure. In an embodiment, the first identifier may be an identifier used for identifying the ongoing ODSA procedure.

While the external electronic device stores the OdsaEventID related to the profile transfer procedure, the communication carrier information related to the communication carrier related to the profile transfer procedure, and/or the scenario information related to the profile transfer procedure, an error may occur while the profile transfer procedure is performed. In this case, even though the existing profile is deleted, the external electronic device may specify a communication carrier corresponding to the profile transfer procedure based on the OdsaEventID, and thus resume and complete the profile transfer procedure. In an embodiment, even though the existing profile is deleted, the external electronic device may specify the communication carrier corresponding to the profile transfer procedure based on the OdsaEventID to resume and complete the profile transfer procedure, rather than restarting the profile transfer procedure from the beginning, thereby increasing convenience for users and communication carriers.

If the error occurs while the profile transfer procedure is performed, the external electronic device may output (for example, may display) a UI (e.g., a profile transfer menu between electronic devices) for selecting profile transfer between the electronic devices, as in a screen 1110, and may identify a user input 1120 for selecting to transfer a profile of the external electronic device to the electronic device via the UI.

The external electronic device which identifies the user input 1120 for selecting to transfer the profile of the external electronic device to the electronic device may identify whether an incomplete profile transfer procedure exists in operation 1130. In an embodiment, the external electronic device may identify that the incomplete profile transfer procedure exists if an OdsaEventID corresponding to the incomplete profile transfer procedure exists.

As a result of the identification, if the incomplete profile transfer procedure exists, the external electronic device may, in operation 1140, identify a communication carrier corresponding to the OdsaEventID for the incomplete profile transfer procedure. The external electronic device which identifies the communication carrier corresponding to the OdsaEventID for the incomplete profile transfer procedure may, in operation 1150, output a carrier webview corresponding to the communication carrier corresponding to the OdsaEventID.

As the result of the identification in operation 1130, if the incomplete profile transfer procedure does not exist, the external electronic device may output (for example, may display) a list of communication carriers as on a screen 1160 in operation 1160, and based on a user input for selecting a communication carrier, may output a carrier webview corresponding to the selected communication carrier in operation 1150.

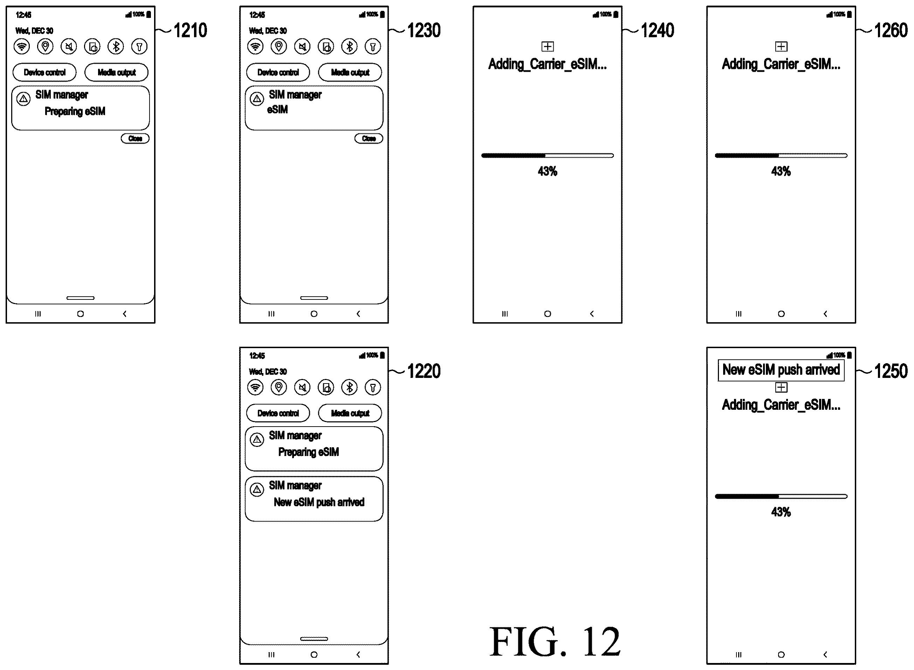

FIG. 12 is a diagram for describing an example of screens displayed on an electronic device according to an embodiment.

Screens 1210, 1220, 1230, 1240, 1250, and 1260 illustrated in FIG. 12 may be screens according to an ODSA procedure. The ODSA procedure corresponding to the screens 1210, 1220, 1230, 1240, 1250, and 1260 illustrated in FIG. 12 may be a profile transfer (or subscription transfer or line transfer) procedure between electronic devices. The screens 1210, 1220, 1230, 1240, 1250, and 1260 illustrated in FIG. 12 may be screens according to a profile transfer procedure between electronic devices described in FIGS. 7A and 7B.

Referring to FIG. 12, as described in FIGS. 7A and 7B, an external electronic device (e.g., an electronic device 102 and/or an electronic device 104 in FIG. 1A) may be an existing electronic device which has stored a profile (e.g., an existing profile) associated with subscription, and an electronic device (e.g., an electronic device 101 in FIGS. 1A, 1B, 2, 3, and/or 5) may be a new electronic device which will download a profile (e.g., a new profile) associated with subscription.

As described in operation 711, when receiving a 200 OK message (e.g., an HTTP 200 OK ("SubscriptionResult = 4 - DELAYED DOWNLOAD) message) as a response message to a third request message (e.g., an HTTP REQUEST ("ManageSubscription") message) which includes "ManageSubscription" as ODSA operation information and includes a first identifier (e.g., an OdsaEventID) from an entitlement server (e.g., an entitlement server 520 in FIG. 5), the electronic device may identify that a profile is not ready to be downloaded (for example, that it is a delayed download) based on subscription result information set to "DELAYED DOWNLOAD". The electronic device which identifies that it is the delayed download may output (for example, display) a screen 1210 indicating that it is preparing the profile.

The electronic device may wait for reception of a push message including download information for downloading a profile from an SM-DS (e.g., an SM-DS 210 in FIG. 2 and/or an SM-DS 560 in FIG. 5) or an entitlement server while outputting the screen 1210 in this manner. While waiting for the reception of the push message, if the push message is received from the SM-DS or the entitlement server as described in operations 720, 725, or 727, the electronic device may identify a first identifier (e.g., an OdsaEventID) included in the push message, and may identify whether the identified first identifier is identical to a first identifier for a profile transfer procedure between electronic devices which is in progress in the electronic device.

As a result of the identification, if the first identifier identified from the push message is not identical to the first identifier for the profile transfer procedure between the electronic devices which is in progress in the electronic device, the first identifier identified from the push message is a first identifier for a new profile transfer procedure, not the profile transfer procedure between the electronic devices which is in progress in the electronic device, so the electronic device may output a screen 1220 indicating that the push message including download information for a new profile corresponding to the new profile transfer procedure arrives. The screen 1220 may correspond to operation 729.

As a result of the identification, if the first identifier identified from the push message is identical to the first identifier for the profile transfer procedure between the electronic devices which is in progress in the electronic device, the first identifier identified from the push message is the first identifier for the profile transfer procedure between the electronic devices which is in progress in the electronic device, so the electronic device may discard the received push message and output a screen 1230 indicating that there is a profile ready to be downloaded.

The electronic device which outputs the screen 1230 may output a screen 1240 indicating that a profile according to the profile transfer procedure between the electronic devices in progress is being downloaded. If a push message is received from the SM-DS or the entitlement server while downloading the profile in this way, the electronic device may identify a first identifier (e.g., an OdsaEventID) included in the push message, and may identify whether the identified first identifier is identical to the first identifier for the profile transfer procedure between the electronic devices which is in progress in the electronic device.

As a result of the identification, if the first identifier identified from the push message is not identical to the first identifier for the profile transfer procedure between the electronic devices which is in progress in the electronic device, the first identifier identified from the push message is a first identifier for a new profile transfer procedure, not the profile transfer procedure between the electronic devices which is in progress in the electronic device, so the electronic device may output a screen 1250 indicating that the push message including download information for a new profile corresponding to the new profile transfer procedure arrives. The screen 1250 may correspond to operation 729.

As a result of the identification, if the first identifier identified from the push message is identical to the first identifier for the profile transfer procedure between the electronic devices which is in progress in the electronic device, the first identifier identified from the push message is the first identifier for the profile transfer procedure between the electronic devices which is in progress in the electronic device, so the electronic device may discard the received push message and output a screen 1260 indicating that the profile according to the profile transfer procedure between the electronic devices in progress is being downloaded.

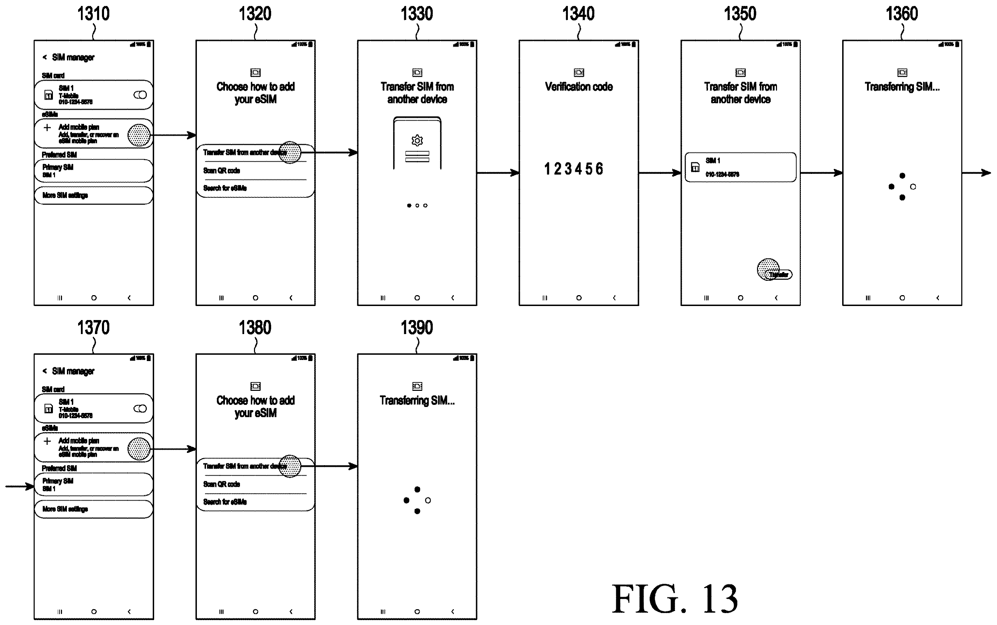

FIG. 13 is a diagram for describing an example of screens displayed on an electronic device according to an embodiment.

Screens 1310, 1320, 1330, 1340, 1350, 1360, 1370, and 1380 illustrated in FIG. 13 may be screens according to an ODSA procedure. The ODSA procedure corresponding to the screens 1310, 1320, 1330, 1340, 1350, 1360, 1370, and 1380 illustrated in FIG. 13 may be a profile transfer (or subscription transfer or line transfer) procedure between electronic devices. The screens 1310, 1320, 1330, 1340, 1350, 1360, 1370, and 1380 illustrated in FIG. 13 may be screens according to a profile transfer procedure between electronic devices described in FIGS. 8A to 8C, FIGS. 9A and 9B, or FIGS. 10A to 10C.

Referring to FIG. 13, as described in FIGS. 8A to 8C, FIGS. 9A and 9B, or FIGS. 10A to 10C, an external electronic device (e.g., an electronic device 102 and/or an electronic device 104 in FIG. 1A) may be an existing electronic device which has stored a profile (e.g., an existing profile) associated with subscription, and an electronic device (e.g., an electronic device 101 in FIGS. 1A, 1B, 2, 3, and/or 5) may be a new electronic device which will download a profile (e.g., a new profile) associated with subscription.

The external electronic device may output (for example, display) a UI (e.g., a profile transfer menu between electronic devices) for selecting profile transfer between electronic devices, as on a screen 1310, and may identify a user input 1320 for selecting to transfer a profile of the external electronic device to the electronic device via the UI.

The external electronic device which identifies the user input 1320 for selecting to transfer the profile of the external electronic device to the electronic device may output a screen 1330 indicating that a procedure for transferring the profile is started. After outputting the screen 1330, the external electronic device may output a screen 1340 for inputting a verification code for starting the procedure for transferring the profile. If a verification code (e.g., "123456") is identified via the screen 1340 for inputting the verification code, the external electronic device may output a screen 1350 indicating that a profile (e.g., a profile corresponding to SIM1) stored in the external electronic device is selected.

The external electronic device which outputs the screen 1350 may output a screen 1360 indicating that the profile transfer procedure between the electronic devices is in progress. While the external electronic device outputs the screen 1360 indicating that the profile transfer procedure between the electronic devices is in progress, if a network error occurs in a server of a data network, various errors may occur, such as a WiFi connection error, and a case that an error occurs in the external electronic device or the electronic device itself.

If the error occurs while the profile transfer procedure is performed, the external electronic device may output (for example, display) the UI (e.g., the profile transfer menu between the electronic devices) for selecting the profile transfer between the electronic devices, as on a screen 1370, and may identify a user input 1380 for selecting to transfer the profile of the external electronic device to the electronic device via the UI.

The external electronic device which identifies the user input 1380 for selecting to transfer the profile of the external electronic device to the electronic device may identify whether an incomplete profile transfer procedure exists. In an embodiment, the external electronic device may identify that the incomplete profile transfer procedure exists if an OdsaEventID corresponding to the incomplete profile transfer procedure exists.

As a result of the identification, if the incomplete profile transfer procedure exists, the external electronic device may identify a communication carrier corresponding to the OdsaEventID for the incomplete profile transfer procedure. The external electronic device which identifies the communication carrier corresponding to the OdsaEventID for the incomplete profile transfer procedure may resume a profile transfer procedure between electronic devices corresponding to the OdsaEventID and output a screen 1390 indicating that the profile transfer procedure between the electronic devices is in progress.

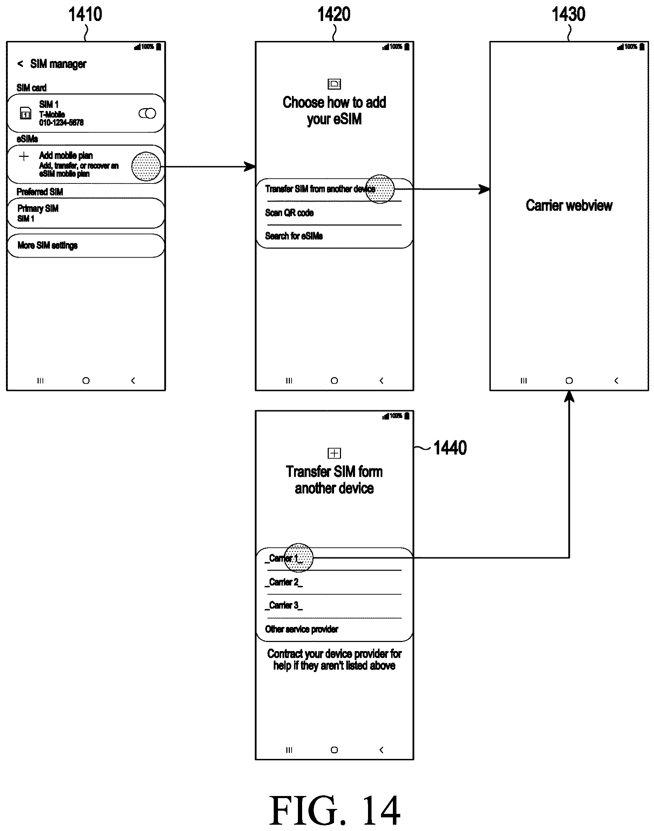

FIG. 14 is a diagram for describing an example of screens displayed on an electronic device according to an embodiment.

Screens 1410, 1420, 1430, and 1440 illustrated in FIG. 14 may be screens according to an ODSA procedure. The ODSA procedure corresponding to the screens 1410, 1420, 1430, and 1440 illustrated in FIG. 14 may be a profile transfer (or subscription transfer or line transfer) procedure between electronic devices. The screens 1410, 1420, 1430, and 1440 illustrated in FIG. 14 may be screens according to a profile transfer procedure between electronic devices described in FIG. 11.

Referring to FIG. 14, if profile transfer is performed between electronic devices, for example, an electronic device (e.g., an electronic device 101 in FIGS. 1A, 1B, 2, 3, and/or 5) and an external electronic device (e.g., an electronic device 102 and/or an electronic device 104 in FIG. 1A), the external electronic device needs to communicate with a communication provider. In an embodiment, the external electronic device may be an existing electronic device which has stored a profile (e.g., an existing profile) associated with subscription, and the electronic device may be a new electronic device which will download a profile (e.g., a new profile) associated with subscription. In order for the external electronic device to communicate with the communication provider, a scheme may be required that may specify (or may select) a communication provider which will communicate with the external electronic device from among a plurality of communication providers.

Since the external electronic device has a physical SIM or an eSIM profile which the external electronic device itself wants to transfer, the external electronic device may specify a communication carrier based on information included in the physical SIM or the eSIM profile and access an entitlement server of the specified communication carrier to perform profile transfer.

However, in a case of a reusable profile, it may be necessary to delete an existing profile stored in the external electronic device. In this case, if various errors, such as a Wi-Fi error and/or a network error, occur after the existing profile is deleted, the external electronic device may not be able to specify the communication carrier with which the external electronic device communicates. In order for the external electronic device to be able to communicate with the communication carrier, the external electronic device needs to know an entitlement server of which communication carrier to access and communicate with the communication carrier, so if the external electronic device is unable to specify the communication carrier, the external electronic device (or a user of the external electronic device) may need to select the communication carrier which the external electronic device (or the user of the external electronic device) wants to access by itself. However, it may be difficult for the external electronic device (or the user of the external electronic device) to select a desired communication carrier among numerous communication carriers, and this may cause inconvenience to users and communication carriers.

Referring to FIG. 14, the external electronic device may store a first identifier (e.g., an OdsaEventID) related to an ongoing (e.g., incomplete) ODSA procedure (e.g., a profile transfer procedure) between the external electronic device and the electronic device, communication carrier information related to a communication carrier related to the ODSA procedure, and/or scenario information related to the ODSA procedure. In an embodiment, the first identifier may be an identifier used for identifying the ongoing ODSA procedure.

While the external electronic device stores the OdsaEventID related to the profile transfer procedure, the communication carrier information related to the communication carrier related to the profile transfer procedure, and/or the scenario information related to the profile transfer procedure, an error may occur while the profile transfer procedure is performed. In this case, even though the existing profile is deleted, the external electronic device may specify a communication carrier corresponding to the profile transfer procedure based on the OdsaEventID, and thus resume and complete the profile transfer procedure. In an embodiment, even though the existing profile is deleted, the external electronic device may specify the communication carrier corresponding to the profile transfer procedure based on the OdsaEventID to resume and complete the profile transfer procedure, rather than restarting the profile transfer procedure from the beginning, thereby increasing convenience for users and communication carriers.

If the error occurs while the profile transfer procedure is performed, the external electronic device may output (for example, may display) a UI (e.g., a profile transfer menu between electronic devices) for selecting profile transfer between the electronic devices, as in a screen 1410, and may identify a user input 1420 for selecting to transfer a profile of the external electronic device to the electronic device via the UI.

The external electronic device which identifies the user input 1420 for selecting to transfer the profile of the external electronic device to the electronic device may identify whether an incomplete profile transfer procedure exists. In an embodiment, the external electronic device may identify that the incomplete profile transfer procedure exists if an OdsaEventID corresponding to the incomplete profile transfer procedure exists.

As a result of the identification, if the incomplete profile transfer procedure exists, the external electronic device may identify a communication carrier corresponding to the OdsaEventID for the incomplete profile transfer procedure. The external electronic device which identifies the communication carrier corresponding to the OdsaEventID for the incomplete profile transfer procedure may output a carrier webview 1430 corresponding to the communication carrier corresponding to the OdsaEventID.

As the result of the identification, if the incomplete profile transfer procedure does not exist, the external electronic device may output (for example, may display) a list of communication carriers as on a screen 1440, and based on a user input for selecting a communication carrier, may output a carrier webview corresponding to the selected communication carrier 1430.

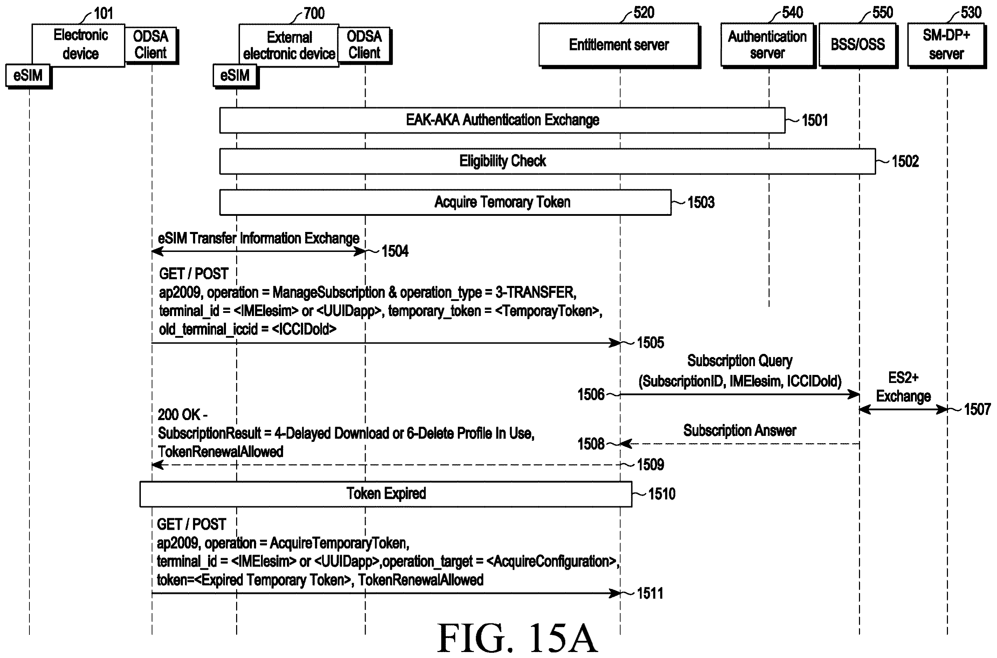

FIG. 15A is a signal flow diagram illustrating an ODSA procedure in a wireless communication network according to an embodiment.

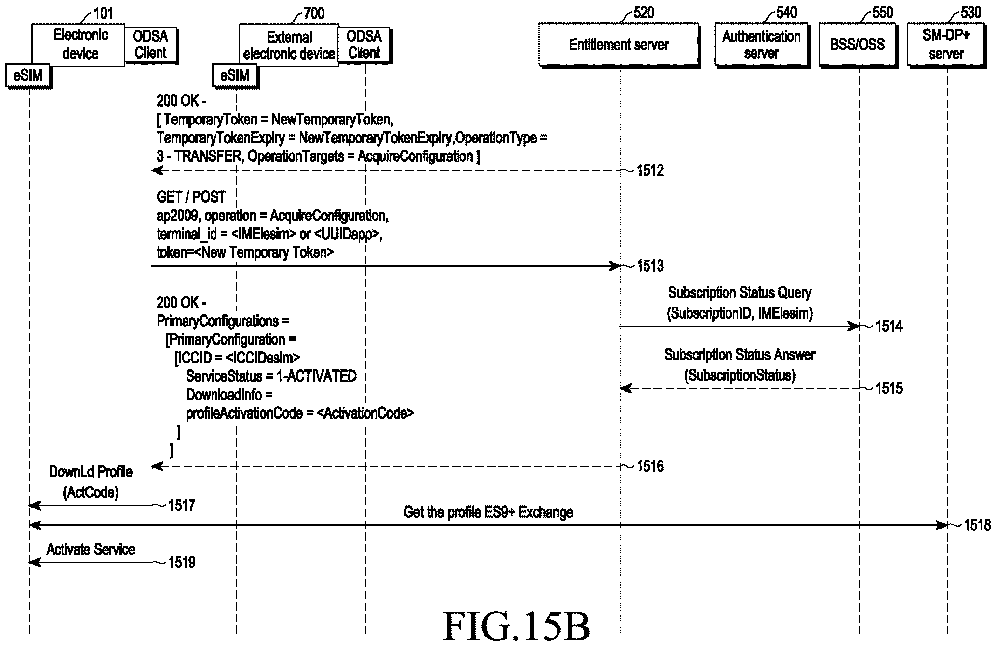

FIG. 15B is a signal flow diagram illustrating an ODSA procedure in a wireless communication network according to an embodiment.

Prior to description of FIGS. 15A and 15B, an ODSA procedure may include a profile transfer (or subscription transfer or line transfer) procedure between electronic devices.

In the profile transfer procedure, a reusable profile (or a redownloadable profile) may need to be deleted by an existing electronic device. However, before the existing electronic device deletes a profile (e.g., an existing profile) and receives download information (e.g., DownloadInfo) for downloading a profile (e.g., a new profile) from a new electronic device, effective time for authentication information (e.g., a token) may expire. In this way, if the effective time for the authentication information expires, various errors may occur, such as a case that authentication (e.g., EAP-AKA authentication) based on the existing profile is impossible since the existing profile is deleted.

In this case, the various errors may occur due to the expiration of the authentication information.

Additionally, in the profile transfer procedure, if profile download progresses in a delayed download scheme, the effective time for the authentication information may expire if the new electronic device receives a push message including information indicating that the profile is ready, or while the new electronic device performs an operation according to a polling scheme. In this way, if the effective time for the authentication information expires, the various errors may occur, such as the case that the authentication (e.g., the EAP-AKA authentication) based on the existing profile is impossible if a communication carrier deactivates the existing profile.

Therefore, in an embodiment of the disclosure, if an error situation occurs, such as a case that authentication based on an existing profile is impossible since effective time for a token expires during a profile transfer procedure, a scheme for updating the token without a new authentication procedure may be proposed. In an embodiment, the scheme for updating the token without the new authentication procedure may have constraints, such as limiting operation_targets of the token to AcquireConfiguration, and/or allowing only one-time update for the token. In an embodiment, the operation _targets may be used by an AcquireTemporaryToken operation, and may be used for acquiring a temporary token associated with an ODSA operation(s) and an application ID (AppID). The AcquireTemporaryToken operation has been described in Table 1, a redundant description thereof may be omitted herein. In an embodiment, the operation_targets may represent a list with all ODSA operations allowed to be requested using the temporary token (TemporaryToken).

Referring to FIGS. 15A and 15B, a wireless communication network may include an electronic device 101 (e.g., an electronic device 101 in FIGS. 1A, 1B, 2, 3, and/or 5), an external electronic device 700 (e.g., an electronic device 102 and/or an electronic device 104 in FIG. 1A), an entitlement server 520 (e.g., an entitlement server 520 in FIG. 5), an SM-DP+ server 530 (e.g., an SM-DP+ server 220 in FIG. 2 and/or an SM-DP+ server 530 in FIG. 5), an authentication server 540 (e.g., an authentication server 540 in FIG. 5), and/or a BSS/OSS 550 (e.g., a BSS/OSS 550 in FIG. 5). The external electronic device 700 may be an existing electronic device which has stored a profile (e.g., an existing profile) associated with subscription, and the electronic device 101 may be a new electronic device which will download a profile (e.g., a new profile) associated with subscription. The entitlement server 520 may also be referred to as an "ODSA device GW entitlement configuration server."

In an embodiment, an ODSA client application may be executed on each of the electronic device 101 and the external electronic device 700. The ODSA client application may be executed on a requesting device or a primary device and may allow an end-user to perform seamless activation of subscription and associated services on an eSIM of a companion device or the primary device without intervention of a customer or support representative of a service provider. The ODSA client application may be implemented to be similar to or substantially the same as an ODSA client application specified in a standard document TS. 43, so a redundant description thereof may be omitted herein. In an embodiment, each of the electronic device 101 and the external electronic device 700 may include an eSIM. In FIGS. 15A and 15B, an operation of the electronic device 101 may be performed by the ODSA client application, and an operation of the external electronic device 700 may also be performed by the ODSA client application.

In operation 1501, an EAP-AKA authentication exchange operation may be performed in the external electronic device 700, the entitlement server 520, and the authentication server 540. In the EAP-AKA authentication exchange operation, the external electronic device 700 may transmit a request message for requesting to trigger an authentication procedure to the entitlement server 520, and accordingly, the external electronic device 700 and the entitlement server 520 may perform an authentication exchange procedure (e.g., an EAP-AKA authentication process). Although FIG. 15A describes a case that the authentication process between the external electronic device 700 and the entitlement server 520 is the EAP-AKA authentication process as an example, there may be no limitation on the authentication process between the external electronic device 700 and the entitlement server 520. If a result of the EAP-AKA authentication process indicates success, the entitlement server 520 may transmit authentication information (e.g., a token) to the external electronic device 700, so the external electronic device 700 may acquire the authentication information. In FIG. 15A, it will be assumed that the result of the EAP-AKA authentication process indicates the success, and if the result of the EAP-AKA authentication process indicates failure, the external electronic device 700 may not perform any further operations. In FIG. 15A, operation 1501 is expressed as "EAP-AKA Authentication Exchange".

In operation 1502, an eligibility check operation may be performed in the external electronic device 700 which acquires the authentication information, the entitlement server 520, the authentication server 540, and the BSS/OSS 550. In the eligibility check operation, the external electronic device 700 may perform an eligibility check with the entitlement server 520 to transfer the profile of the external electronic device 700 to the electronic device 101 in operation 702. The external electronic device 700 may request an eligibility check for the external electronic device 700 from the entitlement server 520 based on an HTTP GET scheme or an HTTP POST scheme. For example, the external electronic device 700 may request the eligibility check for whether it is possible for the ODSA client application and a corresponding external electronic device 700 to support an ODSA service (e.g., a primary ODSA service (or a primary ODSA procedure) and/or a companion ODSA service (or a companion ODSA procedure)) by transmitting a first request message for requesting the eligibility check to the entitlement server 520. The eligibility check in operation 1502 may include an eligibility check for whether the external electronic device 700 supports transfer of a profile installed on the external electronic device 700 to the electronic device 101. The primary ODSA procedure and the companion ODSA procedure may be implemented to be similar to or the same as those specified in the standard document TS. 43, so a redundant description thereof may be omitted herein. According to an embodiment, the first request message may be a request message for requesting the eligibility check, for example, an HTTP REQUEST message. The external electronic device 700 may request the eligibility check by transmitting the first request message (e.g., an HTTP REQUEST message) including "CheckEligibility" as the ODSA operation information to the entitlement server 520, according to the ODSA procedure specified in the standard document TS. 43 in operation 1502. The entitlement server 520 which receives the first request message including CheckEligibility as the ODSA operation information from the external electronic device 700 may perform the eligibility check for the external electronic device 700 based on the first request message including CheckEligibility as the ODSA operation information. If a result of the eligibility check for the external electronic device 700 indicates success, the entitlement server 520 may transmit a 200 OK message (e.g., an HTTP 200 OK message) as a response message to the first request message to the external electronic device 700. In FIG. 15A, it will be assumed that the result of the eligibility check for the external electronic device 700 indicates the success, and if the result of the eligibility check for the external electronic device 700 indicates failure, no further operations may be performed. In an embodiment, if the result of the eligibility check indicates the success, the 200 OK message may include information of "ENABLED." In FIG. 15A, operation 1502 is expressed as "Eligibility Check".

In operation 1503, a temporary authentication information (e.g., a temporary token) acquiring operation may be performed in the external electronic device 700 and the entitlement server 520. In the temporary authentication information acquiring operation, the external electronic device 700 which receives a 200 OK message including the information of "ENABLED" may request temporary authentication information which may be used by the electronic device 101 by transmitting, to the entitlement server 520, a second request message (e.g., an HTTP REQUEST message) including "AcquireTemporaryToken" as ODSA operation information and including operation_targets for indicating which requests may be used by a trusted third party (e.g., the electronic device 101). In an embodiment, the temporary authentication information may be temporary authentication information related to an ongoing ODSA procedure (e.g., an ongoing profile transfer procedure). The entitlement server 520 which receives the second request message including the AcquireTemporaryToken as the ODSA operation information from the external electronic device 700 may generate a temporary token based on the second request message including the AcquireTemporaryToken as the ODSA operation information. The entitlement server 520 may generate the temporary authentication information if the electronic device 101 is permitted to use subscription (or a profile) for the external electronic device 700. In FIG. 15A, it will be assumed that the electronic device 101 is permitted to use the subscription (or the profile) for the external electronic device 700, and if the electronic device 101 is not permitted to use the subscription (or the profile) for the external electronic device 700, no further operations may be performed. In an embodiment, the temporary authentication information may be used during effective time, and therefore, the temporary authentication information may not be used if the effective time expires. The entitlement server 520 which generates the temporary authentication information may transmit a 200 OK message (e.g., an HTTP 200 OK message) including the temporary authentication information as a response message to the second request message to the external electronic device 700, and the external electronic device 700 may acquire the temporary authentication information based on the 200 OK message received from the external electronic device 700. In FIG. 15A, operation 1503 is expressed as "Acquire Temporary Token".

In operation 1504, an eSIM transfer information exchange operation may be performed between the external electronic device 700 and the electronic device 101. In the eSIM transfer information exchange operation, the external electronic device 700 may transmit all relevant eSIM transfer information to the electronic device 101, and the eSIM transfer information may include the temporary authentication information. In FIG. 15A, operation 1504 is expressed as "eSIM Transfer Information Exchange."

The electronic device 101 which receives the eSIM transfer information including the temporary authentication information from the external electronic device 700 may transmit a third request message (e.g., an HTTP REQUEST message) including the temporary authentication information and including "ManageSubscription" as ODSA operation information to the entitlement server 520 in operation 1505. In an embodiment, the third request message may include a terminal_id which is a terminal ID of the electronic device 101, and an old_terminal_iccid which is a terminal ICCID of the external electronic device 700. For example, the terminal_id of the electronic device 101 may be an IMEIesim or an UUIDapp, and it will be assumed to be the IMEIesim in FIG. 15A. For example, the old_terminal_iccid of the external electronic device 700 may be an ICCIDold. In an embodiment, the third request message may be a message for requesting a subscription management operation. In an embodiment, the subscription management operation may include various operations related to subscription. In an embodiment, the "ManageSubscrition" may be ODSA operation information used for requesting a subscription related operation. According to an embodiment, the third request message may include operation type information, and the operation type information has been described in Table 2, so a redundant description thereof will be omitted herein. The third request message may include an operation type having a value of "3-TRANSFER SUBSCRIPTION" in Table 2 and the temporary authentication information (e.g., the temporary token), and "TRANSFER SUBSCRIPTION" may be an operation type for transferring a subscription (e.g., a profile) of an existing electronic device (e.g., the external electronic device 700) having an eSIM to another electronic device (e.g., the electronic device 101) having an eSIM.

The entitlement server 520 which receives the third request message from the electronic device 101 may transmit a subscription query to the BSS/OSS 550 in operation 1506. The subscription query may include subscription identity information (e.g., a "SubscriptionID"), the terminal ID (e.g., the IMEIesim) of the electronic device 101, and the terminal ICCID (e.g., the ICCIDold) of the external electronic device 700, and may be used for requesting to activate a new subscription (or profile) (for example, to activate the new subscription (or profile) for the external electronic device 700).

The BSS/OSS 550 which receives the subscription query from the entitlement server 520 may perform an ES2+ exchange operation with the SM-DP+ server 530 in operation 1507. In the ES2+ exchange operation, the BSS/OSS 550 may request a new profile from the SM-DP+ server 530 via an ES2+ interface. The SM-DP+ server 530 which identifies the new profile request from the BSS/OSS 550 may generate the new profile. In FIG. 15A, profile download in a case that a delayed download scheme is used or that a reusable profile (or a re-downloadable profile) is used may be considered. In this case, the SM-DP+ server 530 may notify the BSS/OSS 550 that download information for downloading the new profile is delayed, or may notify that a profile in use (e.g., an existing profile) needs to be deleted. In FIG. 15A, operation 1507 is expressed as "ES2+ Exchange".

The BSS/OSS 550 which is notified that the download information for downloading the new profile is delayed from the SM-DP+ server 530 may transmit, to the entitlement server 520, a subscription answer message indicating that the download information is delayed or that the existing profile needs to be deleted in response to the subscription query message in operation 1508. For example, if the delayed download scheme is used, the BSS/OSS 550 may transmit, to the entitlement server 520, the subscription answer message indicating that the download information is delayed in response to the subscription query message in operation 1508. For example, if a reusable profile (or a re-downloadable profile) is used, the BSS/OSS 550 may transmit, to the entitlement server 520, the subscription answer message indicating that the existing profile needs to be deleted in response to the subscription query message in operation 1508.

The entitlement server 520 which receives the subscription answer message from the BSS/OSS 550 may transmit a 200 OK message which is a response message to the third request message to the electronic device 101 in operation 1509, and the 200 OK message may include subscription result information and authentication information renewal allowed information. In an embodiment, the subscription result information may indicate "4 - DELAYED DOWNLOAD" or "6 - DELETE PROFILE IN USE." DELAYED DOWNLOAD may be subscription result information indicating that the profile is not ready to be downloaded when a user (e.g., the external electronic device 700) requests subscription transfer (or profile transfer). In an embodiment, DELETE PROFILE IN USE may be subscription result information indicating that a profile in use needs to be deleted. Additionally, if a communication carrier supports websheet and uses the delayed download scheme, the subscription result information included in the 200 OK message may indicate "1-CONTINUE TO WEBSEET." CONTINUE TO WEBSEET may be subscription result information indicating that an end-user needs to perform a subscription web view procedure. The subscription result information has been described in Table 3, so a detailed description thereof will be omitted herein.

In an embodiment, the authentication information renewal allowed information may be TokenRenewalAllowed, and TokenRenewalAllowed may be information indicating that renewal of the authentication information (e.g., the token) is allowed. In an embodiment, TokenRenewalAllowed may be information indicating that the renewal of the authentication information is allowed in a set situation, for example, a situation where the download information for downloading the new profile is waiting as the delayed download scheme is used, and/or a situation where the profile in use (e.g., the existing profile) is deleted as the reusable profile (or the re-downloadable profile) is used. A name such as TokenRenewalAllowed may be changed or modified to another name as needed.

The electronic device 101 which receives the 200 OK message from the entitlement server 520 may identify, based on the TokenRenewalAllowed included in the 200 OK message, that the renewal of the authentication information is allowed in the set situation, for example, the situation where the download information for downloading the new profile is waiting as the delayed download scheme is used, and/or the situation where the profile in use (e.g., the existing profile) is deleted as the reusable profile (or the re-downloadable profile) is used.

Meanwhile, due to various reasons, effective time of the authentication information (e.g., the token) of the external electronic device 700 may expire in operation 1510. Reasons why the effective time of the authentication information (e.g., the token) expires may be similar to or substantially the same as those described in FIGS. 8A to 8C and/or FIGS. 10A to 10C, so a redundant description thereof will be omitted herein. In FIG. 15A, operation 1510 is expressed as "token expired."

If the effective time for the token has expired, the electronic device 101 may, in operation 1511, transmit a fourth request message for requesting renewal of the temporary authentication information (e.g., the temporary token) to the entitlement server 520. For example, the fourth request message may be an HTTP REQUEST message. In an embodiment, the fourth request message may include TokenRenewalAllowed, include "AcquireTemporaryToken" as ODSA operation information, include "AcquireConfiguration" as operation_targets, and include the expired temporary token as the token. In an embodiment, the fourth request message may include the terminal_id (e.g., the IMEIesim or the UUIDapp) of the electronic device 101.

The entitlement server 520 which receives the fourth request message from the electronic device 101 may identified that the renewal of the authentication information (e.g., the token) is allowed based on the TokenRenewalAllowed included in the fourth request message. In an embodiment, the entitlement server 520 may identify that the renewal of the temporary authentication information for the electronic device 101 is possible based on the TokenRenewalAllowed even though the effective time for the temporary authentication information (e.g., the temporary token) generated in the temporary authentication information acquiring operation in operation 1503 has expired.

The entitlement server 520 may generate new temporary authentication information (e.g., a new temporary token) in operation 1512. The entitlement server 520 which generates the new temporary authentication information may transmit a 200 OK message (e.g., an HTTP 200 OK message) including the new temporary authentication information as a response message to the fourth request message to the external electronic device 700, and the external electronic device 700 may acquire the new temporary authentication information based on the 200 OK message received from the external electronic device 700 in operation 1512. In an embodiment, the 200 OK message in operation 1512 may include information indicating an effective period for the temporary authentication information, an operation type having a value of "3-TRANSFER SUBSCRIPTION", and "AcquireConfiguration" as operation_targets. In the 200 OK message in operation 1512, Temporary Token Expiry which is the information indicating the effective period for temporary authentication information may be set to New Temporary Token Expiry which is an effective period for the new temporary authentication information.

Meanwhile, although not separately illustrated in FIGS. 15A and 15B, in an embodiment, the entitlement server 520 may, based on the TokenRenewalAllowed, identify the effective time for the temporary authentication information (e.g., the temporary token) generated in the temporary authentication information acquiring operation in operation 1503, and identify that renewal of the temporary authentication information for the electronic device 101 is possible before the effective time for the temporary authentication information expires. For example, if the effective time for the temporary token is given in operation 1503, the electronic device 101 may identify the effective time for the temporary token to perform operation 1511 before the effective time for the temporary token expires (before operation 1510). For example, the electronic device 101 may transmit, to the entitlement server 520, a fourth request message for requesting renewal of the temporary authentication information (e.g., the temporary token) before the effective time for the temporary token expires. For example, the fourth request message may be an HTTP REQUEST message. In an embodiment, the fourth request message may include the TokenRenewalAllowed, include "AcquireTemporaryToken" as ODSA operation information, include "AcquireConfiguration" as operation _targets, and include an expired temporary token as a token. At this time, the token in operation 1511 may be a temporary token whose effective time does not expire, and the entitlement server 520 which receives the fourth request message from the electronic device 101 may perform operation 1512 and subsequent operations based on the TokenRenewalAllowed. Even though the entitlement server 520 receives the AcquireTemporaryToken via the fourth request message before the expiration of the effective time for the temporary token, if the TokenRenewalAllowed is not included in the fourth request message, the entitlement server 520 may identify that the renewal of the authentication information (e.g., the token) is not allowed, and even though the effective time for the temporary authentication information (e.g., the temporary token) generated in the temporary authentication information acquiring operation in operation 1503 does not expire, the entitlement server 520 may identify that the renewal of the temporary authentication information for the electronic device 101 is not possible. Accordingly, the entitlement server 520 may reject the request for the renewal of the authentication information by responding with an ERROR message to the fourth request message received from the electronic device 101.

The electronic device 101 which receives the 200 OK message as the response message to the fourth request message from the entitlement server 520 may transmit, to the entitlement server 520, a fifth request message for requesting to provide service-related data for a primary device (e.g., the external electronic device 700) or a companion device in operation 1513. For example, the fifth request message may be an HTTP REQUEST message. In an embodiment, the fifth request message may include ODSA operation information set to "AcquireConfiguration", the terminal_id (e.g., the IMEIesim or the UUIDapp) of the electronic device 101, and the new temporary authentication information. In this way, the electronic device 101 may access the entitlement server 520 using the new temporary authentication information.

The entitlement server 520 which receives the HTTP REQUEST message from the electronic device 101 may resume a profile transfer procedure based on the new temporary authentication information in operation 1514. The entitlement server 520 which resumes the profile transfer procedure may transmit a message for querying subscription (or profile) status to the BSS/OSS 550 in operation 1514. For example, the message for querying the subscription (or profile) status may be a Subscription Status Query message. In an embodiment, the Subscription Status Query message may include the SubscriptionID and the IMEIesim which is the terminal_id of the electronic device 101.

The BSS/OSS 550 which receives the Subscription Status Query message from the entitlement server 520 may transmit, to the entitlement server 520, a Subscription Status Answer message which includes information related to whether a profile download is ready by checking the subscription status in response to the Subscription Status Query message in operation 1515. The Subscription Status Answer message may include information about the subscription status indicating that the profile download information for downloading the profile is available and that the subscription (or profile) is ready.

The entitlement server 520 which receives the Subscription Status Answer message from the BSS/OSS 550 may transmit a 200 OK message (e.g., an HTTP 200 OK message) to the electronic device 101 in response to the fifth request message in operation 1516. The 200 OK message in operation 1516 may include a primary configuration, and the primary configuration may be mandatory for the OPSA procedure. The primary configuration may include parameters which provide configuration settings of subscription and service, and may include an ICCID set to "ICCIDesim", service status (ServiceStauts) set to "1 - ACTIVATED", DownloadInfo which is the download information for downloading the profile (e.g., the new profile) from the electronic device 101, and a profile activation code (ProfileActiovationCode) set to an activation code (ActivationCode). In an embodiment, the service status of "1 - ACTIVATED" may indicate that a service of an eSIM device (e.g., the electronic device 101) is activated. In an embodiment, the activation code may be a code defined to allow download of a profile from the SM-DP+ server 530. The primary configuration may be implemented to be similar to or substantially the same as primary configuration specified in the standard document TS. 43, so a detailed description thereof will be omitted herein.

The ODSA client of the electronic device 101 which receives the 200 OK message in response to the fifth request message from the entitlement server 520, may, in operation 1517, notify the eSIM to download the profile (e.g., the eSIM profile). In FIG. 15B, operation 1517 is expressed as "DownLd profile (ActCode)."

As the ODSA client of the electronic device 101 informs the eSIM to download the profile, in operation 1518, the eSIM of the electronic device 101 may download the profile from the SM-DP+ server 530 based on the DownloadInfo included in the 200 OK message in operation 1516. In an embodiment, the eSIM of the electronic device 101 may download the profile from the SM-DP+ server 530 via an ES9+ channel. In FIG. 15B, operation 1518 is expressed as "Get the profile ES9+ Exchange".

As the profile is downloaded from the SM-DP+ server 530 to the eSIM, the ODSA client of the electronic device 101 may request service activation from the eSIM of the electronic device 101 in operation 1519. The service activation may indicate that the downloaded profile is installed and the service status is activated. As the service is activated, the electronic device 101 may initiate a service (e.g., a cellular service). In FIG. 15B, operation 1519 is expressed as "Activate Service."

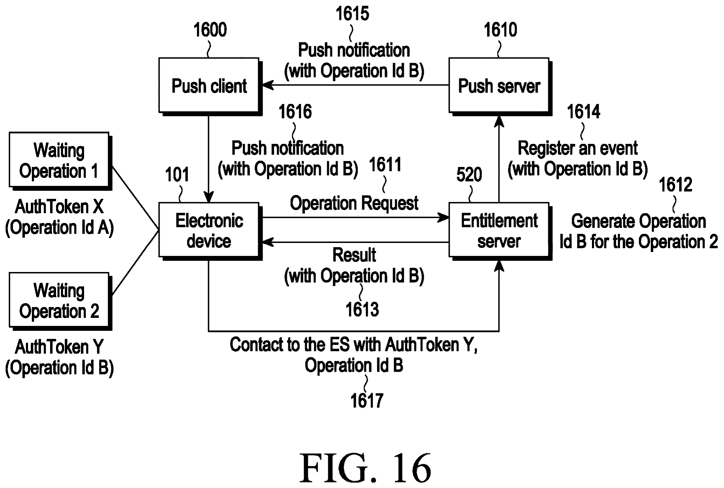

FIG. 16 is a diagram for describing an operation for an electronic device to manage a plurality of pieces of authentication information in a wireless communication network according to an embodiment.

Referring to FIG. 16, the wireless communication network may include an electronic device 101 (e.g., an electronic device 101 in FIGS. 1A, 1B, 2, 3, and/or 5), an entitlement server 520 (e.g., an entitlement server 520 in FIG. 5), a push client 1600, and/or a push server 1610.

The electronic device 101 may access the entitlement server 520 for various procedures, such as a profile transfer procedure between electronic devices, a subscription procedure, and/or a subscription change procedure, perform an authentication procedure with the entitlement server 520, and if the authentication procedure is successful, acquire an authenticated token (AuthToken) from the entitlement server 520. The electronic device 101 may perform a plurality of authentication procedures for the same communication carrier to acquire a plurality of AuthTokens, or perform a plurality of authentication procedures for different communication carriers to obtain a plurality of AuthTokens.

So, if a communication carrier transmits a push message to the electronic device 101, such as a profile download procedure based on a delayed download scheme, an operation ID (OperationID) for identifying an operation between the electronic device 101 and the entitlement server 520 is shared in advance, and if the entitlement server 520 includes the shared OperationID in the push message, the electronic device 101 may identify a corresponding AuthToken based on the OperationID included in the push message among the plurality of AuthTokens. In an embodiment, the OperationID may be similar to or substantially the same as an OdsaEventID, so a redundant description thereof will be omitted. In addition, the operation between the electronic device 101 and the entitlement server 520 may be similar to or substantially the same as an ODSA operation, so a redundant description thereof will be omitted.

The electronic device 101 which identifies the corresponding AuthToken based on the OperationID may perform a corresponding procedure with the entitlement server 520 based on the OperationID and the AuthToken. This may be described in detail as follows.

The electronic device 101 may transmit an operation request message to the entitlement server 520 in operation 1611. In an embodiment, the operation request message may be a message for requesting an operation 2, for example, a profile transfer operation.

The entitlement server 520 which receives the operation request message from the electronic device 101 may generate an OperationID (e.g., an OperationID B) for the operation 2 in operation 1612. The entitlement server 520 which generates the OperationID for the operation 2 may transmit a result message including the OperationID for the operation 2 as a response message to the operation request message to the electronic device 101 in operation 1613. The entitlement server 520 which transmits the result message to the electronic device 101 may transmit, to the push server 1610, an event registration message for requesting to register the operation 2 using the OperationID for the operation 2 in operation 1614. For example, if the operation 2 is the profile transfer operation, the push server 1610 may be an SM-DP+ server.

The push server 1610 which receives the event registration message from the entitlement server 520 may register the OperationID B which is the OperationID for the operation 2, and then, in operation 1615, transmit a push notification message including the OperationID for the operation 2 to the push client 1600. For example, if the operation 2 is the profile transfer operation, the push client 1600 may be an SM-DS.

The push client 1600 which receives the push notification message including the OperationID for the operation 2 from the entitlement server 520 may transmit the push notification message including the OperationID for the operation 2 to the electronic device 101 in operation 1616.

The electronic device 101 which receives the push notification message including the OperationID for the operation 2 from the push client 1600 may map and store an authentication token (e.g., an AuthToken Y) for the operation 2 and the OperationID for the operation 2. After mapping and storing the authentication token (e.g., the AuthToken Y) for the operation 2 and the OperationID for the operation 2, if the electronic device 101 accesses the entitlement server 520 for the operation 2, the electronic device 101 may access the entitlement server 520 using the authentication token (e.g., the AuthToken Y) for the operation 2 and the OperationID for the operation 2, as in operation 1617.

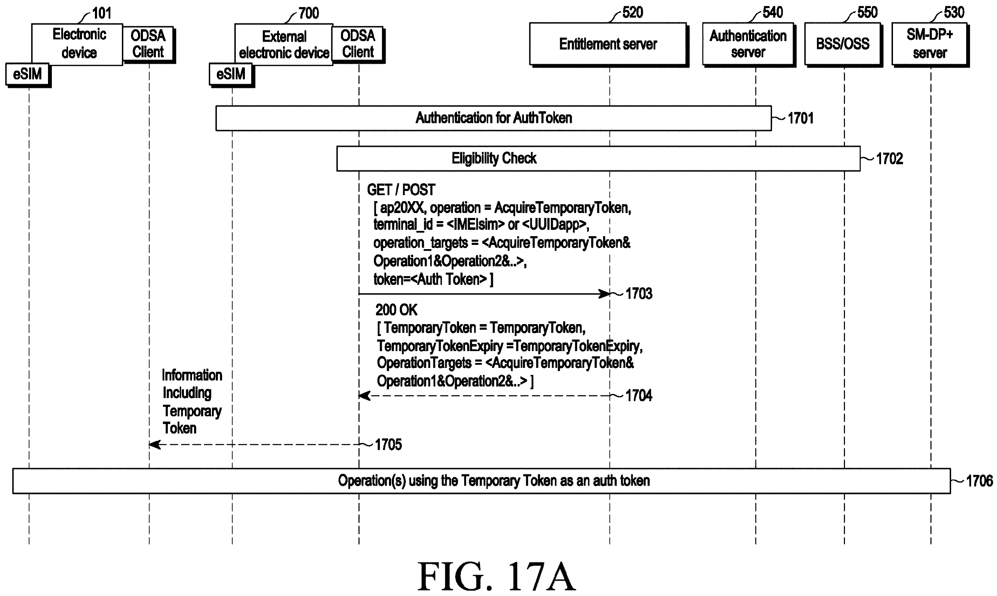

FIG. 17A is a signal flow diagram illustrating an ODSA procedure in a wireless communication network according to an embodiment.

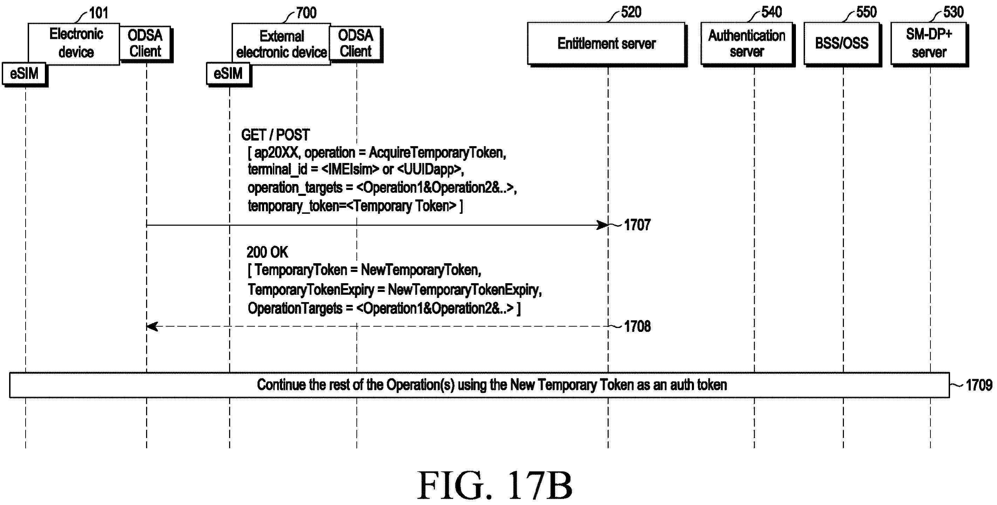

FIG. 17B is a signal flow diagram illustrating an ODSA procedure in a wireless communication network according to an embodiment.

Prior to description of FIGS. 17A and 17B, an ODSA procedure may include a profile transfer (or subscription transfer or line transfer) procedure between electronic devices.

As described in FIGS. 15A and 15B, in the profile transfer procedure, a reusable profile (or a redownloadable profile) may need to be deleted by an existing electronic device. However, before the existing electronic device deletes a profile (e.g., an existing profile) and receives download information (e.g., DownloadInfo) for downloading a profile (e.g., a new profile) from a new electronic device, effective time for authentication information (e.g., a token) may expire. In this way, if the effective time for the authentication information expires, various errors may occur, such as a case that authentication (e.g., EAP-AKA authentication) based on the existing profile is impossible since the existing profile is deleted.

In this case, the various errors may occur due to the expiration of the authentication information.

Additionally, in the profile transfer procedure, if profile download progresses in a delayed download scheme, the effective time for the authentication information may expire if the new electronic device receives a push message including information indicating that the profile is ready, or while the new electronic device performs an operation according to a polling scheme. In this way, if the effective time for the authentication information expires, the various errors may occur, such as the case that the authentication (e.g., the EAP-AKA authentication) based on the existing profile is impossible if a communication carrier deactivates the existing profile.

Therefore, in an embodiment of the disclosure, in consideration of a situation where an error occurs during a profile transfer procedure, such as a case that authentication based on an existing profile is impossible, a scheme for updating a token without performing an authentication procedure from the beginning may be proposed. In an embodiment, a scheme for updating the token without performing the authentication procedure from the beginning may have constraints, such as limiting operation _targets of the token (for example, limiting operation _targets of the token to AcquireConfiguration) and/or allowing only one-time update to the token. In an embodiment, the operation _targets may include an AcquireTemporaryToken operation, and may be used for acquiring a temporary token associated with an ODSA operation(s) and an AppID.

In the ODSA procedure illustrated in FIGS. 17A and 17B, the entitlement server 520 may indicate that renewal of the token is allowed by transmitting, to the external electronic device 700, a response message which includes the AcquireTemporaryToken in OperationTargets in response to the request message which includes the ODSA operation information set to the AcquireTemporaryToken.

The AcquireTemporaryToken operation has been described in Table 1, a redundant description thereof may be omitted herein. In an embodiment, the operation_targets may represent a list with all ODSA operations allowed to be requested using the temporary token (TemporaryToken).

Referring to FIGS. 17A and 17B, a wireless communication network may include an electronic device 101 (e.g., an electronic device 101 in FIGS. 1A, 1B, 2, 3, and/or 5), an external electronic device 700 (e.g., an electronic device 102 and/or an electronic device 104 in FIG. 1A), an entitlement server 520 (e.g., an entitlement server 520 in FIG. 5), an SM-DP+ server 530 (e.g., an SM-DP+ server 220 in FIG. 2 and/or an SM-DP+ server 530 in FIG. 5), an authentication server 540 (e.g., an authentication server 540 in FIG. 5), and/or a BSS/OSS 550 (e.g., a BSS/OSS 550 in FIG. 5). The external electronic device 700 may be an existing electronic device which has stored a profile (e.g., an existing profile) associated with subscription, and the electronic device 101 may be a new electronic device which will download a profile (e.g., a new profile) associated with subscription. The entitlement server 520 may also be referred to as an "ODSA device GW entitlement configuration server."

In an embodiment, an ODSA client application may be executed on each of the electronic device 101 and the external electronic device 700. The ODSA client application may be executed on a requesting device or a primary device and may allow an end-user to perform seamless activation of subscription and associated services on an eSIM of a companion device or the primary device without intervention of a customer or support representative of a service provider. The ODSA client application may be implemented to be similar to or substantially the same as an ODSA client application specified in a standard document TS. 43, so a redundant description thereof may be omitted herein. In an embodiment, each of the electronic device 101 and the external electronic device 700 may include an eSIM. In FIGS. 17A and 17B, an operation of the electronic device 101 may be performed by the ODSA client application, and an operation of the external electronic device 700 may also be performed by the ODSA client application.

In operation 1701, an authentication process between the external electronic device 700 and the entitlement server 520 may be performed in the external electronic device 700, the entitlement server 520, and the authentication server 540. The external electronic device 700 may transmit a request message for requesting to trigger an authentication procedure to the entitlement server 520, and accordingly, the external electronic device 700 and the entitlement server 520 may perform an authentication exchange procedure (e.g., an EAP-AKA authentication process). If a result of the authentication process indicates success, the entitlement server 520 may transmit authentication information (e.g., an authentication token (Auth Token)) to the external electronic device 700, so the external electronic device 700 may acquire the authentication information. An example of the authentication exchange procedure in operation 1701 may be the EAP-AKA authentication process described in operation 1501 in FIG. 15A. In FIG. 17A, operation 1701 is expressed as "Authentication for Auth Token".

In operation 1702, an eligibility check operation may be performed in the external electronic device 700 which acquires the authentication information, the entitlement server 520, the authentication server 540, and the BSS/OSS 550. In FIG. 17A, operation 1702 is expressed as "Eligibility Check." The eligibility check operation in operation 1702 may include an eligibility check operation for identifying whether the entitlement server 520 is eligible to provide an ODSA client application to a requesting device and an end user. In an embodiment, a result value indicating a result of the eligibility check operation may be determined based on various parameters such as subscription/subscription plan type of the end user and device details. According to an embodiment, the first request message may be a request message for requesting the eligibility check, for example, an HTTP REQUEST message. The external electronic device 700 may request the eligibility check by transmitting the first request message (e.g., an HTTP REQUEST message) including "CheckEligibility" as the ODSA operation information to the entitlement server 520, according to the ODSA procedure specified in the standard document TS. 43 in operation 1702.

The entitlement server 520 which receives the first request message including CheckEligibility as the ODSA operation information from the external electronic device 700 may perform the eligibility check for the ODSA client application in the external electronic device 700 based on the first request message including CheckEligibility as the ODSA operation information. If a result of the eligibility check indicates success, the entitlement server 520 may transmit a 200 OK message (e.g., an HTTP 200 OK message) as a response message to the first request message to the external electronic device 700. In FIG. 17A, it will be assumed that the result of the eligibility check for the electronic device 101 indicates the success, and if the result of the eligibility check for the electronic device 101 indicates failure, no further operations may be performed. In an embodiment, if the result of the eligibility check indicates the success, the 200 OK message may include information of "ENABLED."

In operations 1703 to 1704, a temporary authentication information (e.g., a temporary token) acquiring operation may be performed in the external electronic device 700 and the entitlement server 520, and this may be described in detail as follows.

The external electronic device 700 which receives a 200 OK message including the information of "ENABLED" may request temporary authentication information which may be used by the electronic device 101 by transmitting, to the entitlement server 520, a second request message (e.g., an HTTP REQUEST message) including "AcquireTemporaryToken" as ODSA operation information and including operation _targets for indicating which requests may be used by a trusted third party (e.g., the electronic device 101) with issued temporary authentication information in operation 1703. According to an embodiment, "AcquireTemporaryToken" may or may not be explicitly included in operation _targets as a usage indicator in a request for temporary authentication information renewal. In an embodiment, the second request message may include authentication information (e.g., an authentication token (Auth Token)). In an embodiment, the second request message may include a terminal_id which is a terminal ID of the external electronic device 700. For example, the terminal_id of the external electronic device 700 may be an IMEIesim or an UUIDapp. In FIG. 17A, operation 1703 is expressed as "GET/POST [ap200XX, operation = AcquireTemporaryToken, terminal_id = <IMEIsim> or <UUIDapp>, operation_targets = <AcquireTemporaryToken & Operation 1 & Operation 2 & .. >, token = <Auth Token>]."

The entitlement server 520 which receives the second request message including the AcquireTemporaryToken as the ODSA operation information from the external electronic device 700 may generate a temporary token based on the second request message including the AcquireTemporaryToken as the ODSA operation information in operation 1704. The entitlement server 520 may generate temporary authentication information if the authentication information (e.g., the Auth Token) included in the second request message is valid and it is allowed for the electronic device 101 to use the temporary authentication information issued for the external electronic device 700 as a token when the electronic device 101 requests specific ODSA operation(s) (e.g., ManageSubscription, and AcquireConfiguration). The entitlement server 520 may provide the specific ODSA operation(s) which allows the electronic device 101 to use the temporary authentication information issued for the external electronic device 700 as the token in OperationTargets via a 200 OK message (e.g., an HTTP 200 OK message) as a response message to the second request message. The entitlement server 520 may include AcquireTemporaryToken in the 200 OK message which is the response message to the second request message when allowing temporary token renewal using the temporary authentication information issued by the entitlement server 520. In an embodiment, the 200 OK message which is the response message to the second request message may include the generated temporary authentication information (e.g., a TemporaryToken) and an effective period for the generated temporary authentication information (e.g., an expiration period for the temporary authentication information) (e.g., TemporaryTokenExpiry). In FIG. 17A, operation 1704 is expressed as "200 OK [TemporaryToken = TemporaryToken, TemporaryTokenExpiry = TemporaryTokenExpiry, OperationTargets = <AcquireTemporaryToken & Operation 1 & Operation 2 & .. >]." Alternatively, if the entitlement server 520 which receives the second request message including the AcquireTemporaryToken as the ODSA operation information from the external electronic device 700 does not allow the temporary token to be issued, no further operations may be performed.

The entitlement server 520 which generates the temporary authentication information may transmit a 200 OK message (e.g., an HTTP 200 OK message) including the temporary authentication information as a response message to the second request message to the external electronic device 700 in operation 1704. So, the external electronic device 700 which receives the 200 OK message which is the response message to the second request message may acquire the temporary authentication information based on the received 200 OK message. Further, in operation 1704, the entitlement server 520 may include OperationTargets in the 200 OK message and may include AcquireTemporaryToken in the OperationTargets to indicate that a corresponding operation (e.g., AcquireTemporaryToken) is allowed.

Meanwhile, even though the AcquiredTemporaryToken is not included in the operation _targets in the second request message received from the external electronic device 700 in operation 1703, the entitlement server 520 may include operation _targets including the AcquiredTemporaryToken in the 200 OK message which is the response message to the second request message if token renewal is allowed. Such a case may be provided, for example, to support a case that a version of the external electronic device 700 and a version of the electronic device 101 do not match. In other words, this may be because the version of the ODSA client application of the external electronic device 700 does not support a token renewal function, so the 200 OK message which is the response message to the second request message may not include the AcquiredTemporaryToken in the operation _targets, but the version of the ODSA client application of the electronic device 101 may support the token renewal function.

In operation 1705, an operation of exchanging eSIM transfer information may be performed between the external electronic device 700 and the electronic device 101. In the operation of exchanging the eSIM transfer information, the external electronic device 700 may transmit a message including all relevant eSIM transfer information to the electronic device 101, and the eSIM transfer information may include the temporary authentication information. In FIG. 17A, operation 1705 is expressed as "Information Including TemporaryToken."

The electronic device 101 which receives the message including the eSIM transfer information including the temporary authentication information may perform operation 1706 at a specific time point. In FIGS. 17A and 17B, a case that operation 1706 is performed first, and then operations 1707 and 1708 are performed will be described as an example, however, operations 1707 and 1708 may be performed before operation 1706 is performed. However, in FIGS. 17A and 17B, it will be assumed that operations 1707 and 1708 are performed between operations 1706 and 1709.

The electronic device 101 which receives the message including the eSIM transfer information including the temporary authentication information from the external electronic device 700 may transmit a third request message (e.g., an HTTP REQUEST message) including the temporary authentication information and including specific ODSA operation information to the entitlement server 520 in operation 1706. The entitlement server 520 which receives the third request message from the electronic device 101 may perform an operation corresponding to the specific ODSA operation information based on the third request message, and transmit a message including a result thereof to the electronic device 101 in operation 1706. The specific ODSA operation information included in the third request message in operation 1706 may be one of the ODSA operation information included in OperationTargets in the 200 OK message of operation 1704. An example of the specific ODSA operation information included in the third request message may be "ManageSubscription", and as described in FIGS. 15A and 15B, the "ManageSubscription" may be ODSA operation information used for requesting a subscriptionrelated operation. According to an embodiment, the third request message may further include operation type information, and the operation type information has been described in Table 2, so a redundant description thereof will be omitted herein. The third request message may include the temporary authentication information (e.g., the temporary token) received via the 200 OK message in operation 1704. If the ODSA operation information included in the received third request message is not the operation included in the OperationTargets included in the 200 OK message transmitted in operation 1704, the entitlement server 520 may transmit an error message indicating an error for the third request message to the electronic device 101 and terminate without performing any further operations. The entitlement server 520 may perform a corresponding operation based on the received third request message and return a processing result. For example, as described in FIGS. 15A and 15B, subscription result information may indicate "4 - DELAYED DOWNLOAD" or "6 - DELETE PROFILE IN USE." In FIG. 17A, operation 1706 is expressed as "Operation(s) using the Temporary Token as an auth token."

The electronic device 101 may transmit, to the entitlement server 520, a fourth request message for requesting renewal of temporary authentication information (e.g., a temporary token) in operation 1707. The electronic device 101 may identify effective time of the temporary authentication information. When identifying the temporary authentication information (e.g., the temporary token) received in operation 1705 and identifying that the effective time allocated to the temporary authentication information is insufficient for the electronic device 101 to complete required ODSA operations, the electronic device 101 may transmit a fourth request message (e.g., an HTTP REQUEST message) for token renewal in operation 1707. In an embodiment, the fourth request message may include "AcquireTemporaryToken" as ODSA operation information, "AcquireConfiguration" as an operation_target, and a valid temporary token as a token. In an embodiment, the fourth request message may include the terminal_id (e.g., the IMEIesim or the UUIDapp) of the electronic device 101. In FIG. 17B, operation 1707 is expressed as "GET/POST [ap200XX, operation = AcquireTemporaryToken, terminal_id = <IMEIsim> or <UUIDapp>, operation _targets = <Operation 1 & Operation 2 & .. >, temporary_token = <Temporary Token>]."

The entitlement server 520 which receives the fourth request message from the electronic device 101 may identify that the renewal of the authentication information (e.g., the token) is allowed based on the Temporary Token which is the temporary authentication information and the "AcquireTemporaryToken" included in the fourth request message.

In an embodiment, the entitlement server 520 identifies that the fourth request message received from the electronic device 101 includes temporary authentication information which is identical to the temporary authentication information provided in operation 1704 and that the effective period of the temporary authentication information included in the fourth request message is not expired, and transmits the 200 OK message including the "AcqurieTemporaryToken" as the OperationTargets in operation 1704, so the entitlement server 520 may identify that the renewal of the authentication information (e.g., the token) is allowed. Alternatively, if the entitlement server 520 does not allow the renewal of the authentication information (e.g., the token), the entitlement server 520 may transmit an error message for the fourth request message to the electronic device 101 and terminate without performing any further operations.

Operation 1708 may correspond to an operation in a case that the token renewal is allowed. The entitlement server 520 may generate new temporary authentication information. For example, the entitlement server 520 may generate the new temporary authentication information by generating a new temporary token, or by changing (or extending) the effective period of the temporary token which is previously issued.

The entitlement server 520 which generates the new temporary authentication information may transmit the new temporary authentication information to the electronic device 101 in operation 1708. In an embodiment, the entitlement server 520 which generates the new temporary authentication information may transmit a 200 OK message (e.g., an HTTP 200 OK message) including the new temporary authentication information as a response message to the fourth request message to the external electronic device 700, and the external electronic device 700 may acquire the new temporary authentication information based on the 200 OK message received from the external electronic device 700 in operation 1708. In an embodiment, the 200 OK message in operation 1708 may include at least one of the temporary authentication token, effective period information for the temporary authentication information, the operation type, and the operation_targets. In the 200 OK message in operation 1708, Temporary Token Expiry which is information indicating the effective period for the temporary authentication information may be set to New Temporary Token Expiry which is an effective period for the new temporary authentication information. In FIG. 17B, operation 1708 is expressed as "200 OK [TemporaryToken = NewTemporaryToken, TemporaryTokenExpiry = NewTemporaryTokenExpiry, OperationTargets = < Operation 1 & Operation 2 & .. >]."

The electronic device 101 which receives the 200 OK message as the response message to the fourth request message from the entitlement server 520 may perform the remaining ODSA operation(s) with the entitlement server 520 using the new temporary authentication information in operation 1709. For example, the electronic device 101 may transmit a fifth request message (e.g., an HTTP REQUEST message) to the entitlement server 520 using the new temporary authentication information. The entitlement server 520 which receives the fifth request message from the electronic device 101 may (continue) perform an ODSA operation procedure corresponding to the fifth request message based on the new temporary authentication information in operation 1709. In other words, the electronic device 101 and the entitlement server 520 may perform the remaining ODSA operation procedure based on the new temporary authentication information. In FIG. 17B, operation 1709 is expressed as "Continue the rest of the Operation(s) using the New Temporary Token as an auth token."

According to an embodiment of the disclosure, a method of an electronic device (101) may be provided, and the method may include receiving, from an external electronic device (102; 104; 700), authentication information related to a procedure for transferring a profile from the external electronic device to the electronic device.

According to an embodiment of the disclosure, the method may include, in response to receiving the authentication information, identifying a first identifier for identifying the procedure.

According to an embodiment of the disclosure, the method may include transmitting, to a first server (520), a request message, that includes the first identifier, for requesting transfer of the profile.

According to an embodiment of the disclosure, the method may include, in response to transmitting the request message, receiving, from the first server or a second server (210; 560) different from the first server, a response message including information for downloading a profile from a third server (220; 530).

According to an embodiment of the disclosure, the method may include, based on the response message, identifying a second identifier for identifying the procedure.

According to an embodiment of the disclosure, the method may include identifying whether the second identifier is identical to the first identifier.

According to an embodiment of the disclosure, the method may include, based on the second identifier being identical to the first identifier, identifying whether another response message including the second identifier has been received before receiving the response message.

According to an embodiment of the disclosure, the method includes, based on whether the another response message has been received, identifying whether to download the profile from the third server.

According to an embodiment of the disclosure, the identifying whether to download the profile from the third server based on whether the another response message has been received includes, based on the another response message having not been received, downloading the profile from the third server based on the information for downloading the profile.

According to an embodiment of the disclosure, the identifying whether to download the profile from the third server based on whether the another response message has been received may include, based on the another response message having been received, refraining from downloading the profile from the third server.

According to an embodiment of the disclosure, the method may include, based on the another response message being received, discarding the response message.

According to an embodiment of the disclosure, the identifying the second identifier may include, based on the response message being received from the second server, identifying the second identifier from a third identifier included in the response message.

According to an embodiment of the disclosure, the third identifier may be used for identifying an event between the second server and the third server and may be related to the procedure.

According to an embodiment of the disclosure, based on the second identifier and a set rule, the third identifier may be generated.

According to an embodiment of the disclosure, based on a fourth identifier, the third identifier may be generated.

According to an embodiment of the disclosure, the fourth identifier may be used for identifying an event between the first server and the third server and is related to the procedure.

According to an embodiment of the disclosure, the fourth identifier may be identified from the first identifier.

According to an embodiment of the disclosure, based on the first identifier and another set rule, the fourth identifier may be generated.

According to an embodiment of the disclosure, the another set rule may include at least one of a rule for generating the first identifier as the fourth identifier, a rule for generating the fourth identifier by concatenating a value generated by the first server or the third server, a set delimiter, and the first identifier, or a rule for generating the fourth identifier by concatenating the first identifier, the value, and a prefix for detecting the first identifier.

According to an embodiment of the disclosure, the response message received from the first server may include the second identifier.

According to an embodiment of the disclosure, the identifying the first identifier may include, in response to receiving the authentication information, receiving the first identifier from the second server.

According to an embodiment of the disclosure, the identifying the first identifier may include, in response to receiving the authentication information, generating the first identifier.

According to an embodiment of the disclosure, a storage medium storing at least one computer-readable instruction may be provided.

According to an embodiment of the disclosure, the at least one instruction, when executed by one or more processors (120) including processing circuitry of an electronic device

(101) individually or collectively, may cause the electronic device to perform at least one operation.

According to an embodiment of the disclosure, the at least one operation may include receiving, from an external electronic device (102; 104; 700), authentication information related to a procedure for transferring a profile from the external electronic device to the electronic device.

According to an embodiment of the disclosure, the at least one operation may include, in response to receiving the authentication information, identifying a first identifier for identifying the procedure.

According to an embodiment of the disclosure, the at least one operation may include, transmitting, to a first server (520), a request message, that includes the first identifier, for requesting transfer of the profile.

According to an embodiment of the disclosure, the at least one operation may include, in response to transmitting the request message, receiving, from the first server or a second server (210; 560) different from the first server, a response message including information for downloading a profile from a third server (220; 530).

According to an embodiment of the disclosure, the at least one operation may include, based on the response message, identifying a second identifier for identifying the procedure.

According to an embodiment of the disclosure, the at least one operation may include identifying whether the second identifier is identical to the first identifier.

According to an embodiment of the disclosure, the at least one operation may include, based on the second identifier being identical to the first identifier, identifying whether another response message including the second identifier has been received before receiving the response message.

According to an embodiment of the disclosure, the at least one operation includes, based on whether the another response message has been received, identifying whether to download the profile from the third server.

According to an embodiment of the disclosure, the identifying whether to download the profile from the third server based on whether the another response message has been received includes, based on the another response message having not been received, downloading the profile from the third server based on the information for downloading the profile.

## Claims

1. A method of an electronic device (101), the method comprising:
receiving, from an external electronic device (102; 104; 700), authentication information related to a procedure for transferring a profile from the external electronic device to the electronic device;
in response to receiving the authentication information, identifying a first identifier for identifying the procedure;
transmitting, to a first server (520), a request message, that includes the first identifier, for requesting transfer of the profile;
in response to transmitting the request message, receiving, from the first server or a second server (210; 560) different from the first server, a response message including information for downloading a profile from a third server (220; 530);
based on the response message, identifying a second identifier for identifying the procedure;
identifying whether the second identifier is identical to the first identifier;
based on the second identifier being identical to the first identifier, identifying whether another response message including the second identifier has been received before receiving the response message; and
based on whether the another response message has been received, identifying whether to download the profile from the third server (220; 530),
wherein the identifying whether to download the profile from the third server (220; 530) based on whether the another response message has been received comprises:
based on the another response message having not been received, downloading the profile from the third server (220; 530) based on the information for downloading the profile.

2. The method of claim 1, wherein the identifying whether to download the profile from the third server (220; 530) based on whether the another response message has been received comprises:
based on the another response message having been received, refraining from downloading the profile from the third server (220; 530).

3. The method of claim 1, comprising:
based on the another response message being received, discarding the response message.

4. The method of any one of claims 1-3, wherein the identifying the second identifier comprises:
based on the response message being received from the second server, identifying the second identifier from a third identifier included in the response message,
wherein the third identifier is used for identifying an event between the second server and the third server (220; 530) and is related to the procedure, and
wherein, based on the second identifier and a set rule, the third identifier is generated.

5. The method of claim 4, wherein, based on a fourth identifier, the third identifier is generated,
wherein the fourth identifier is used for identifying an event between the first server and the third server (220; 530) and is related to the procedure,
wherein the fourth identifier is identified from the first identifier, and
wherein, based on the first identifier and another set rule, the fourth identifier is generated.

6. The method of claim 5, wherein the another set rule includes at least one of:
a rule for generating the first identifier as the fourth identifier,
a rule for generating the fourth identifier by concatenating a value generated by the first server or the third server (220; 530), a set delimiter, and the first identifier, or
a rule for generating the fourth identifier by concatenating the first identifier, the value, and a prefix for detecting the first identifier.

7. The method of any one of claim 1-6, wherein the response message received from the first server includes the second identifier.

8. The method of any one of claims 1 to 7, wherein the identifying the first identifier comprises:
in response to receiving the authentication information, receiving the first identifier from the second server.

9. The method of any one of claims 1 to 7, wherein the identifying the first identifier comprises:
in response to receiving the authentication information, generating the first identifier.

10. The method of any one of claims 1 to 9, further comprising: before downloading the profile, identifying a user input for staring downloading the profile.

11. An electronic device (101), comprising:
communication circuitry (190);
one or more processors including processing circuitry (120); and
memory (130) storing instructions that, when executed by the one or more processors individually or collectively, cause the electronic device to:
receive, from an external electronic device (102; 104; 700) via the communication circuitry, authentication information related to a procedure for transferring a profile from the external electronic device to the electronic device,
in response to receiving the authentication information, identify a first identifier for identifying the procedure,
transmit, to a first server (520) via the communication circuitry, a request message, that includes the first identifier, for requesting transfer of the profile,
in response to transmitting the request message, receive, from the first server or a second server (210; 560) different from the first server via the communication circuitry, a response message including information for downloading a profile from a third server (220; 530),
based on the response message, identify a second identifier for identifying the procedure,
identify whether the second identifier is identical to the first identifier,
based on the second identifier being identical to the first identifier, identify whether another response message including the second identifier has been received before receiving the response message, and
based on whether the another response message has been received, identify whether to download the profile from the third server (220; 530),
wherein the instructions, when executed by the one or more processors individually or collectively, cause the electronic device to, as at least part of identifying whether to download the profile from the third server (220; 530) based on whether the another response message has been received:
based on the another response message having not been received, download the profile from the third server (220; 530) via the communication circuitry based on the information for downloading the profile.

12. The electronic device of claim 11, wherein the instructions, when executed by the one or more processors individually or collectively, cause the electronic device to perform the method according to any one of claims 2-10.

13. A storage medium storing at least one computer-readable instruction, the at least one instruction, when executed by one or more processors (120) including processing circuitry of an electronic device (101) individually or collectively, causing the electronic device to perform at least one operation, the at least one operation comprising:
receiving, from an external electronic device (102; 104; 700), authentication information related to a procedure for transferring a profile from the external electronic device to the electronic device;
in response to receiving the authentication information, identifying a first identifier for identifying the procedure;
transmitting, to a first server (520), a request message, that includes the first identifier, for requesting transfer of the profile;
in response to transmitting the request message, receiving, from the first server or a second server (210; 560) different from the first server, a response message including information for downloading a profile from a third server (220; 530);
based on the response message, identifying a second identifier for identifying the procedure;
identifying whether the second identifier is identical to the first identifier;
based on the second identifier being identical to the first identifier, identifying whether another response message including the second identifier has been received before receiving the response message; and
based on whether the another response message has been received, identifying whether to download the profile from the third server (220; 530),
wherein the identifying whether to download the profile from the third server (220; 530) based on whether the another response message has been received comprises:
based on the another response message having not been received, downloading the profile from the third server (220; 530) based on the information for downloading the profile.

14. The storage medium storing at least one computer-readable instruction of claim 13, the at least one instruction, when executed by the one or more processors (120) including processing circuitry of the electronic device (101) individually or collectively, causing the electronic device to perform the method according to any one of claims 2-10.
